(19) Europäisches Patentamt
European Patent Office
Office européen des brevets

(11) EP 0 714 148 B1

(12) EUROPEAN PATENT SPECIFICATION

(45) Date of publication and mention of the grant of the patent:
**27.03.2002 Bulletin 2002/13**

(51) Int Cl.[7]: **H01M 10/40**

(21) Application number: **95117630.4**

(22) Date of filing: **08.11.1995**

# (54) A lithium secondary battery

Lithiumsekundärbatterie

Pile secondaire au lithium

(84) Designated Contracting States:
**DE FR GB**

(30) Priority:
**09.11.1994 JP 31230594**
**09.11.1994 JP 31230694**
**10.11.1994 JP 31392994**
**10.11.1994 JP 31393094**
**14.12.1994 JP 33828694**
**14.12.1994 JP 33828794**
**22.12.1994 JP 34081494**
**22.12.1994 JP 34081594**

(43) Date of publication of application:
**29.05.1996 Bulletin 1996/22**

(73) Proprietor: **FURUKAWA DENCHI KABUSHIKI KAISHA**
**Yokohama-shi, Kanagawa-ken (JP)**

(72) Inventors:
- **Nakano, Kenji c/o Iwaki Jigyosho, Furukawa Denchi**
  **Iwaki-shi, Fukushima-ken (JP)**
- **Yamamoto, Masahiro c/o Iwaki Jigyosho, Furukawa**
  **Iwaki-shi, Fukushima-ken (JP)**

(74) Representative:
**Schmidt-Evers, Jürgen, Dipl.-Ing. et al**
**Patentanwälte Mitscherlich & Partner,**
**Sonnenstrasse 33**
**80331 München (DE)**

(56) References cited:
**EP-A- 0 531 617** **EP-A- 0 599 534**

- **PATENT ABSTRACTS OF JAPAN vol. 012 no. 187 (E-615) ,31 May 1988 & JP-A-62 290072 (MATSUSHITA ELECTRIC IND CO LTD) 16 December 1987,**
- **PATENT ABSTRACTS OF JAPAN vol. 012 no. 187 (E-615) ,31 May 1988 & JP-A-62 290071 (MATSUSHITA ELECTRIC IND CO LTD) 16 December 1987,**

EP 0 714 148 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Jouve, 75001 PARIS (FR)

## Description

FIELD OF INVENTION

This invention relates to a lithium secondary battery.

BACKGROUND OF THE INVENTION

Recent rapid growth of electronic industry has inspired a great demand for high performance, compact and portable electronic devices. Thus these electronic devices have required rechargeable secondary batteries with high energy density. As the secondary batteries to be used for these electronic devices, there are lead acid batteries, nickel-cadmium batteries, nickel-hydrogen batteries. However, these batteries do not meet the above requirements due to their lower discharge voltage resulting in lower energy density.

Recently, as a higher energy density battery, lithium secondary batteries have been on stage and some of them are already commercialized. The lithium secondary battery comprises a negative electrode with metallic lithium, lithium alloy or carbon materials capable of electro-chemically occluding and releasing lithium ions and a positive electrode. These batteries have, comparing to other conventional batteries, higher energy density per unit volume or unit weight. Therefore it is said that they are the most promising secondary batteries today.

More specifically, this kind of battery comprises a negative electrode made of at least one kind of active materials selected from a group of metallic lithium, lithium alloy and carbon materials electro-chemically capable of occluding and releasing lithium ions, a positive electrode made of at least one kind of materials capable of occluding lithium ions and an organic electrolyte in which lithium salt is dissolved in an organic solvent.

Unlike conventional batteries made of such as lead acid, nickel-cadmium and nickel-hydrogen storage batteries wherein aqueous solutions are used, a lithium secondary battery using combustible organic solvents as an electrolyte is high in combustibility. For this reason, an improvement in safety prevention is highly required. Focusing on this, there has been developed a non-aqueous electrolyte type battery bringing about lowering the combustibility of organic solvents, an improvement of the stability and improvement of battery performance.

For example, there has been known a non-aqueous electrolyte which comprises a solvent mixture wherein at least one kind of specific ether compounds such as dimethoxyethane and sulfolane and a solute such as $LiPF_6$ or LiBF. (Japanese Laid Open Patent Publication No. 1989-14879).

Also, in organic electrolyte type secondary batteries consisting of negative electrode, positive electrode and organic electrolyte, there has been known from Japanese Laid Open Patent Publication 1987-290071 disclosing in stead of propylene carbonate or 2-methyl tetrahydrofuran conventionally used as a solvent for an organic electrolyte, propylene carbonate alone of which hydrogen(s) positioned at 3 to 4 is/are substituted with chlorine or fluorine is used and thereby to improve current efficiency of the negative electrode at the time of charge and discharge and the battery cycle characteristics.

On the other hand, this kind of secondary battery has previously been developed by using metallic lithium or lithium alloy as an negative electrode. But the troubles such as less efficiency at the time of charge and discharge, pulverization or formation of unfavorable dendrites were occurred. Consequently they have hardly been commercialized. Recently, however, there has been product that carbon materials capable of electro-chemically occluding and releasing lithium ion is used as an negative electrode material.

The negative electrode using such materials can provide a lithium secondary battery having excellent charge-discharge reversibility because its high average charge-discharge efficiency as a whole of cycle is high as compared with the negative electrode using metallic lithium or lithium alloy. This is superior to metallic lithium or metal alloy based negative electrodes.

No sediment of metallic lithium is observed in the batteries when this kind of materials is used as a negative electrode, so that lithium secondary batteries with high safety can be provided, and as a result, the commercialization thereof has recently been achieved with the combination of lithium-containing complex oxides as a positive electrolyte.

In the lithium secondary battery wherein carbon materials capable of occluding and releasing lithium ions electro-chemically, there has been known such an improved one that the lower temperature characteristics can be improved by using a mixture of chain carbonates such as dimethyl carbonate, diethyl carbonate ,etc. and cyclic carbonates are solvents for non-aqueous electrolytes. (Japanese Laid Open Patent Publication No. 1992-162370).

However, it has been found that the invention disclosed in the above-described Japanese Laid Open Patent Publication No. 1987-290071 has a drawback with the lack of solvent stability during repetition of charge and discharge, resulting in poor in the battery performance.

In the invention disclosed in Japanese Laid Open Patent Publication 1987-290071, chlorine or fluorine substituted propylene carbonate is used alone as a solvent for an organic electrolyte, so that it increases the viscosity, resulting in a significant increase in internal resistance.

As to the lithium secondary batteries using as an active material for a negative electrode made of carbon materials capable of occluding and releasing lithium ions is highly expected as a negative electrode of a secondary battery having a high performance, makes the cycle life much longer than the lithium secondary batteries using metallic lithium or lithium alloy as a negative electrode, and the possibility of short circuit due to the lithium dendrite formation is much lower.

Although the charge-discharge efficiency of the negative electrode carbon materials is more than 95% in average, which is much higher than that of the negative electrode using metallic lithium or its alloy, such a high value can not be obtained at the initial stage of the charge and discharge cycles. Such a low charge-discharge efficiency of the negative electrolyte at the initial stage of the charge/discharge cycles not only causes the lowering of the capacity with the progress of the cycles of this kind of the lithium battery, but also, when the negative electrode capacity becomes lower than that of the positive electrode capacity, electrically active metallic lithium deposits on the surfaces of the active material of the negative electrode at the time of charging, the safety of the lithium secondary battery is much lowered . Therefore, in order to prevent the lowering to the cycle life and the safety. To avoid such a capacity loss of the carbon material at the initial stage, such a preventing measure has been taken that some amount of carbon material that would be lost at the initial stage is added to the battery when it is manufactured. But such a measure naturally sacrifices the original energy density of the battery. This tendency becomes remarkable accordingly as the crystallization degree of carbon material are increased.

In this respect, such drawbacks have been removed by the invention disclosed in Japanese Laid Open Patent Publication No.1992-162379 which uses carbon materials as an negative electrode. However, since the organic solvent is the mixture of solvents as mentioned above, combustibility thereof is high and the safety problem remains.

For the purpose of improving the charge-discharge efficiency of the negative electrode using carbon materials, it has been proposed that ethylene carbonate is used instead of propylene carbonate because it has as a higher dielectric constant.

However, this proposal is not considered to be practical from the industrial point of view because ethylene carbonate is such high in melting point of 36.4°C that is solid in room temperature ,resulting in making difficult in handling.

There have been also proposed such an organic electrolyte used for lithium secondary batteries that contains a lithium salt such as $LiPF_6$ or the like dissolved in a non-aqueous solvent chiefly consisting of a mixture of a cyclic ester with a high dielectric constant such as propylene carbonate and a low viscous solvent such as diethyl carbonate. This type of battery has been appeared before the footlights recently because this type of battery uses $LiCoO_2$ which is a lithium containing complex oxide having a structure of $\alpha$-$NaCrO_2$ as an active material for a positive electrolyte. This active material, oxidation-reduction reactions takes place at a high electric potential, and thereby about 3.7 volt of discharge voltage can be obtained on average.

This kind of active materials has multi-layer structure comprises such an alternative order of oxygen layer as an oxygen layer - a lithium layer - an oxygen layer - a cobalt layer - an oxygen layer - a lithium layer----. This multi-layers structure means that when the charge depth is deep or large and, in other words, when too much lithium ions are taken out from the lithium compound, the lithium layers in the lithium compound disappear, and as a result, the oxygen layers on both sides of the lithium layer are electrically repelled from each other and cause the destruction of the crystal structure, resulting in rapid deterioration of the battery performance.

For this reason the conventionally available lithium secondary battery of this kind is used in such a manner that the charging voltage is limited to 4.3 volt or less so as to prevent the positive electrolyte active material from deterioration.

Thus, in view of the above-mentioned lithium secondary batteries, there is still a strong desire for improvement in the safety, performance of the lithium secondary batteries, the charge-discharge of the active material for the positive electrode, etc.

## SUMMARY OF THE INVENTION

The object of this invention is to solve the above mentioned problems, and to provide a lithium secondary battery which has a higher performance and safety, and which is excellent incombustibility and self-extinguishing characteristics.

To achieve the above object, this invention is characterized in that an organic solvent mixture comprising the primary solvent consisting of cyclic esters and the secondary solvent consisting of chain esters is used as an organic solvent, and the primary solvent at least one kind of substituted propylene carbonates, and the secondary solvent has at least one kind of low riscous solvents capable of lowering the viscosity of fluorine substituted propylene carbonates, e.g. diethyl carbonate.

More particularly, according to the present invention, in the lithium secondary battery which comprises a negative electrode comprises at least on kind of active materials selected from a group of metallic lithium, lithium alloy,

and a carbon material capable of electro-chemically occluding and releasing lithium ions and a positive electrode comprising at least one kind of active materials capable of electro-chemically occluding and releasing lithium ions and an organic electrolyte, it is characterized in that the organic electrolyte prepared by dissolving a solute consisting of at least one kind of lithium salts in the organic solvent mixture comprising a primary solvent comprising at least one kind of cyclic esters and the secondary solvent comprising at least one kind of chain esters, and the primary solvent contain at least one kind of fluorine substituted propylene carbonates and the secondary solvent contains at least dimethyl carbonate, and the volume of the primary solvent accounts for 35 to 55 % of the total volume of a whole solvents and the volume of the secondary solvent accounts for 45 to 65%, of the total volume thereof, and the volume of fluorine-substituted propylene carbonate accounts for 35 to 55% of the total volume thereof and the volume of dimethyl carbonate accounts for 40 to 100% of the total volume of the whole secondary solvent(s).

Another object of this invention is to provide a lithium secondary battery with high safety and excellent battery performance at a low temperature also.

In another embodiment of the invention the organic electrolyte contains a solvent mixture in which dimethyl carbonate is mixed with at least one of diethyl carbonate and methyl ethyl carbonate and the volume of primary solvent accounts for 35 to 55% of the total volume of the whole solvents and the volume of the secondary solvent accounts for 45 to 65% of the total volume of the whole solvents, and the volume of at least one kind of the fluorine substituted propylene carbonates is 35 to 55% of the total volume of the whole solvents and the volume of dimethyl carbonate is 40 to 80% of the secondary solvent and the volume of at least one kind selected from diethyl carbonate and methyl ethyl carbonate is 20 to 60% of the total volume of the secondary solvents.

A further another object of this invention is to provide a lithium secondary battery which is excellent particularly in discharge characteristics thereof, incombustibility and self extinguishing ability.

To achieve this object, this invention is characterized in that the primary solvent comprises at least 2-oxo-4-trifluoromethyl-1,3-dioxolane and the secondary solvent comprises at least dimethyl carbonate and the volume percentage of the primary solvent is 35 to 55% of the total volume of the whole solvents solvent is 45 to 55% of the total volume thereof, and the volume of 2-oxo-4-trifluoromethyl-1,3-dioxolane is 35%- 55% of the total volume of the whole solvents and the volume of dimethyl carbonate accounts for 40 to 100% of the total volume of the secondary solvent(s).

A further other object of this invention is to remove the conventional problems and provide a lithium secondary battery with high safety and particularly excellent discharge characteristics at a low temperature.

To achieve this object, this invention is characterized in that a solvent mixture of at least 2-oxo-4-trifluoromethyl-1,3-dioxolane using as the primary solvent and the secondary solvent comprising at least one kind selected from diethyl carbonate and methyl ethyl carbonate is added to dimethyl carbonate, and the primary and secondary solvents are mixed.

More particularly, according to this invention, in the lithium secondary battery, wherein the organic electrolyte comprises a solute consisting of at least one kind of lithium salts dissolved in an organic solvent mixture of the primary solvent comprising at least one kind of cyclic esters and the secondary solvent comprising at least one kind of chain esters and the primary solvent has at least 2-oxo-4-trifluoromethyl-1,3-dioxolane and the secondary solvent has at least dimethyl carbonate, it is characterized in that the secondary solvent has at least a mixture of the solvents wherein dimethyl carbonate is mixed with at least one selected from diethyl carbonate and methyl ethyl carbonate, and the volume percentage of the primary solvent is 35 to 55% of the total volume of the whole solvents and the volume of the secondary solvent is 45 to 55% of the total volume thereof, and the volume of 2-oxo-4-trifluoromethyl-1,3-dioxolane used as the primary solvent is 35 to 55% of the total volume of the whole solvents and the volume of dimethyl carbonate is 40 to 80% of the total volume of the secondary solvents, and the volume of at least one selected from diethyl carbonate and methyl ethyl carbonate is 20 to 60% of the total volume of the whole secondary solvents.

Furthermore an other object of this invention is, in the secondary lithium battery wherein any kind of carbon materials capable of occluding and releasing lithium ions is used as an active material for a negative electrode, to provide a lithium secondary battery which is improved in the charge/discharge efficiency of the negative electrode at the initial stage of charge/discharge cycles as compared with this kind of battery using any conventional electrolytes, and is easier in handling the organic electrolyte solvent and also provides a larger energy density as compared with this kind of batteries using the conventional electrolytes.

To achieve this object, this invention is characterized in that an organic electrolyte solvent comprises at least one kind of fluorine substituted propylene carbonates as a primary solvent and the secondary solvent comprising at least one kind of low viscous solvents for lowering the viscosity of fluorine substituted propylene carbonates.

In this case, it is preferable to use a solvent mixture which contains at least one kind of fluorine-substituted propylene carbonates as the primary solvent and at least one kind selected from the group of dimethyl carbonate, methyl ethyl carbonate, diethyl carbonate, methyl propyl carbonate and methyl butyl carbonate as the secondary solvent.

The volume percentage of the above mentioned primary solvent is more than 30% of the total solvents of the organic electrolyte, and secondary solvent accounts for more than 40% of the total solvents of the organic electrolyte, and the total volume percentage of the primary and secondary solvents is 80% or more of the total solvents of the organic

electrolytes

A further another object of this invention is, in the lithium secondary battery wherein a negative electrode is made of carbon materials capable of electro-chemically occluding and releasing lithium ions is used as an active material for the negative electrode, to provide a lithium secondary battery which is improved in charge/discharge characteristics of the negative electrode at the initial stage of charge/discharge cycles and has a large energy density as compared with this kind of batteries using the conventional electrolytes, and is easy in handling of the organic electrolyte solvents, and also is improved especially in charge and discharge efficiency.

To achieve this object, this invention is characterized in that a solvent for an organic electrolyte comprises 2-oxo-4-trifluoromethyl-1,3-dioxolane as the primary solvent and the secondary solvent comprising at least one kind of low viscous solvents for lowering the viscosity of 2-oxo-4-trifluoromethyl-1,3-dioxolane.

In this case, it is preferable to use a solvent mixture comprising the primary solvent which is 2-oxo-4-trifluoromethyl-1,3-dioxolane and the secondary solvent which comprises at least one kind selected from the group of dimethyl carbonate, methyl ethyl carbonate, diethyl carbonate, methyl propyl carbonate and methyl butyl carbonate.

It is also preferable to use a solvent mixture wherein the volume of the above mentioned primary solvent is 30% or more of the total volume of the whole solvents, and the volume of the secondary solvent accounts for 40% or more of the total volume of the whole solvents, and the total volume of the primary and secondary solvents accounts for more than 80% or more of the total volume of the whole solvents.

A further another object of this invention is, in the lithium secondary battery wherein at least one kind selected from the group of lithium containing complex oxides having a structure of $\alpha$-$NaCrO_2$ as an active material for a negative electrode material is used, to provide a lithium secondary battery, which depresses the deterioration of the negative active material which comprises the lithium containing complex oxides with the structure of $\alpha$ -$NaCrO_2$, at a large or deep charge depth, resulting in providing a large energy density as compared with this kind of batteries using the conventional electrolytes.

To achieve this object, this invention is characterized in that at least one kind of fluorine substituted propylene carbonates is used as the primary solvent and at least one kind of low viscous solvents for lowering the viscosity of the fluorine substituted propylene carbonates is used as the secondary solvent.

In this case, it is preferable to use a solvent mixture containing at least one kind of fluorine substituted propylene carbonates as the primary solvent and at least one kind selected from the group of dimethyl carbonate, methyl ethyl carbonate diethyl carbonate, methyl propyl carbonate and methyl butyl carbonate as the secondary solvent.

It is also preferable to use a solvent mixture wherein the volume percentage of the above mentioned primary solvent is 30% or more of the total volume of the whole solvents for an organic electrolyte, and the volume of the secondary solvent accounts for 40 % or more of the total volume thereof and the total volume of the primary and secondary solvents is 80% or more of the total volume of the whole solvents.

A further object of this invention is, in the lithium secondary battery wherein at least one kind selected from the group of lithium containing complex oxides having a structure of $\alpha$-$NaCrO_2$ is used as an active material for a positive electrode to provide a lithium secondary battery with large energy density, particularly with excellent discharge characteristics of the active material for the positive electrode and to depresses the deterioration of the characteristics of the active material having $\alpha$-$NaCrO_2$ structure for the positive electrode at the large depth of charge as compared with this kind of lithium secondary batteries using the conventional electrolytes.

To achieve this object, this invention is characterized in that a solvent for an organic electrolyte is a solvent mixture comprising 2-oxo-4-trifluoromethyl-1,3-dioxolane used as the primary solvent and at least one kind of low viscous solvent for lowering the viscosity of 2-oxo-4-trifluoromethyl-1,3-dioxolane, as the secondary solvent.

In this case, it is preferable to use the solvent mixture comprising 2-oxo-4-trifluoromelthyl-1,3-dioxolane and at least one kind selected from the group of dimethyl carbonate, methyl ethyl carbonate, diethyl carbonate , methyl propyl carbonate and methyl butyl carbonate as the secondary solvent.

It is also preferable to use a solvent mixture wherein the volume percentage of the primary solvent is 30% or more of the total volume of the whole solvents, and the volume of the secondary solvent is 40% or more of the total volume thereof, and the total volume of the primary and secondary solvents is 80% or more of the total volume of the whole solvents.

The embodying examples of the above mentioned inventions will now be described in detail as follows:

BRIEF DESCRIPTION OF THE DRAWINGS

Fig 1 is a diagram showing charge/discharge characteristics at the 10th cycle point for examples A to I , conventional examples A and B and comparative examples C and D in EXAMPLE 1 according to this invention.

Fig 2 is a diagram showing charge/discharge characteristics at the 10th cycle for examples J to R and conventional examples A and B in the above mentioned EXAMPLE 1 according to this invention.

Fig 3 is a diagram showing charge/discharge characteristics at the 10th cycle for examples A to J, conventional examples A and B and comparative examples C and D in EXAMPLE 2 according to this invention.
Fig 4 is a diagram showing charge/discharge characteristics at the 10th cycle for examples K to T and conventional examples A and B in the above mentioned EXAMPLE 2 according to this invention.
Fig 5 is a diagram showing charge/discharge characteristics at the 10th cycle for examples A to AA, conventional examples A and B and comparative examples E and F in EXAMPLE 3 according to this invention.
Fig 6 is a diagram showing charge/discharge characteristics at the 10th cycle for example C and comparative examples J and K in EXAMPLE 3 according to this invention.
Fig 7 is a diagram showing charge/discharge characteristics at the 10th cycle for examples A to AA, conventional examples A and B and comparative examples G, H and L in EXAMPLE 4 according to this invention.
Fig 8 is a diagram showing charge/discharge characteristics at the 10th cycle for example H and comparative example N in EXAMPLE 4 according to this invention.

DESCRIPTION OF THE PREFERRED EMBODIMENTS

EMBODIMENT 1

Firstly, an embodiment of this invention which provides a lithium secondary battery with excellent battery performance, fire resistance and self extinguishing ability is described as follows:
The solvent to be used for an organic electrolyte for a lithium secondary battery is a solvent mixture of the primary solvent comprising at least one kind of cyclic esters and the secondary solvent comprising at least one kind of chain esters, and the primary solvent contains at least one kind of fluorine substituted propylene carbonates prepared by that at least one hydrogen of propylene carbonate is substituted with fluorine(s) and the secondary solvent contains at least dimethyl carbonate. Propylene carbonate as cyclic ester represents the following structural formula containing six hydrogens therein:

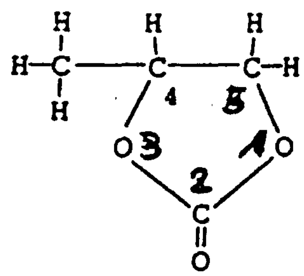

In this formula, the compounds wherein at least one hydrogen is substituted with fluorine(s) are, for instance, 2-oxo-5-fluoro-4-methyl-1,3-dioxiolane, 2-oxo-4-fluoro-4-methyl-1,3-dioxolane, 2-oxo-5-difluoro-4-methyl-1,3 dioxolane, 2-oxo-5-fluoro-4-fluoro-4-methyl-1,3-dioxolane, 2-oxo-5-difluoro-4-fluoro-4-methyl-1,3-dioxolane, 2-oxo-4-trifluoromethyl-1,3-dioxolane, 2-oxo-4-trifluoromethyl-5-fluoro-1,3-dioxolane, 2-oxo-4-trifluoromethyl-4-fluoro-1,3-dioxolane, 4-trifluoromethyl-5-difluoro-1,3-dioxolane, 4-trifluoromethyl-5-fluoro-4-fluoro-1,3-dioxolane and 2-oxo-4-trifluormethyl-perfluoro-1,3-dioxolane.
As cyclic esters to be used as the primary solvent are, besides the above listed esters, there are propylene carbonate, ethylene carbonate, butylene carbonate, γ-butyl lactone, vinylene carbonate, 2-methyl-γ-butyl lactone, acetyl-γ-butylo lactone, γ-valero-lactone, etc.. These may be mixed with any kind of fluorine substituted propylene carbonates.
As to chain esters to be used as the secondary solvent are, besides the above enumerated ones, there are methyl ethyl carbonate, methyl propyl carbonate, isopropyl methyl carbonate, methyl butyl carbonate, diethyl carbonate, ethyl propyl carbonate, ethyl butyl carbonate, dipropyl carbonate, butyl propyl carbonate, dibutyl carbonate, alkyl propionates, dialkyl malonates, alkyl acetates, acetic acid alkyl esters, etc.. One or more of the above esters may be mixed with dimethyl carbonate.
As will be clear, according to this invention, a favorable result can be obtained in a case where the volume percentage of the primary solvent is 35 to 55% of the volume of the whole solvents for an electrolyte and that of the secondary solvent is 45 to 65% of the total volume thereof, and the volume of at least one kind of fluorine substituted propylene carbonates is 35%-55% of the total volume thereof and the volume of dimethyl carbonate is 40 to 100% of the total volume of the whole secondary solvent(s). As to lithium salts to be used for the solute for an organic electrolyte, any kind which is capable of dissociating in an organic solvent and releasing lithium ions can be used. For examples, there

can be used such inorganic lithium salts as $LiClO_4$, $LiBF_4$, $LiPF_6$, $LiAsF_6$, LiCl, LiBr etc. and such organic lithium salts as $Li(C_6H_5)$, $LiN(SO_2CF_3)_2$, $LiC(SO_2CF_3)_3$, $LiOSO_2CF_3$, $LiOSO_2C_2F_5$, $LiOSO_2C_3F_7$, $LiOSO_2C_4F_9$, $LiOSO_2C_5F_{11}$, $LiOSO_2C_6F_{13}$, $LiOSO_2C_7F_{15}$ can be used. Among the above lithium salts, fluorine-containing lithium salts are preferable in terms of safety. More preferably, $LiPF_6$ alone or a mixture mainly composed of $LiPF_6$ mixed with any. other lithium salt(s) are preferable, because $LiPF_6$ is recommendable due to its high in electro-conductivity.

As to the active materials for the positive electrode to be used there can be used any kind which is capable of electro-chemically occluding and releasing lithium ions. For instance, such lithium-containing complex oxides as $LiCoO_2$, $LiNiO_2$, $LiMnO_2$, $LiMn_2O_4$ or such chalcogen compounds as $TiO_2$, $MnO_2$, $MoO_3$, $V_2O_5$, $TiS_2$, $MoS_2$ etc can be used. Among them, such a lithium compound having a structure of $\alpha$-$NaCrO_2$ such as $LiCoO_2$, $LiNiO_2$, $LiMnO_2$, or $LiMn_2O_4$ or the like is preferable, because it is high in discharge voltage and electro-chemical stability.

As to the active materials for a negative electrode, there can be used at least one kind of materials selected from the group of metallic lithium, lithium alloy and carbon materials which are capable of electro-chemically occluding and releasing lithium ions.

Halogenated organic solvents are generally known as incombustible or flame retarder. It is therefore understood that when the fluorine-containing compounds are used as an electrolyte solvent, it becomes resistant to combustion and has self extinguishing ability. Therefore, it can be considered to use them as a solvent for an electrolyte. It is however noted that if any kind of fluorine substituted propylene carbonates is used as a solvent, it has a high viscosity, to result in making it impossible to obtain a desired high capacity charge, and when a charge/discharge operation is carried out with a relatively large electric current density, a predetermined capacity can not be obtained, although there is no problem as long as the charge and discharge operation is carried out with the relatively low electric current density. Therefore lowering the viscosity by combining any kind of lower viscous solvents therewith is necessary. In addition, such tests have been carried out that various kinds of low viscous chain esters are mixed with the fluorine substituted propylene carbonates for examining the self extinguishing ability. As a result, it has been found out that only the case when dimethyl carbonate is mixed therewith exhibits an excellent self extinguishing ability. The mechanism is not clear though, it is considered that it is due to the interaction of fluorine substituted and dimethyl carbonate. In order to determine the optimum amount of mixing ratio of the respective solvents, various tests have been repeated, and as a result, it has been found that the volume of at least one kind of fluorine substituted propylene carbonates used as the primary solvent is in the range of 35 to 55% of the total volume of the whole solvents. If it is less than 35%, the self-extinguishing ability disappears. When it is more than 55%, the internal resistance is increased, resulting in the deterioration of the battery characteristics.

As mentioned above, the other cyclic esters can be mixed as the primary solvent. These cyclic esters have high dielectric constant and have a function to dissociate lithium salts used as a solute. Therefore, repeated various tests for obtaining preferred mixing ratio have been carried out, and it has been found that volume of at least contains at least one kind of fluorine substituted propylene carbonates as the primary solvent is 35 to 55% of the total volume of the whole solvents. If it is less than 35%, the degree of dissociation is decreased, resulting in increase of the internal resistance, and making it difficult to take out sufficient capacity. On the other hand, when it is more than 55%, viscosity of the mixture solvent is increased, and the mobility of lithium ions is decreased and the internal resistance is increased.

On the other hand, the secondary solvent is preferably used for lowering the viscosity of the primary solvent and increasing the electro-conductivity. Its volume is preferably in the range of 45 to 65% of the total volume of the whole solvents. The reason is that, if it is less than 45%, the effect to lower the viscosity is not sufficiently obtained, and, if it is more than 65%, it results in decrease of the volume of the primary solvent, to cause the decrease in the degree of dissociation of lithium salt, resulting in and increase in the internal resistance.

The volume of dimethyl carbonate used as the secondary solvent is preferably the range of 40 to 100% of the total volume of the whole solvent(s) . solvent. The reason is that, if it is less than 40%, the self extinguishing ability disappears and a sufficient extinguishing effect is not obtained.

TEST EXAMPLE 1

The following tests were carried out to ascertain the self extinguishing ability of electrolytes to be used for this invention.

$LiPF_6$ was used as a solute, and various electrolytes were prepared by dissolving it in various solvent mixtures as listed in Table 1 below so as to adjust the solute concentration to 1 mol/l.

The mixing ratio represents the volume ratio of the solvents.

TABLE 1

| | Lithium salt | | Kind of solvent mixture | | |
|---|---|---|---|---|---|
| | Kind of lithium salt | Concentration mol/L | Primary solvent | Secondary solvent | Mixing ratio (by volume) |
| Example A | $LiPF_6$ | 1.0 | 5-fluoro-4-fluoro-PC | DMC | 55:45 |
| Example B | $LiPF_6$ | 1.0 | 5-fluoro-4-fluoro-PC | DMC | 35:65 |
| Example C | $LiPF_6$ | 1.0 | 5-fluoro-4-fluoro-PC | DMC+iPMC | 50:30:20 |
| Example D | $LiPF_6$ | 1.0 | 5-fluoro-4-fluoro-PC+EC | DMC | 50:5:45 |
| Example E | $LiPF_6$ | 1.0 | 5-fluoro-4-fluoro-PC+EC | DMC | 35:20:45 |
| Example F | $LiPF_6$ | 1.0 | 5-fluoro-4-fluoro-PC+EC | DMC+iPMC | 45:10:35:10 |
| Example G | $LiPF_6$ | 1.0 | 5-fluoro-4-fluoro-PC+EC | DMC | 40:5:55 |
| Example H | $LiPF_6$ | 1.0 | 5-fluoro-4-fluoro-PC+EC | DMC | 35:10:55 |
| Example I | $LiPF_6$ | 1.0 | 5-fluoro-4-fluoro-PC+EC | DMC+iPMC | 35:10:45:10 |
| Example J | $LiPF_6$ | 1.0 | 5-fluoro-PC | DMC | 55:45 |
| Example K | $LiPF_6$ | 1.0 | 5-fluoro-PC | DMC | 35:65 |
| Example L | $LiPF_6$ | 1.0 | 5-fluoro-PC | DMC+iPMC | 50:20:30 |
| Example M | $LiPF_6$ | 1.0 | 5-fluoro-PC+EC | DMC | 50:5:45 |
| Example N | $LiPF_6$ | 1.0 | 5-fluoro-PC+EC | DMC | 35:20:45 |
| Example O | $LiPF_6$ | 1.0 | 5-fluoro-PC+EC | DMC+iPMC | 45:10:35:10 |
| Example P | $LiPF_6$ | 1.0 | 5-fluoro-PC+EC | DMC | 40:5:55 |
| Example Q | $LiPF_6$ | 1.0 | 5-fluoro-PC+EC | DMC | 35:10:55 |
| Example R | $LiPF_6$ | 1.0 | 5-fluoro-PC+EC | DMC+iPMC | 35:10:45:10 |
| Conventional Example A | $LiPF_6$ | 1.0 | EC | DMC | 50:50 |
| Conventional Example B | $LiPF_6$ | 1.0 | PC | DMC | 50:50 |
| Conventional Example C | $LiPF_6$ | 1.0 | PC | MEC | 50:50 |
| Conventional Example D | $LiPF_6$ | 1.0 | EC | DMC | 50:50 |
| Comparative Example A | $LiPF_6$ | 1.0 | 5-fluoro-4-fluoro-PC | MEC | 50:50 |
| Comparative Example B | $LiPF_6$ | 1.0 | 5-fluoro-4-fluoro-PC | DME | 50:50 |

TABLE 1 (continued)

| | Lithium salt | | Kind of solvent mixture | | |
|---|---|---|---|---|---|
| | Kind of lithium salt | Concentration mol/L | Primary solvent | Secondary solvent | Mixing ratio (by volume) |
| Comparative Example C | $LiPF_6$ | 1.0 | 5-fluoro-4-fluoro-PC | DMC | 60:40 |
| Comparative Example D | $LiPF_6$ | 1.0 | 5-fluoro-4-fluoro-PC | DMC | 30:70 |
| Comparative Example E | $LiPF_6$ | 1.0 | 5-fluoro-4-fluoro-PC+EC | DMC | 30:25:45 |
| Comparative Example F | $LiPF_6$ | 1.0 | 5-fluoro-4-fluoro-PC+EC | DMC | 30:5:65 |
| Comparative Example G | $LiPF_6$ | 1.0 | 5-fluoro-4-fluoro-PC | DMC+iPMC | 50:15:35 |

In Table 1 above, 5-fluoro-4-fluoro-PC stands for 2-oxo-3-fluoro-4-fluoro-4-methyl-1,3-dioxolane, 5-fluoro-PC is 2-oxo-5-fluoro-4-methyl-1,3-dioxolane, EC is ethylene carbonate, PC is propylene carbonate (2-oxo-4-methyl-1,3-dioxolane), DMC is dimethyl carbonate, MEC is methyl ethyl carbonate, DME is 1,2-dimetoxyethane, i-PMC is isopropyl methyl carbonate.

Extinguishing ability of each of the electrolytes prepared as above was evaluated by such a test that sheet of papers were immersed in respective electrolytes to be tested, and then were set fire by a flame of a burner and thereafter the flame was put out. Thus, the self extinguishing ability was tested by observing if the firing still continued or not, when the flame was put out. The results thereof is shown in Table 2 below.

TABLE 2

| | After putting out the flame |
|---|---|
| Example A | fire discontinued |
| Example B | fire discontinued |
| Example C | fire discontinued |
| Example D | fire discontinued |
| Example E | fire discontinued |
| Example F | fire discontinued |
| Example G | fire discontinued |
| Example H | fire discontinued |
| Example I | fire discontinued |
| Example J | fire discontinued |
| Example K | fire discontinued |
| Example L | fire discontinued |
| Example M | fire discontinued |
| Example N | fire discontinued |
| Example O | fire discontinued |
| Example P | fire discontinued |
| Example Q | fire discontinued |
| Example R | fire discontinued |
| Conventional Example A | fire continued |

TABLE 2 (continued)

| | After putting out the flame |
|---|---|
| Conventional Example B | fire continued |
| Conventional Example C | fire continued |
| Conventional Example D | fire continued |
| Comparative Example A | fire continued |
| Comparative Example B | fire continued |
| Comparative Example C | fire discontinued |
| Comparative Example D | fire continued |
| Comparative Example E | fire continued |
| Comparative Example F | fire continued |
| Comparative Example G | fire continued |

As it is clear from Tables 1 and 2, while the conventional examples A to D corresponding to electrolytes to be used in the conventional batteries continued firing even after putting out the burner's flame, the examples A to R corresponding to the electrolytes to be used for batteries of this invention self-extinguished immediately after putting out the burner's flame, without firing continuation. Thus their self extinguishing abilities were confirmed.

As to the comparative examples A and B wherein other solvents than dimethyl carbonate (DMC) were used as the secondary solvent, no self extinguishing ability was observed and the firing continued. As to the comparative examples G wherein the volume of dimethyl carbonate (DMC) was 30% of the total volume of the whole secondary solvents, the firing continued. Accordingly it indicates that the volume of dimethyl carbonate should be 40% or more thereof as shown in the example L. As to the comparative examples D-F wherein the volume of 3-fluoro-4-fluoro-propylene carbonate is 30% or more thereof, firing continued. Accordingly it indicates that fluorine substituted propylene carbonates should be 35% or more of the total volume of the whole solvents.

EXAMPLE 1

$LiCoO_2$ powder used as an active material for an positive electrode, graphite powder used as an electro-conductive agent, polyfluoro vinylidene resin used as a binder, and N-methyl pyrolidone used as a solvent for the binder were stirred to be mixed by a homogenizer to obtain a slurry active material mixture for a positive electrode. This slurry mixture was coated on one side of an electric collector made of aluminum foil by using a slot die coater, and thereafter was dried at 100°C in an oven to remove the solvent. The other side of the electric collector was coated therewith and thereafter the solvent was removed by the same manner as above. Thus, after the slurry active material mixture was coated on the both sides of the electric collector, it was then rolled with a roller press to even the thickness of the positive electrolyte active material. It was then subjected to a heat treatment in a vacuum oven to remove the moisture to obtain a positive electrode.

For the negative electrode, it was made in the following manner. Namely, carbon powder capable of electro-chemically occluding and releasing lithium ions, styrene- butadiene rubber type resin and ethyl acetate were stirred to be mixed by a homogenizer to obtain a slurry active material mixture.
This slurry active material mixture was coated on one side of an electric collector made of copper foil by using the slot die coater, and thereafter was dried in the oven to remove the solvent. The other side of the electric collector was also coated therewith and the solvent was removed in the same manner as above. Thus, there was obtained the electric collector coated on both sides thereof with the active material mixture. It was then subjected to a heat treatment so as to cure styrene butadiene rubber type resin, and is then rolled with a heated roller press so as to even the thickness of the active material mixture and was then heat treated to remove the moisture to obtain a negative electrode.

The positive electrode and the negative electrode thus obtained were stacked one upon another through a sponge-shaped micro porous resin made film having a three dimensional structure made of such a polyeolefine resins as polyethylene such as polypropylene or a copolymer thereof, for instance, and it was wound to form a tubular electrode assembly. The spiral electrode assembly thus obtained was put in a tubular container made of stainless steel. The opening of the container was closed, after an electrolyte was poured, to obtain a lithium secondary battery of AA-size with 500 mAh rated capacity.
The respective electrolytes prepared corresponding to examples A to I and, the conventional examples A and B and

comparative examples C and D, respectively were poured in the respective containers of lithium secondary batteries. Each of the batteries thus manufactured was charged and discharged repeatedly in such a manner that it was charged with 0.2 CmA, at a temperature of 25°C until the battery voltage reached 4.1V, and after it was allowed to stand for ten minutes, it was discharged with the same current as above until the battery voltage became 2.75V, and after it was allowed to stand for ten minutes, the charging was carried out again.
After the repetition of such charge/discharge cycles, charge/discharge characteristics were measured. The results are shown in Figure 1.
Figure 1 shows the charge/discharge characteristics at the tenth cycle at which the charge/discharge state is stabilized. The battery characteristics of the batteries using the examples A to I prepared according to this invention is almost the same as or better than that of the conventional batteries using the conventional example A.
It is recognized from Figure 1 that the examples according to this invention are sufficiently large in discharge capacity even at a comparative large current. Further, the battery using the electrolyte of comparative example C wherein fluorine-substituted propylene carbonate accounts for 60% of the total volume of the whole solvents, and the battery using the electrolyte of comparative example D wherein the same accounts for 30 vol% thereof, are small in discharge capacity as shown in comparative examples C and D in Figure 1. This is caused by the fact that if the volume of fluorine substituted propylene carbonate is so large as shown in the comparative example C, the viscosity of the electrolyte becomes high, so that the internal resistance of the battery is increased and the polarization at the time of charging is increased, and the volume of the solvent having a high dielectric constant becomes small, the lithium salt is not sufficiently dissociated and the dielectric constant of the electrolyte is decreased, and the internal resistance of the battery is increased, resulting in a sufficient charge and discharge reaction is not carried out.
Accordingly, from the above facts, it is confirmed that the volume of the primary solvent comprising at least one kind of fluorine substituted propylene carbonates should be in the range of 35 to 55% of the total volume of the whole solvents.

For the similar reasons mentioned above, it is confirmed that the volume of at least one kind of fluorine substituted propylene carbonates also should be in the range of 35 to 55% of the total volume of the whole solvents. As to the lithium secondary batteries using the electrolytes of examples J-R as shown in Table 1, the charge/discharge operation was carried out in the same manner as above. The results thereof are shown in Figure 2. Figure 2 shows the discharge characteristics at the 10th cycle. As shown in the Figure, it is confirmed that almost the same discharge characteristics as the examples A to I can be obtained. Though 3-fluoro-4-fluoro-propylene carbonate and 3-fluoro-propylene carbonate were used for example among fluorine substituted propylene carbonates, when the other kinds there were used instead thereof, the above-mentioned effects were obtained. As to the positive and negative electrodes also, when the other kinds of respective active materials for the positive and negative electrodes were used instead of the above-mentioned respective active materials, substantially the same effects as above were obtained. Thus, when a mixture solvent comprising at least one kind of fluorine substituted propylene carbonates as the primary solvent and dimethyl carbonate as the secondary solvent is used for the solvent for an organic electrolyte of a lithium secondary battery, there can be brought about such favorable effects that there can be obtained a lithium secondary battery which is almost the same as or better than the conventional lithium secondary batteries in battery performance, and is provided with self-extinguishing ability and is high in safety.

EMBODIMENT 2

Another preferred embodiment for obtaining a lithium secondary battery which is provided with high safety and self extinguishing ability and is particularly excellent in the battery performance at a low temperature.

Such a lithium secondary battery can be obtained by using a mixture solvent for an organic electrolyte wherein the primary solvent comprising at least one kind of cyclic esters are mixed in such a condition that at least one kind of fluorine substituted carbonates is used as the primary solvent and a mixture solvent prepared by mixing dimethyl carbonate with at least one kind selected from diethyl carbonate and methyl ethyl carbonate is used as the secondary solvent.

As to cyclic esters as the primary solvent, other esters, for instance, at least one kind of the esters as enumerated in the above-mentioned EMBODIMENT 1 can be used to be mixed with at least one kind of the above-mentioned fluorine substituted propylene carbonates.

As to chain esters as the secondary solvent, other esters, for instance, at least one kind of the esters as enumerated in the above-mentioned EMBODIMENT 1 can be used to be mixed with the above-mentioned diethyl carbonate or/and dimethyl carbonate.

In this case, in order to obtain the preferable results, the volume of the primary solvent should be in the range of 35-55% of the total volume of the whole solvents and that of secondary solvent should be in the range of 45-65% thereof, and the volume of at least one kind of fluorine substituted propylene carbonates should be in the range of 35-55% of the total volume of the whole solvents and the volume percentage of dimethyl carbonate should be in the

range of 40-80% of total volume of the whole secondary solvents, and of the total volume of diethyl carbonate and methyl ethyl carbonate should be in the range of 20-60% thereof. The reasons for such conditions that the volume of dimethyl carbonate should be in the range of 40-80% thereof, and the total volume of diethyl carbonate and methyl ethyl carbonate should be in the range of 20-60% thereof are based on the results of various comparison tests. It has been learned from the test results that if the volume of dimethyl carbonate is less than 40%, no self extinguishing ability is brought about and if the total volume of diethyl carbonate and methyl ethyl carbonate is less than 20%, it does not necessarily exhibit a good result in respect of the battery characteristics at a low temperature.

A kind of lithium salts to be used for the solute in an organic electrolyte is not limited as long as it dissociates in the organic solvent for supplying lithium ions. It can be selected from the ones as enumerated in the EMBODIMENT 1. Particularly, it is preferable to use fluorine containing lithium salts in terms of safety. Since $LiPF_6$ is especially high in electro-conductivity, it is preferable to use $LiPF_6$ alone or a mixture mainly composed of LiPF6 and other lithium containing salts.

For the active materials for positive electrode, those enumerated in the EMBODIMENT 1 can be selectively used, but, among them, lithium compounds having a structure of $\alpha$-$NaCrO_2$ such as $LiCoO_2$, $LiNiO_2$, $LiMnO_2$, or $LiMn_2O_4$ or the like are preferable because they have high discharge voltage and electro-chemical stability. For the active materials for the negative electrode, those enumerated in the EMBODIMENT 1 can be selectively used.

TEST EXAMPLE 2

The following tests were carried out to ascertain self extinguishing ability of electrolytes to be used for this invention:

$LiPF_6$ was used as a solute, and various electrolytes were prepared by dissolving it in various solvent mixtures as listed in Table 3 so as to adjust the solute concentration to 1 mol/l.

The mixing ratio represents the volume ration of the mixed solvents.

TABLE 3

| | Lithium salt | | Kind of solvent mixture | | |
|---|---|---|---|---|---|
| | Kind of lithium salt | Concentration mol/L | Primary solvent | Secondary solvent | Mixing ratio (by volume) |
| Example A | $LiPF_6$ | 1.0 | 5-fluoro-4-fluoro-PC | DMC+DEM | 55:25:20 |
| Example B | $LiPF_6$ | 1.0 | 5-fluoro-4-fluoro-PC | DMC+MEC | 50:25:25 |
| Example C | $LiPF_6$ | 1.0 | 5-fluoro-4-fluoro-PC | DMC+DEC+MEC | 50:30:10:10 |
| Example D | $LiPF_6$ | 1.0 | 5-fluoro-4-fluoro-PC | DMC+DEC+MPC | 50:20:20:10 |
| Example E | $LiPF_6$ | 1.0 | 5-fluoro-4-fluoro-PC | DMC+DEC+MEC+MPC | 40:30:10:10:10 |
| Example F | $LiPF_6$ | 1.0 | 5-fluoro-4-fluoro-PC+EC | DMC+DEC | 40:10:25:25 |
| Example G | $LiPF_6$ | 1.0 | 5-fluoro-4-fluoro-PC+EC | DMC+MEC | 40:10:25:25 |
| Example H | $LiPF_6$ | 1.0 | 5-fluoro-4-fluoro-PC+EC | DMC+DEC+MEC | 40:10:30:10:10 |
| Example I | $LiPF_6$ | 1.0 | 5-fluoro-4-fluoro-PC+EC | DMC+DEC+MPC | 35:10:25:20:10 |
| Example J | $LiPF_6$ | 1.0 | 5-fluoro-4-fluoro-PC+EC | DMC+DEC+MEC+MPC | 35:10:25:10:10:10 |
| Example K | $LiPF_6$ | 1.0 | 5-fluoro-PC | DMC+DEC | 55:25:20 |
| Example L | $LiPF_6$ | 1.0 | 5-fluoro-PC | DMC+MEC | 50:25:25 |

TABLE 3 (continued)

| | Lithium salt | | Kind of solvent mixture | | |
|---|---|---|---|---|---|
| | Kind of lithium salt | Concentration mol/L | Primary solvent | Secondary solvent | Mixing ratio (by volume) |
| Example M | $LiPF_6$ | 1.0 | 5-fluoro-PC | DMC+DEC+MEC | 50:30:10:10 |
| Example N | $LiPF_6$ | 1.0 | 5-fluoro-PC | DMC+DEC+MPC | 50:20:20:10 |
| Example O | $LiPF_6$ | 1.0 | 5-fluoro-PC | DMC+DEC+MEC+MPC | 40:30:10:10:10 |
| Example P | $LiPF_6$ | 1.0 | 5-fluoro-PC+EC | DMC+DEC | 40:10:25:25 |
| Example Q | $LiPF_6$ | 1.0 | 5-fluoro-PC+EC | DMC+MEC | 40:10:25:25 |
| Example R | $LiPF_6$ | 1.0 | 5-fluoro-PC+EC | DMC+DEC+MEC | 40:10:30:10:10 |
| Example S | $LiPF_6$ | 1.0 | 5-fluoro-PC+EC | DMC+DEC+MPC | 35:10:25:20:10 |
| Example T | $LiPF_6$ | 1.0 | 5-fluoro-PC+EC | DMC+DEC+MEC+MPC | 35:10:25:10:10:10 |
| Example U | $LiPF_6$ | 1.0 | 5-fluoro-PC | DMC+MEC | 50:40:10 |
| Conventional Example A | $LiPF_6$ | 1.0 | EC | DMC | 50:50 |
| Conventional Example B | $LiPF_6$ | 1.0 | PC | DMC | 50:50 |
| Conventional Example C | $LiPF_6$ | 1.0 | EC | MEC | 50:50 |
| Conventional Example D | $LIPF_6$ | 1.0 | PC | DEC | 50:50 |
| Conventional Example E | $LiPF_6$ | 1.0 | EC | DME | 50:50 |
| Comparative Example A | $LiPF_6$ | 1.0 | 5-fluoro-4-fluoro-PC | DME | 50:50 |
| Comparative Example B | $LiPF_6$ | 1.0 | 5-fluoro-4-fluoro-PC | MEC | 50:50 |
| Comparative Example C | $LiPF_6$ | 1.0 | 5-fluoro-4-fluoro-PC | DEC+MEC | 50:25:25 |
| Comparative Example D | $LiPF_6$ | 1.0 | 5-fluoro-4-fluoro-PC | DMC+DEC | 30:40:30 |
| Comparative Example E | $LiPF_6$ | 1.0 | 5-fluoro-4-fluoro-PC | DMC+MEC | 60:20:20 |
| Comparative Example F | $LiPF_6$ | 1.0 | 5-fluoro-4-fluoro-PC | DMC | 50:50 |
| Comparative Example G | $LiPF_6$ | 1.0 | 5-fluoro G-4-fluoro-PC | DMC+MEC | 50:45: 5 |
| Comparative Example H | $LiPF_6$ | 1.0 | 5-fluoro-4-fluoro-PC | DMC+MPC | 50:25:25 |
| Comparative Example I | $LiPF_6$ | 1.0 | 5-fluoro-4-fluoro-PC | DMC+DPC | 50:25:25 |

TABLE 3 (continued)

| | Lithium salt | | Kind of solvent mixture | | |
|---|---|---|---|---|---|
| | Kind of lithium salt | Concentration mol/L | Primary solvent | Secondary solvent | Mixing ratio (by volume) |
| Comparative Example J | $LiPF_6$ | 1.0 | 5-fluoro-4-fluoro-PC | DMC+MEC | 50:10:40 |
| Comparative Example K | $LiPF_6$ | 1.0 | 5-fluoro-4-fluoro-PC | DMC+DEC | 50:10:40 |

In Table 3 above, 5-fluoro-4-fluoro-PC stands for 2-oxo-5-fluoro-4-fluoro-4-methyl-1,3-dioxolane, 5-fluoro-PC stands for 2-oxo-5-fluoro-4-methyl-1,3-dioxolane, PC stands for propylene carbonate, EC stands for ethylene carbonate, DMC stands for dimethyl carbonate, DEC stands for diethyl carbonate, MEC stands for methyl ethyl carbonate, MPC stands for methyl propyl carbonate, DME stands for 1,2-dimetoxyethane, DPC stands for dipropyl carbonate.

Extinguishing ability of each of the electrolytes prepared as above was evaluated by such a test in which sheet of papers were immersed in respective electrolytes to be tested, and then were set fire by a flame of a burner and thereafter the flame was put out, thus the self extinguishing ability was tested by observing if the firing still continued or not when the flame was put off. The results are shown in Table 4 below.

TABLE 4

| | After putting off the flame |
|---|---|
| Example A | fire discontinued |
| Example B | fire discontinued |
| Example C | fire discontinued |
| Example D | fire discontinued |
| Example E | fire discontinued |
| Example F | fire discontinued |
| Example G | fire discontinued |
| Example H | fire discontinued |
| Example I | fire discontinued |
| Example J | fire discontinued |
| Example K | fire discontinued |
| Example L | fire discontinued |
| Example M | fire discontinued |
| Example N | fire discontinued |
| Example O | fire discontinued |
| Example P | fire discontinued |
| Example Q | fire discontinued |
| Example R | fire discontinued |
| Example S | fire discontinued |
| Example T | fire discontinued |
| Example U | fire discontinued |
| Conventional Example A | fire continued |
| Conventional Example B | fire continued |
| Conventional Example C | fire continued |

TABLE 4 (continued)

| | After putting off the flame |
|---|---|
| Conventional Example D | fire continued |
| Conventional Example E | fire continued |
| Comparative Example A | fire continued |
| Comparative Example B | fire continued |
| Comparative Example C | fire continued |
| Comparative Example D | fire continued |
| Comparative Example E | fire discontinued |
| Comparative Example F | fire discontinued |
| Comparative Example G | fire discontinued |
| Comparative Example H | fire discontinued |
| Comparative Example I | fire discontinued |
| Comparative Example J | fire continued |
| Comparative Example K | fire continued |

As it is clear from Tables 3 and 4, while the conventional examples A to E wherein corresponding to electrolytes to be used for in the conventional batteries continued firing even after putting out the burner's flame, the examples A to U corresponding to the electrolytes to be used for batteries of this invention self-extinguished immediately after putting out the burner's flame, without firing continuation. Thus their self extinguishing abilities were confirmed.

As to the comparative examples A and C wherein other solvents than dimethyl carbonate (DMC) were used as the secondary solvent, no self extinguishing ability was observed and the firing continued. As to the comparative examples L and K wherein the volume percentage of dimethyl carbonate (DMC) was 20% of the total volume of the secondary solvents, the firing continued. Accordingly it indicates that the volume of dimethyl carbonate should be 40% or more thereof as shown in the examples D and N. As to the comparative example D wherein the volume of 3-fluoro-4-fluoro-propylene carbonate is 30% of the total volume of the whole solvents, firing continued. Accordingly it indicates that fluorine substituted propylene carbonates should be 35% or more of the total volume of the whole solvents.

Next discharge characteristics at a low temperature was tested for the lithium secondary batteries prepared by using the above mentioned electrolytes in the following manner:

EXAMPLE 2

The positive and negative electrodes which are the same ones as EXAMPLE 1 were made in the same manner as described in EXAMPLE 1. The lithium secondary batteries of AA size and with rated capacity of 500 mAh were made by stacking these electrodes through the same separator as above.

The electrolytes having the same composition as prepared according to the examples A to J and the conventional examples A and B and the comparative examples D and E as shown in foregoing Table 2 were poured in the respective batteries.

Each of the batteries thus manufactured was charged and discharged repeatedly in such a manner that it was charged with 0.2 CmA, at a temperature of 25°C until the battery voltage reached 4.1 V, and after it was allowed to stand for ten minutes, it was discharged with the same current as above until the battery voltage became 2.75V, and after it was allowed to stand for ten minutes, the charging was carried out again.

After 10 minute rest, charge and discharge were repeated. After the repetition of such charge/discharge cycles, charge/discharge characteristics was measured. The results are shown in Figure 3.

Figure 3 shows the charge/discharge characteristics at the tenth cycle at which the charge/discharge state are stabilized. The respective battery characteristics of the examples A to J of this invention are substantially the same as that of the conventional battery indicated by A or much better.

It clearly indicates that the batteries of this invention have an sufficient discharge capacity even at the relatively large current.

Further, the charge/discharge capacity of the batteries of the comparative examples D and E wherein the volume of the primary solvent comprising cyclic esters having high dielectric constant as the solvent for an electrolyte,

accounts for 30% and 60% respectively, are so small as indicated with the comparative examples D and E in Figure 3. It is presumed that this is caused by the following facts. Namely, if the volume of the primary solvent is so large as shown in the comparative example E, the component having a high dielectric constant in the electrolyte becomes large, so that the viscosity of the electrolyte is heightened and the internal resistance of the battery is increased and the polarization at the time of charge/discharge is increased, and on the other hand, if the amount of the primary solvent is so small as shown in the example D, the component having a high dielectric constant in the electrolyte becomes small, so that the lithium salt is not sufficiently dissociated and the electro-conductivity of the electrolyte is small, the internal resistance of the battery is increased and a sufficient charge/discharge is not carried out sufficiently.

Therefore, from the self extinguishing ability point of view, the volume percentage of at least one kind of fluorine substituted propylene carbonates as the primary solvent can be determined to be in the range of 35% or more of the total volume of the whole solvents. However, the upper limit thereof should be 55 vol % or less. The reasons for this limitation are the same as discussed above of the limitation of the cyclic esters as the primary solvent.

Further, the same charge/discharge operation as mentioned above was carried out for the lithium secondary batteries using the electrolytes having the compositions of the examples K - U as shown in Table 3. The results thereof is shown as in Figure 4. Figure 4 also shows the discharge characteristics at the 10 cycle of the charge/discharge cycles. It is found therefrom that there can be obtained almost the same discharge characteristics as the above-mentioned examples A to J.

Further, in order to investigate the discharge characteristics of the batteries at a low temperature, the following test was carried out.

The batteries using the respective electrolytes of the examples A to U, the conventional examples A to D and the comparative examples F to J as shown in Table 3 was carried out as follows: Each of the batteries thus manufactured was charged and discharged repeatedly in such a manner that it was charged with 0.2 CmA, at a temperature of 25°C until the battery voltage reached 4.1V, and after it was allowed to stand for ten minutes, it was discharged with the same current as above at the temperature of -20°C as above until the battery voltage became 2.75V, and after it was allowed to stand for ten minutes, the charging was carried out again.

Table 5 below shows the discharge capacity of the batteries at the temperature of -20°C measured for comparison with the discharge of the temperature of 25°C.

TABLE 5

| | Charge capacity rate (%) |
|---|---|
| Example A | 74 |
| Example B | 78 |
| Example C | 75 |
| Example D | 73 |
| Example E | 70 |
| Example F | 73 |
| Example G | 77 |
| Example H | 77 |
| Example I | 74 |
| Example J | 72 |
| Example K | 71 |
| Example L | 80 |
| Example M | 78 |
| Example N | 74 |
| Example O | 70 |
| Example P | 71 |
| Example Q | 79 |
| Example R | 74 |
| Example S | 71 |

TABLE 5 (continued)

| | Charge capacity rate (%) |
|---|---|
| Example T | 73 |
| Example U | 70 |
| Conventional Example A | 56 |
| Conventional Example B | 62 |
| Conventional Example C | 60 |
| Conventional Example D | 43 |
| Comparative Example F | 36 |
| Comparative Example G | 54 |
| Comparative Example H | 40 |
| Comparative Example I | 2 |
| Comparative Example J | 58 |

As clear from Tables 3 and 5, the batteries using the electrolytes of the examples A to U is 70% or more in discharge capacity rate, and there is obtained a much better low temperature discharge characteristics with this invention batteries A to U as compared with the conventional batteries A to D using the conventional examples A to D of which the discharge capacity rate is 43 to 63%. In the case of the batteries using the comparative examples F and G in which diethyl carbonate (DEC) or methyl ethyl carbonate (MEC) is not contained, in the case where the volume thereof accounts for 10% as shown in the comparative example G, and in the case where the volume thereof accounts for 80% as shown in the comparative example J, the discharge capacity rates thereof are so low as 2 to 40%, 54% and 58% respectively shown in Table 5, and no advantageous effect was obtained.

Though 2-oxo-5-fluoro-4-fluoro-4-methyl-1,3-dioxolane and 2-oxo-5-fluoro-4-methyl-1,3-dioxolane were taken for the above examples out of fluorine substituted propylene carbonates, when any other kind thereof was used instead, the above mentioned effects are obtained. Also, almost the same as above were obtained with the positive and negative electrodes made of other materials than the materials used in the above examples.

As described above, according to this invention as above there can be obtained the lithium secondary battery which has not only high self extinguishing ability and high safety, but also exhibits the excellent discharge characteristics even at the low temperature.

EMBODIMENT 3

A further another preferred EMBODIMENT of this invention will be explained below for providing an excellent lithium secondary battery which is provided with not only high self extinguishing ability and high safety, but also an especially excellent discharge characteristics.
Such a battery with the above-mentioned various characteristics can be obtained by using a solvent for an organic electrolyte characterized with a solvent mixture prepared by mixing the primary solvent comprising at least one kind of cyclic esters and the secondary solvent comprising at least one kind of chain esters, and the primary solvent comprising at least 2-oxo-4 trifluoromethyl-1,3-dioxolane, and dimethyl carbonate is used at least as the secondary solvent.

2-oxo-4-trifluoromethyl-1,3-dioxolane has the following structural formula:

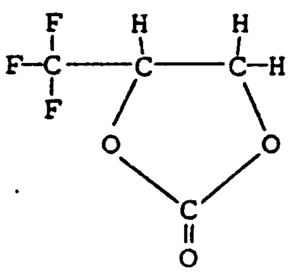

For the primary solvent, at least one kind of other cyclic esters, for example, at least one kind of cyclic esters selected from the group of propylene carbonate, ethylene carbonate, butylene carbonate, γ-butylolactone, vinylene carbonate, 2-methyl -γ -butyl-lactate, acetyl-γ-butyl-lactate, γ-valero lactate, etc. can be mixed with 2-oxo-4-trifluoromethyl-1,3-dioxolane.

For the other chain esters to be used as the secondary solvent, at least one kind of chain esters selected from the group of methyl ethyl carbonate, propyl methyl carbonate, methyl butyl carbonate, diethyl carbonate, propyl ethyl carbonate, ethyl butyl carbonate, dipropyl carbonate, propyl butyl carbonate, dibutyl carbonate, alkyl propionates, dialkyl malonate, alkyl acetate, etc. can be mixed with dimethyl carbonate.

As will be clear below, the volume of the primary solvent should be in the range of 35 to 55 of the total volume of the whole solvents for an electrolyte and that of the secondary solvent should be in the range of 45 to 65% thereof, and the volume of 2-oxo-4-oxo-trifluoromethyl-1,3-dioxolane should be in the range of 35%-55% thereof and the volume of dimethyl carbonate should be in range of 40 to 100% of the total volume of the secondary solvent(s).

For lithium salts to be used for the solute in organic electrolytes, they can be used without limitation, as long as they are capable of dissociating in the organic solvent to supply lithium ions. For instance, the lithium salts as enumerated in the above mentioned EMBODIMENT 1 can be selectively used. Among them, it is preferable to use fluorine containing lithium salts in terms of safety. Especially, the use of $LiPF_6$ alone or the mixture thereof with any other lithium containing compound wherein $LiPF_6$ contains in majority gives favorable results because it has especially high electro-conductivity.

For the active materials for a positive electrolyte , those as enumerated in the EMBODIMENT 1 can be selectively used. As mentioned above, particularly, lithium compounds having a structure of $\alpha$-$NaCrO_2$ such as $LiCoO_2$ or $LiNiO_2$, or $LiMn_2O_4$ or the like are preferable because they bring about high charge voltage and electro-chemical stability.

For the active materials for a negative electrode, those as enumerated in the above mentioned EMBODIMENT 1 can be used.

When 2-oxo-4-trifluoromethyl-1,3-dioxolane alone is used for a solvent for electrolyte used in a lithium secondary battery, the viscosity of the electrolyte becomes so high that a desired battery capacity can not be obtained when the charge/discharge operation is carried out with a relatively large current, though it is possible to carry out the charge/discharge operation with a very small current. It is therefore necessary to adjust the viscosity thereof by mixing to a solvent having a low viscosity therewith.

According to this invention, in this case, various kinds of chain esters as a low viscous solvent added thereto for investigating the self distinguishing ability of the resultant solvent mixtures. As a result, it has been found that only when dimethyl carbonate is added thereto, the resultant solvent mixture exhibits an excellent self distinguishing ability, though the mechanism bringing this effect is not clear.

When dimethyl carbonate was added to any kind of fluorine substituted propylene carbonates, the resultant solvent mixtures the self extinguishing ability was obtained with all of the resultant solvent mixtures.

In this case, it has been found that when 2-oxo-4-trifluoromethyl-1,3-dioxolane was added thereto, the resultant solvent mixture exhibited especially excellent self extinguishing ability. The reason is considered as follows. 2-oxo-4-trifluoromethyl-1,3-dioxolane is such that when the hydrogens of the methyl group of propylene carbonate are all substituted with fluorines, the electron donating group as seen in the methyl group was changed to the electron attractive group substituted with fluorines, so that 2-oxo-4-trifluoromethyl-1,3-dioxolane is high in electro-chemical stability, and the decomposition can be prevented during charging and discharging to bring about more excellent battery performance, as compared with propylene carbonate having the methyl group.

As a result of repeated various tests to determine the optimum ratio of the solvent mixture it has been found that the volume of 2-oxo-4-trifluoromethyl-1,3-dioxolane to be used as the primary solvent should be in the range of 35-55% of the total volume of the whole solvents, and if the volume thereof accounts for less than vol 35%, it makes it to sufficiently diassociate lithium salt, and increase the internal resistance, and as a result, it becomes difficult to take out a sufficient capacity. If the volume thereof is more than 55 vol %, the viscosity is increased, so that the mobility of lithium irons is lowered and the internal resistance is increased.

On the other hand, secondary solvent is necessary for lowering the viscosity of the foregoing primary solvent and increasing the electro-conductivity thereof. The percentage or the secondary solvent of the total volume of the whole solvents should be in the range of 45-65%. If its volume is less than 35%, sufficient effect of lowering the viscosity can not be obtained. If its volume is more than 65%, it results in the less volume of the primary solvent which causes lowering in the dissociation degree of lithium salt and increases in the internal resistance.

The volume of dimethyl carbonate in the total volume of the whole secondary solvents should be in the range of 40-100% of the total volume of the whole secondary solvents. If its volume in the secondary solvent is less than 40%, a sufficient self extinguishing ability can not be obtained.

TEST EXAMPLE 3

The following tests were carried out to ascertain the self extinguishing ability of electrolytes to be used for this invention battery.

Among the lithium salts, $LiPF_6$ was used as a solute, and the electrolytes were prepared by dissolving it in various solvent mixtures as listed in Table 6 and 7 and adjusting the solute concentration to become 1 mol/l.

The mixing ratio is shown by volume.

TABLE 6

| | Lithium salt | | Kind of solvent mixture | | |
|---|---|---|---|---|---|
| | Kind of lithium salt | Concentration mol/L | Primary solvent | Secondary solvent | Mixing ratio (by volume) |
| Example A | $LiPF_6$ | 1.0 | 4TFMEC | DMC | 35:65 |
| Example B | $LiPF_6$ | 1.0 | 4TFMEC | DMC | 45:55 |
| Example C | $LiPF_6$ | 1.0 | 4TFMEC | DMC | 50:50 |
| Example D | $LiPF_6$ | 1.0 | 4TFMEC | DMC | 55:45 |
| Example E | $LiPF_6$ | 1.0 | 4TFMEC | DMC+MPC | 35:45:20 |
| Example F | $LiPF_6$ | 1.0 | 4TFMEC | DMC+MPC | 35:26:39 |
| Example G | $LiPF_6$ | 1.0 | 4TFMEC | DMC+MPC | 45:40:15 |
| Example H | $LiPF_6$ | 1.0 | 4TFMEC | DMC+MPC | 45:22:33 |
| Example I | $LiPF_6$ | 1.0 | 4TFMEC | DMC+MPC | 55:35:10 |
| Example J | $LiPF_6$ | 1.0 | 4TFMEC | DMC+MPC | 55:18:27 |
| Example K | $LiPF_6$ | 1.0 | 4TFMEC | DMC+MEC | 35:45:20 |
| Example L | $LiPF_6$ | 1.0 | 4TFMEC | DMC+MEC | 45:40:15 |
| Example M | $LiPF_6$ | 1.0 | 4TFMEC | DMC+MBC | 55:35:10 |
| Example N | $LiPF_6$ | 1.0 | 4TFMEC | DMC+MPC+MBC | 35:45:10:10 |
| Example O | $LiPF_6$ | 1.0 | 4TFMEC | DMC+MPC+MBC | 45:40: 8: 7 |
| Example P | $LiPF_6$ | 1.0 | 4TFMEC | DMC+MPC+MBC | 55:35: 5: 5 |
| Example Q | $LiPF_6$ | 1.0 | 4TFMEC+EC | DMC | 35:20:45 |
| Example R | $LiPF_6$ | 1.0 | 4TFMEC+EC | DMC | 35:10:55 |
| Example S | $LiPF_6$ | 1.0 | 4TFMEC+EC | DMC | 45:10:45 |
| Example T | $LiPF_6$ | 1.0 | 4TFMEC+EC | DMC+MPC | 35:20:35:10 |
| Example U | $LiPF_6$ | 1.0 | 4TFMEC+EC | DMC+MPC | 35:10:40:15 |
| Example V | $LiPF_6$ | 1.0 | 4TFMEC+EC | DMC+MPC | 35: 5:40:20 |
| Example W | $LiPF_6$ | 1.0 | 4TFMEC+EC | DMC+MPC | 45:10:35:10 |
| Example X | $LiPF_6$ | 1.0 | 4TFMEC+EC | DMC+MPC+MBC | 35:20:35: 5: 5 |
| Example Y | $LiPF_6$ | 1.0 | 4TFMEC+EC | DMC+MPC+MBC | 35:10:40:8:7 |
| Example Z | $LiPF_6$ | 1.0 | 4TFMEC+EC | DMC+MPC+MBC | 35:5:40:10:10 |
| Example AA | $LiPF_6$ | 1.0 | 4TFMEC+EC | DMC+MPC+MBC | 45:10:35: 5: 5 |

TABLE 7

| | Lithium salt | | Kind of solvent mixture | | Mixing ratio (by volume) |
|---|---|---|---|---|---|
| | Kind of lithium salt | Concentration mol/L | Primary solvent | Secondary solvent | |
| Conventional Example A | $LiPF_6$ | 1.0 | EC | DMC | 50:50 |
| Conventional Example B | $LiPF_6$ | 1.0 | PC | DMC | 50:50 |
| Conventional Example C | $LiPF_6$ | 1.0 | EC | MEC | 50:50 |
| Conventional Example D | $LiPF_6$ | 1.0 | PC | DEC | 50:50 |
| Conventional Example E | $LiPF_6$ | 1.0 | EC | DME | 50:50 |
| Comparative Example A | $LiPF_6$ | 1.0 | 4TFMEC | DME | 50:50 |
| Comparative Example B | $LiPF_6$ | 1.0 | 4TFMEC | THF | 50:50 |
| Comparative Example C | $LiPF_6$ | 1.0 | 4TFMEC | MEC | 50:50 |
| Comparative Example D | $LiPF_6$ | 1.0 | 4TFMEC | MPC | 50:50 |
| Comparative Example E | $LiPF_6$ | 1.0 | 4TFMEC | DMC | 30:70 |
| Comparative Example F | $LiPF_6$ | 1.0 | 4TFMEC | DMC | 60:40 |
| Comparative Example G | $LiPF_6$ | 1.0 | 4TFMEC | DMC+MPC | 45:11:44 |
| Comparative Example H | $LiPF_6$ | 1.0 | 4TFMEC+EC | DMC | 30:15:55 |
| Comparative Example I | $LiPF_6$ | 1.0 | 4TFMEC+EC | DMC+MPC | 30:15:40:15 |
| Comparative Example J | $LiPF_6$ | 1.0 | 5F4FPC | DMC | 50:50 |
| Comparative Example K | $LiPF_6$ | 1.0 | 5FPC | DMC | 50:50 |

In Tables 6 and 7 above, 4TFMEC stands for 2-oxo-4-trifluoromethyl-1,3-dioxalane , EC stands for ethylene carbonate, PC stands for propylene carbonate, 5F4FPC stands for 2-oxo-5-fluoro-4-fluoro-4-methyl-1,3-dioxalane, 5FPC stands for 2-oxo-fluoro-4-methyl-1,3-dioxalane, DMC stands for dimethyl carbonate, MPC stands for methyl propyl carbonate, MBC stands for methyl butyl carbonate, DEC stands for diethyl carbonate, MEC stands for methyl ethyl carbonate, DME stands for 1,2-dimethoxyethane and THF stands for tetrahydrofuran.

The self extinguishing ability of those electrolytes were carried out in the same manner as in the above TEST EXAMPLE 1.

The results are shown in Table 8 below.

TABLE 8

| | After putting out the flame | | After putting out the flame |
|---|---|---|---|
| Example A | fire discontinued | Conventional Example A | fire continued |
| Example B | fire discontinued | Conventional Example B | fire continued |
| Example C | fire discontinued | Conventional Example C | fire continued |
| Example D | fire discontinued | Conventional Example D | fire continued |
| Example E | fire discontinued | Conventional Example E | fire continued |
| Example F | fire discontinued | Comparative Example A | fire continued |
| Example G | fire discontinued | Comparative Example B | fire continued |
| Example H | fire discontinued | Comparative Example C | fire continued |
| Example I | fire discontinued | Comparative Example D | fire continued |
| Example J | fire discontinued | Comparative Example E | fire continued |
| Example K | fire discontinued | Comparative Example F | fire discontinued |
| Example L | fire discontinued | Comparative Example G | fire continued |
| Example M | fire discontinued | Comparative Example H | fire continued |
| Example N | fire discontinued | Comparative Example I | fire continued |
| Example O | fire discontinued | Comparative Example J | fire discontinued |
| Example P | fire discontinued | Comparative Example K | fire discontinued |
| Example Q | fire discontinued | | |
| Example R | fire discontinued | | |
| Example S | fire discontinued | | |
| Example T | fire discontinued | | |
| Example U | fire discontinued | | |
| Example V | fire discontinued | | |
| Example W | fire discontinued | | |
| Example X | fire discontinued | | |
| Example Y | fire discontinued | | |
| Example Z | fire discontinued | | |
| Example AA | fire discontinued | | |

As it is clear from Tables 6, 7 and 8, while the conventional examples A to E corresponding to the electrolytes corresponding to the conventional batteries continued firing even after putting out the burner's flame, the examples A to AA corresponding to wherein the electrolytes to be used for this invention battery self-extinguished in fire immediately after putting out the burner's flame, without firing continuation. Thus the self extinguishing ability of the examples A-AA according to this invention were confirmed.

In the case of the comparative examples A and D wherein other solvents than dimethyl carbonate are used

as the secondary solvent, no self extinguishing ability was observed and the firing continued. In the case of the comparative example G wherein dimethyl carbonate accounts for 20%, the firing continued. Accordingly it is necessary that the volume percentage of dimethyl carbonate should be 40% or more the total of the whole secondary solvents, as shown in the cases of the examples E to P and the examples T to AA. In the case of comparative examples of E, H, I wherein the volume of 2-oxo-4-trifluoromethyl-1,3-dioxalane is 30% of the total volume of the whole solvents, firing continued. Accordingly it is necessary that 2-oxo-4-trifluoromethyl-1,3-dioxalane accounts for 35% or more.

EXAMPLE 3

Positive and negative electrodes were made in the same manner as described in EXAMPLE 1, and the lithium secondary batteries of AA size and with rated capacity of 500 mAh were made by stacking these electrodes through the same separator as the same manner as described in EXAMPLE 1.

Each of the batteries thus manufactured was charged and discharged repeatedly in such a manner that it was charged with 0.2 CmA, at a temperature of 25°C until the battery voltage reached 4.1V, and after it was allowed to stand for ten minutes, it was discharged with the same current as above until the battery voltage became 2.75V, and after it was allowed to stand for ten minutes, the charging was carried out again.

As a result, the charge/discharge characteristics of these batteries was measured. The result thereof is shown in Figure 5.

Figure 5 shows the discharge characteristics at the tenth cycle at which the charge and discharge states are stabilized. The battery characteristics of the examples A to AA according to this invention are almost the same or much better as that of the conventional batteries A and B. Also, it has been found that the batteries of this invention have a sufficiently large discharge capacity even at a comparatively large current. Further, the battery using the comparative example E in which the volume of the primary solvent which is a kind of cyclic esters with a high dielectric constant as the solvent for the electrolyte, is 30% of the total volume of the whole solvents, and the battery using the electrolyte of the comparative example F in which the percentage thereof is 60%, are small in discharge capacity as shown by the examples E, F in Figure 5. This is presumed to be based on such facts that if the volume of the primary solvent is so large as shown in the comparative example, the viscosity of the electrolyte is high and the internal resistance of the battery is large and the polarization at the charge/discharge is increased, and on the other hand, if the volume of the primary solvent is small as shown in the comparative example E, the component of high dielectric constant in the electrolyte is small, and the lithium salt is not sufficiently dissociated to become small in electro-conductivity and the internal resistance of the battery is large and a sufficient charge and discharge reaction is not carried out.

Therefore, the total cyclic esters to be used as the primary solvent comprising which contain at least 2-oxo-4-trifluoromethyl-1,3-dioxalane should be in the range of 35 and 55 vol % thereof.

Further the lithium secondary batteries were produced using the electrolytes corresponding to the example C, the comparative examples J and K in Tables 6 and 7. The same charge/discharge operation as the foregoing was carried out for these batteries.

Figure 6 shows the discharge characteristics at the tenth cycle of the charge/discharge cycles. The battery with the example C wherein this invention exhibits superior characteristics to that of the batteries with the comparative examples J and K. It is clear therefrom that the battery using 2-oxo-4-trifluoromethyl-1,3 dioxalane exhibits more excellent discharge characteristics than the batteries using other kind of fluorine substituted propylene carbonates. The reason for this is considered to be due to the fact that the electro-chemical stability of 2-oxo-4-trifluoromethyl-1,3-dioxalane is higher than the other kinds of fluorine substituted propylene carbonates.

Though in the above EXAMPLE 3, $LiCoO_2$ was used for the positive electrode active material, carbon material capable of electro-chemically occluding and releasing lithium ions was used for the negative active material and $LiPF_6$ was used for the solute just for example, but it have been found that any other materials as enumerated in the above EMBODIMENT 3 can be used to bring about the similar good effects.

As mentioned above, the above EMBODIMENT of this invention can provide a lithium secondary battery which is especially excellent in battery and is safe with self extinguishing ability.

EMBODIMENT 4

Next, a further another EMBODIMENT of this invention for providing a lithium secondary battery with high safety and improved discharge characteristics particularly at a low temperature will be described as follows:

A solvent to be used for organic electrolyte of the lithium secondary battery comprises a solvent mixture of cyclic esters as the primary solvent and chain esters as the secondary solvent, and the primary solvent of the solvent mixture comprises at least 2-oxo-4-trifluoromethyl-1,3-dioxalane and the secondary solvent thereof comprises at least one kind of dimethyl carbonate and methyl ethyl carbonate, and also the mixing ratio thereof is defined as follows:

For other cyclic esters used for the primary solvent and other chain esters used for the secondary solvent, at

least one kind of those enumerated in the mentioned EMBODIMENT 1 can be used and can be mixed in such a manner as in the above mentioned EMBODIMENT 2.

According to this invention, if the volume of the primary solvent is 35 to 55% of the total volume of the whole solvents and that of the secondary solvent is 45 to 65% thereof , and the volume of 4-trifluoromethyl ethylene carbonate is 35%-55% thereof and 5 the volume of dimethyl carbonate is 40 to 80% of the secondary solvent, and, the total volume of diethyl carbonate and methyl ethyl carbonate is 20 to 60% of the total volume of the whole secondary solvents.

For lithium salts to be used for the solute for an organic electrolytes are not necessarily limited, as long as they are capable of dissociating in the organic solvent and releasing lithium ions, any kind of those enumerated in the EMBODIMENT 1 can be selectively used.

For the positive electrode active materials, any kind of those as enumerated in EMBODIMENT 1 can be selectively used. As mentioned above, the lithium containing salts with the structure of $\alpha$-$NaCrO_2$ such as $LiCoO_2$, $LiNiO_2$, $LiMnO_2$ etc. or $LiMn_2O_4$ or the 20 like are preferable since the high discharge voltage is high and electrode-chemical stability is excellent by using them, as mentioned above.

For the negative active materials, any kind of those selected out of those as enumerated in the foregoing EMBODIMENT can be used.

As can be seen in the foregoing EXAMPLES 3, 2-oxo-4-trifluoromethyl-1,3-dioxalane exhibits especially excellent self extinguishing ability when it is mixed with dimethyl carbonate, though its mechanism is not clear, and, as explained in detail above if all hydrogens of the methyl group of propylene carbonates are substituted with fluorines, electron donating from this portion becomes less, and electro- chemical stability is increased, and, as a result, it prevents or depressed the decomposition thereof during the charge and discharge cycles and provides the batteries with excellent charge and discharge characteristics.

However, as a result of repeated tests, it has been found that the solvent mixture comprising 2-oxo-4-trifluoromethyl-1,3-dioxalane and dimethyl carbonate is poor in the battery performance at a low temperature.

On the assumption that when addition of any solvent with relatively high electrode-conductivity even at a lower temperature may improve the battery performance, various tests were carried out. As a result, it has been found through repeated tests that when dimethyl carbonate is added thereto, the battery performance at a lower temperature can be improved.

It has also been found that the volume of 2-oxo-4-trifluoromethyl-1,3-dioxalane used as the primary solvent should be in the range of 35-55% of the total volume of the whole solvents. If it is less than 35%, the self extinguishing ability is decreased. and if it is more than 55%, the internal resistance is increased, and, the battery performance is decreased.

For other cyclic esters can be mixed therewith as the primary solvent. These cyclic esters have high dielectric constant and have a function to dissociate the lithium salt to be used as a solute. The volume percentage of the primary solvent comprising at least 2-oxo-4-trifluoromethyl-1,3-dioxalane should be in the range of 35%-55% volume of the whole solvents. If it is less than 35%, it makes it impossible to sufficiently dissociate the lithium salt, so that the internal resistance is increased and it becomes difficult to take out a sufficient capacity. If it is more than 55%, the viscosity is heightened and the mobility of lithium ions is decreased and the internal resistance is increased.

On the other hand, the secondary solvent comprising chain esters prepared by mixing at least one selected from the group of diethyl carbonate and methyl ethyl carbonate with dimethyl carbonate brings about high electrochemically stability, and is necessary to lower the high viscosity of the primary solvent and increase the electro-conductivity, but is low in dielectric constant and has a poor function to dissociate lithium salts. The volume of the secondary solvent should be in the range of 45-65 vol% of the total volume of the whole solvents. If it is less than 45 %, a sufficient effect of decreasing the viscosity can not be obtained, and it causes to the volume of the primary solvent , that is, 2-oxo-4-trifluoromethyl-1,3-dioxalane, to decrease to less than 35 %, resulting in lowering the dissociation degree of the lithium salt and increasing in the internal resistance.

For the volume of dimethyl carbonate should be in the range of 40-80% of the total volume of the whole secondary solvents. The volume of at least one kind selected from the group of methyl ethyl carbonate and diethyl carbonate in the secondary solvent should be in the range of 20 to 60% of total volume of the whole secondary solvents. If the volume of dimethyl carbonate is less than 40%, it does not exhibit the self extinguishing ability. If the total volume of methyl ethyl carbonate, and diethyl ethyl carbonate is less than 20%, the improvement in the battery performance at a low temperature can not be obtained sufficiently.

TEST EXAMPLE 4

The following tests were carried out to ascertain the self extinguishing ability of the electrolyte to be used for this invention battery.

Out of lithium salts, $LiPF_6$ was used as a solute, and the electrolytes were prepared by dissolving it in various solvent mixtures as listed in Tables 5, 9 and 10 as shown, so as to adjust the solute concentration to become 1 mol/l.

The mixing ratio is shown by volume.

TABLE 9

| | Lithium salt | | Kind of solvent mixture | | |
|---|---|---|---|---|---|
| | Kind of lithium salt | Concentration mot/L | Primary solvent | Secondary solvent | Mixing ratio (by volume) |
| Example A | $LiPF_6$ | 1.0 | 4TFMEC | DMC+MEC | 35:26:39 |
| Example B | $LiPF_6$ | 1.0 | 4TFMEC | DMC+DEC | 35:39:26 |
| Example C | $LiPF_6$ | 1.0 | 4TFMEC | DMC+MEC | 35:52:13 |
| Example D | $LiPF_6$ | 1.0 | 4TFMEC | DMC+MEC | 45:22:33 |
| Example E | $LiPF_6$ | 1.0 | 4TFMEC | DMC+MEC | 45:33:22 |
| Example F | $LiPF_6$ | 1.0 | 4TFMEC | DMC+MEC | 45:44:11 |
| Example G | $LiPF_6$ | 1.0 | 4TFMEC | DMC+MEC | 50:20:30 |
| Example H | $LiPF_6$ | 1.0 | 4TFMEC | DMC+MEC | 50:30:20 |
| Example I | $LiPF_6$ | 1.0 | 4TFMEC | DMC+MEC | 50:40:10 |
| Example J | $LiPF_6$ | 1.0 | 4TFMEC | DMC+MEC | 55:18:27 |
| Example K | $LiPF_6$ | 1.0 | 4TFMEC | DMC+MEC | 55:27:18 |
| Example L | $LiPF_6$ | 1.0 | 4TFMEC | DMC+MEC | 55:36: 9 |
| Example M | $LiPF_6$ | 1.0 | 4TFMEC | DMC+DEC | 35:26:39 |
| Example N | $LiPF_6$ | 1.0 | 4TFMEC | DMC+DEC | 50:30:20 |
| Example O | $LiPF_6$ | 1.0 | 4TFMEC | DMC+DEC | 35:52:13 |
| Example P | $LiPF_6$ | 1.0 | 4TFMEC | DMC+DEC+MEC | 35:26:20:19 |
| Example Q | $LiPF_6$ | 1.0 | 4TFMEC | DMC+DEC+MEC | 35:52: 6: 7 |
| Example R | $LiPF_6$ | 1.0 | 4TFMEC | DMC+DEC+MEC | 55:18:14:13 |
| Example S | $LiPF_6$ | 1.0 | 4TFMEC | DMC+DEC+MEC | 55:36: 4: 5 |
| Example T | $LiPF_6$ | 1.0 | 4TFMEC | DMC+MEC+MPC | 35:26:13:26 |
| Example U | $LiPF_6$ | 1.0 | 4TFMEC | DMC+DEC+MEC+MPC | 35:26: 6: 7:26 |
| Example V | $LiPF_6$ | 1.0 | 4TFMEC | DMC+MEC+MPC | 55:18:9:18 |
| Example W | $LiPF_6$ | 1.0 | 4TFMEC | DMC+DEC+MEC+MPC | 55:18: 5: 4:26 |
| Example X | $LiPF_6$ | 1.0 | 4TFMEC+EC | DMC+MEC | 35:20:18:27 |
| Example Y | $LiPF_6$ | 1.0 | 4TFMEC+EC | DMC+DEC+MEC | 35:20:18:14:13 |
| Example Z | $LiPF_6$ | 1.0 | 4TFMEC+EC | DMC+MEC+MPC | 35:20:18:9:18 |
| Example AA | $LiPF_6$ | 1.0 | 4TFMEC+EC | DMC+DEC+MEC+MPC | 35:20:18:5:4:26 |

TABLE 10

| | Lithium salt | | Kind of solvent mixture | | |
|---|---|---|---|---|---|
| | Kind of lithium salt | Concentration mol/L | Primary solvent | Secondary solvent | Mixing ralio (by volume) |
| Conventional Example A | $LiPF_6$ | 1.0 | EC | DMC | 50:50 |
| Conventional Example B | $LiPF_6$ | 1.0 | PC | DMC | 50:50 |

TABLE 10 (continued)

| | Lithium salt | | Kind of solvent mixture | | |
|---|---|---|---|---|---|
| | Kind of lithium salt | Concentration mol/L | Primary solvent | Secondary solvent | Mixing ralio (by volume) |
| Conventional Example C | $LiPF_6$ | 1.0 | EC | MEC | 50:50 |
| Conventional Example D | $LiPF_6$ | 1.0 | PC | DEC | 50:50 |
| Conventional Example E | $LiPF_6$ | 1.0 | EC | DME | 50:50 |
| Comparative Example A | $LiPF_6$ | 1.0 | 4TFMEC | DME | 50:50 |
| Comparative Example B | $LiPF_6$ | 1.0 | 4TFMEC | THF | 50:50 |
| Comparative Example C | $LiPF_6$ | 1.0 | 4TFMEC | MEC | 50:50 |
| Comparative Example D | $LiPF_6$ | 1.0 | 4TFMEC | DEC+MEC | 50:25:25 |
| Comparative Example E | $LiPF_6$ | 1.0 | 4TFMEC | DMC | 50:50 |
| Comparative Example F | $LiPF_6$ | 1.0 | 4TFMEC | DMC+MPC | 50:30:20 |
| Comparative Example G | $LiPF_6$ | 1.0 | 4TFMEC | DMC+MEC | 30:42:28 |
| Comparative Example H | $LiPF_6$ | 1.0 | 4TFMEC | DMC+MEC | 60:24:16 |
| Comparative Example I | $LiPF_6$ | 1.0 | 4TFMEC | DMC+MEC | 50:10:40 |
| Comparative Example J | $LiPF_6$ | 1.0 | 4TFMEC | DMC+MEC | 50:45:5 |
| Comparative Example K | $LiPF_6$ | 1.0 | 4TFMEC | DMC+MEC+MPC | 50:10:5:35 |
| Comparative Example L | $LiPF_6$ | 1.0 | 4TFMEC+EC | DMC+MEC | 35:25:24:16 |
| Comparative Example M | $LiPF_6$ | 1.0 | 5F4FPC | DMC+MEC | 50:30:20 |
| Comparative Example N | $LiPF_6$ | 1.0 | 5FPC | DMC+MEC | 50:30:20 |

In Tables 9 and 10, 4TFMEC stands for 2-oxo-4-trifluoromethyl-1,3-dioxolane , EC stands for ethylene carbonate, PC stands for propylene carbonate, 5F4FPC stands for 2-oxo-5-fluoro-4-fluoro-4-methyl-1,3-dioxolane, 5FPC stands for 2-oxo-5-fluoro-4-methyl-1,3-dioxolane, DMC stands for dimethyl carbonate, MEC stands for methyl ethyl carbonate, DEC stands for diethyl carbonate, MPC stands for methyl propyl carbonate, MPC stands for methyl propyl carbonate, DME stands for 1,2- dimethoxyethane, THF stands for tetrahydrofuran.

The extinguishing ability of the electrolyte thus prepared was tested for evaluation by such a manner that is the same as carried out in the foregoing TEST EXAMPLE 1.

The following Table 11 shows the results thereof.

TABLE 11

| | After putting out the flame | | After putting out the flame |
|---|---|---|---|
| Example A | fire discontinued | Conventional Example A | fire continued |
| Example B | fire discontinued | Conventional Example B | fire continued |
| Example C | fire discontinued | Conventional Example C | fire continued |
| Example D | fire discontinued | Conventional Example D | fire continued |
| Example E | fire discontinued | Conventional Example E | fire continued |
| Example F | fire discontinued | Comparative Example A | fire continued |
| Example G | fire discontinued | Comparative Example B | fire continued |
| Example H | fire discontinued | Comparative Example C | fire continued |
| Example I | fire discontinued | Comparative Example D | fire continued |
| Example J | fire discontinued | Comparative Example E | fire discontinued |
| Example K | fire discontinued | Comparative Example F | fire discontinued |
| Example L | fire discontinued | Comparative Example G | fire continued |
| Example M | fire discontinued | Comparative Example H | fire discontinued |
| Example N | fire discontinued | Comparative Example I | fire continued |
| Example O | fire discontinued | Comparative Example J | fire discontinued |
| Example P | fire discontinued | Comparative Example K | fire continued |
| Example Q | fire discontinued | Comparative Example L | fire discontinued |
| Example R | fire discontinued | Comparative Example M | fire discontinued |
| Example S | fire discontinued | Comparative Example N | fire discontinued |
| Example T | fire discontinued | | |
| Example U | fire discontinued | | |
| Example V | fire discontinued | | |
| Example W | fire discontinued | | |
| Example X | fire discontinued | | |
| Example Y | fire discontinued | | |
| Example Z | fire discontinued | | |
| Example AA | fire discontinued | | |

As it is clear from Table 11, while the conventional examples A to E using the electrolytes used in the conventional batteries continued firing even after putting out the burner's flame, the examples A to AA using the electrolytes to be used for batteries of this invention extinguished in the fire immediately after putting out the burner's flame, without firing continuation. Thus the self extinguishing abilities of the examples of this invention were confirmed.

The comparative examples of A to D using others than dimethyl carbonate as the secondary solvent has no self extinguishing ability and continued firing. The comparative examples I, K wherein the volume of dimethyl carbonate accounts for 20% of the total volume of the secondary solvents continued firing. Accordingly, as indicated in examples A, D, G, J, M, P, R and T to Y, it is necessary for the self extinguishing ability that the volume of dimethyl carbonate is 40% or more thereof. The comparative examples G wherein the volume percentage of 2-oxo-4-trifluoromethyl-1,3-dioxolane is 30% of the total volume of the whole solvents, the firing continued. Accordingly it has been found that 2-oxo-4-trifluoromethyl-1,3-dioxolane should be 35% or more thereof.

EXAMPLE 4

Positive and negative electrodes were produced in such a manner described in the EXAMPLE 1. These electrodes were stacked one upon another through the same separator as used in the foregoing EXAMPLE 1 to assemble a lithium secondary battery of a AA size and with rated capacity of 500 mAh AA.

The electrolytes corresponding to the examples A to AA, the conventional examples A and B and the comparative examples G, H, L as shown in Tables 9 and 10 were poured in the respective batteries thus produced above.

Each of the batteries thus manufactured was charged and discharged repeatedly in such a manner that it was charged with 0.2 CmA, at a temperature of 25 °C until the battery voltage reached 4.1V, and after it was allowed to stand for ten minutes, it was discharged with the same current as above until the battery voltage became 2.75V, and after it was allowed to stand for ten minutes, the charging was carried out again.

After the repetition of such charge/discharge cycles, discharge characteristics thereof was measured. The results thereof are shown in Figure 7.

Figure 7 shows the discharge characteristics thereof at the tenth cycle at which charge/discharge states are stabilized. The discharge characteristics of the batteries of examples A to AA according to this invention are similar, or much better to that of the conventional batteries of comparative example A and B.

The battery using the electrolyte of the comparative example G in which the volume of the primary solvent comprising the cyclic ester, which is a component having a high dielectric constant as a solvent for the electrolyte, is 30% of the total volume of the whole solvents, and the batteries using the electrolytes of the comparative examples H and L wherein the volume percentage of the primary solvent is 60% thereof are small in the discharge capacity as shown in the comparative examples G, H, L. This is considered to be caused by the facts that, if the volume of the primary solvent is so large as shown in the comparative examples H, L, the viscosity of the electrolyte is increased, and the internal resistance of the battery is increased, and the polarization at the time of the charge and discharge becomes large, and on the other hand, if the volume of the primary solvent is so small as shown in the comparative example G, the solvent with a high dielectric constant in the electrolyte is small, and the lithium salt is not sufficiently dissociated, and the electro-conductivity of the electrolyte is small and further the internal resistance thereof becomes large and a sufficient charge/discharge reaction is not achieved.

Therefore, it is necessary that the volume of the primary solvent comprising at least 2-oxo-4-trifluoromethyl-1,3-dioxolane should be in the range of 35 and 55 % of the total volume of the whole solvents.

Further, the lithium secondary batteries using the electrolytes of the example H, the comparative examples of M and N as shown in Table 9 and 10 were produced, and the charge and discharge tests were carried out for these batteries in such a manner as described in the foregoing ones.

Figure 8 shows the discharge characteristics at the tenth of cycle of the charge/discharge cycles. The example H of this invention exhibits superior discharge characteristics to that of the comparative examples M and N. Thus it is clear therefrom that the batteries using 2-oxo-4-trifluoromethyl-1,3-dioxalane exhibit excellent discharge characteristics as compared with the other fluorine substituted propylene carbonates than that. This is considered to be due to the facts that the electro-chemical stability of 2-oxo-4-trifluoromethyl 1,3-dioxalane is higher than that of other fluorine substituted propylene carbonates.

Further, each of the batteries using the examples A to AA, the conventional examples A to D and the comparative examples E, F and J was carried out as follows:

Each of the batteries thus manufactured was charged and discharged repeatedly in such a manner that it was charged with 0.2 CmA, at a temperature of 25°C until the battery voltage reached 4.1V, and after it was allowed to stand for ten minutes, it was discharged with the same current as above at the temperature of -20°C as above until the battery voltage became 2.75V, and after it was allowed to stand for ten minutes, the charging was carried out again. The following Table 12 shows the results thereof.

TABLE 12

| | Discharge capacity rate (%) | | Discharge capacity rate (%) |
|---|---|---|---|
| Example A | 80 | Conventional Example A | 56 |
| Example B | 79 | Conventional Example B | 62 |
| Example C | 76 | Conventional Example C | 60 |
| Example D | 82 | Conventional Example D | 43 |
| Example E | 81 | Comparative Example E | 34 |
| Example F | 78 | Comparative Example F | 21 |
| Example G | 77 | Comparative Example J | 44 |
| Example H | 77 | | |
| Example I | 75 | | |
| Example J | 75 | | |
| Example K | 75 | | |
| Example L | 73 | | |
| Example M | 74 | | |
| Example N | 75 | | |
| Example O | 72 | | |
| Example P | 74 | | |
| Example Q | 75 | | |
| Example R | 73 | | |
| Example S | 73 | | |
| Example T | 75 | | |
| Example U | 73 | | |
| Example V | 72 | | |
| Example W | 72 | | |
| Example X | 70 | | |
| Example Y | 71 | | |
| Example Z | 70 | | |
| Example AA | 70 | | |

As is clear from Table 12, the batteries of this invention A to AA using the electrolyte A to AA as shown in Tables 9 and 10, are 70% or more in the discharge capacity rate while the conventional batteries A to D using the conventional example A to D are 43-62% in the discharge capacity rate. Thus, it has been found that there can be obtained the batteries using the electrolytes of this invention can be much improved in the discharge capacity at a low temperature, that is, the low temperature characteristics, as compared with the conventional batteries using the conventional electrolytes.

Further, as can be seen in the cases of the comparative batteries E, F, J using the electrolytes of the comparative examples E, F, J in the cases of the comparative examples E, F wherein methyl ethyl carbonate(MEC) is not

mixed and the case of the comparative example J wherein the volume of methyl ethyl carbonate is 10% of the secondary solvent, the discharge capacities thereof are as low as 21 to 34% and 44%, respectively, resulting in no effect on the temperature characteristics.

While in the above examples, $LiCoO_2$ was used for the positive electrode active material and carbon materials capable of electro-chemically occluding and releasing lithium ions was used for the negative electrode and $LiPF_6$ was used for the solute just for example, other materials as listed in the above also can be used to obtain similar effects.

As mentioned above, this invention can provide lithium secondary battery with not only high performance, self extinguishing ability and high safety, but also excellent charge/discharge characteristics in the low temperature zone.

EMBODIMENT 5

Next, a further another EMBODIMENT of this invention for providing a lithium secondary battery which is improved in the charge and discharge efficiency of the negative electrode at the initial stage of the charge and discharge cycles and increased in the energy density thereof in case of using as the negative electrode a carbon materials capable of electro-chemically occluding and releasing lithium ions such as burned coke powder, artificial black lead, etc. will be described as follows:

To achieve this object, this invention uses the negative electrode comprising any kind of carbon materials and the solvent for an organic electrolyte comprising at least one kind of fluorine-substituted propylene carbonates, that is, propylene carbonates in which at least one hydrogen is substituted with fluorine(s). Such fluorine-substituted propylene carbonates are largely effective in suppression the reactions between the negative carbon materials and electrolytes.

The inventors consider that with the lithium secondary battery using carbon materials as the active material for the negative electrode, the reason why the charge and discharge efficiency is lower at the initial stage of the charge/discharge cycles is due to the irreversible reactions taking place between the solvent in the electrolyte and chemically active points scattered over the negative carbon materials.

Further the inventors presume that with lithium secondary battery of this kind, the reactivity of the organic electrolyte is able to decrease if the solvent is halogenated, so that the reaction between negative carbon materials and solvents can greatly be suppressed.

The reasons for selecting fluorine-compounds among halogenated organic solvents are considered to be caused by the facts:(1) overwhelmingly stronger bonding forces between the C-F bond than other halogenated ones, so that the possibility of the decomposition thereof is very small, (2) the radius of fluorine atom is similar to that of hydrogen, so that it has closest in structure and size to the solvent not halogenated and (3) the toxicity of the fluorinated organic solvents to human body is extremely low as compared with the other halogenated organic solvents, and is high in the human safety.

The reason for selecting cyclic carbonate ester structure among the fluorinated organic solvent is due to the fact that cyclic carbonate esters represented by ethylene carbonate or propylene carbonate have been conventionally used as solvents for an organic electrolyte used for the conventional lithium secondary battery, but when they are fluorinated, there is obtained such an organic solvent that has a high dielectric constant inherent to cyclic carbonate esters not fluorinated and also has suppressing effect on the reactions between the negative carbon materials and the solvents for the electrolyte.

The reason for selection of fluorine substituted propylene carbonate structure among the fluorinated organic solvents having cyclic carbonic esters is due to the fact that in general fluoridation of organic solvents is involved in rise in a solid point, and, if ethyl carbonate is fluorinated, it becomes too high in the solidifying point, and the side chain of the carbonate esters are longer than that of butyl carbonate the viscosity of electrolyte is rapidly increased and the chemical and electro-chemical stability is lowered, and further if the solvents having unsaturated bond(s) such as vinylene carbonates is lower in electro-chemical stability than those not having unsaturated bond(s).

Thus, the fluorine substituted propylene carbonates having the action of suppressing the reaction between the negative carbon material and the electrolyte are become lower in viscosity than propylene carbonate as a result of introduction of fluorine(s) into the intermolecules thereof. However, they belong to the group of the solvents with high viscosity from the point of view of its use as a solvent for an electrode used for a lithium secondary battery.

Therefore, it is preferable to use them by mixing them with any kind of low viscous solvents to obtain a solvent mixture which is lower in viscosity as compared with the case of using them alone, and when such a solvent mixture there is used, the mobility of lithium ions in the electrolyte is larger than the case of using the fluorine substituted propylene carbonates alone, and also the electro-conductivity is improved and the polarization at the time of charging and discharging can be decreased, and thus there is obtained a preferable lithium secondary battery which has the restraining or suppressing the reaction with the negative active materials, and is excellent in the high rate charge/discharge characteristics also.

Further, as a result of studying the combination of the fluorine substituted propylene carbonates and various

solvents having a low viscosity for lowering the viscosity of the former, it has been found that, with the lithium secondary battery of this kind, when a solvent for an organic electrolyte is a mixed solvent comprising at least one kind of fluorine substituted propylene carbonates and at least one selected from a group of dimethyl carbonate, methyl ethyl carbonate, diethyl carbonate, methyl ethyl carbonate, diethyl carbonate, methyl propyl carbonate, and methyl butyl carbonate, there can be brought about a lithium secondary battery which has such two good characteristics of the effect of suppressing the reaction with the negative carbon materials and the effect of exhibiting a high rate charge/discharge characteristics at a high level.

The reason why the lithium secondary battery of this kind using the above -mentioned mixed solvent, in other words, solvent mixture, has a better charge/discharge characteristics than the battery of this kind using a mixed solvent comprising at least one kind of fluorine substituted propylene carbonates and any kind of the other low viscous solvents is owing to the fact that any kind selected from the group of dimethyl carbonate, methyl ethyl carbonate, diethyl carbonate, methyl ethyl carbonate, diethyl carbonate, methyl propyl carbonate, and methyl butyl carbonate is higher in stability to radicals generated in the battery, and more difficult to decompose than the other low viscous solvents.

When any one kind selected from the group of dimethyl carbonate, methyl ethyl carbonate, diethyl carbonate, methyl propyl carbonate and methyl butyl carbonate can be used alone to be mixed with any kind of fluorine substituted propylene carbonates, lowering of the viscosity of the electrode can be effected, but it is of course that there is no problem even when two kinds or more thereof are used to be mixed therewith, the lowering effect on the viscosity thereof can be achieved, because these secondary solvents are similar to each other in chain structure.

Thus, when there is used in the lithium secondary battery of this kind any of solvent mixtures of fluorine substituted propylene carbonates and the other solvents than fluorine substitutes propylene carbonates, the reaction between the electrolyte and negative carbon materials can be deppressed even when the mixing ratio of the above solvent mixture is not limited. ed.

From the stand point of charge and discharge characteristics of a lithium secondary battery, various tests were carried out to determine the optimum ratios of the solvent mixtures wherein fluorine substituted propylene carbonates are used as the primary solvent and the above listed five different kinds of solvents are used as the secondary solvent.

As a result, it has been found that, when there is met such conditions that the volume percentage of the primary solvent comprising at least one kind of fluorine substituted propylene carbonates is 30% of the total volume of the whole solvents, and the volume of the secondary solvent comprising at least one kind selected from the group of dimethyl carbonate, methyl ethyl carbonate, diethyl carbonate methyl propyl carbonate and methyl butyl carbonate accounts for 40% to the total volume of the whole solvents, and the total volume of the solvent mixture of the primary solvent and the secondary solvent accounts for 80% of the total volume of the whole solvents, there is brought about especially large effect in suppressing the reaction between the negative materials and the organic electrolyte, as compared with the lithium secondary battery of this kind using the conventional electrolytes, and consequently there can be obtained a lithium secondary battery having an especially larger energy density and especially excellent high rate charge/discharge characteristics, as compared with the lithium secondary battery of this kind using the conventional type electrolyte.

The reason why the volume of the primary solvent ought to be 30% or more of the total volume of the whole solvents is because there can be brought about with this condition a large effect in suppressing of the reaction between the negative carbon material and the organic electrolyte.

The reason why the total volume of the whole secondary solvents ought to be 40% or more of the whole volume of the total solvents is because there can be brought about with this condition an especially high electroconductivity and especially high rate charge and discharge characteristics.

The reason why the total volume of primary and secondary solvents ought to be 80% or more of the total volume of the whole solvents for the organic electrolyte is because if the volume of the other solvent than the primary and secondary solvents is less than 20% of the total volumes of the whole solvents for the organic electrolyte is because if the volume of the other solvent than the primary and secondary solvents is less than 30% of the total volumes of the total solvents, it does not have any bad influence, and there can be surely obtained a high charge/discharge efficiency.

The solutes for the electrolyte and positive active materials to be used for this invention can be selected from the materials as enumerated in the EMBODIMENT 1.

EXAMPLE 5

Next, a counter electrode and a reference electrode made of metallic lithium were put, in the combination with the foregoing test negative electrode using as a working electrode in a beaker to make a three polar beaker type cell.

Organic electrolytes of the example A to C and the conventional example A described in Table 13 below were poured to the cells as produced as the above.

TABLE 13

| | Lithium salt | | Kind of solvent for electrolyte |
|---|---|---|---|
| | Kind of lithium salt | Concentration mol/L | Primary solvent |
| Example A | $LiPF_6$ | 1.0 | 3F4FPC |
| Example B | $LiPF_6$ | 1.0 | 3FPC |
| Example C | $LiPF_6$ | 1.0 | 4FPC |
| Conventional Example A | $LiPF_6$ | 1.0 | PC |

In Table 13, 5F4FPC stands for 2-oxo-5-fluoro-4-fluoro-4-methyl-1,3-dioxalane, 5FPC stands for 2-oxo-5-fluoro-4-methyl-1,3-dioxalane, 4FPC stands for 2-oxo-4-fluoro-4-methyl-1,3-dioxalane and PC stands for propylene carbonate.

Using these cells, each cell was charged and discharged in such a manner that it was charged with a current density of 0.1 mA/cm$^2$, at temperature of 25°C to occlude lithium ions until the electric potential of the test negative electrode became 0V to the reference electrode, and, after it was allowed to stand for 10 minutes, it was discharged with the same current density to release lithium ions until the electric potential of the test negati ve electrolyte became 1.5V to the reference electrode.

Table 14 below shows the charge and discharge efficiency of the cells using the examples A to C and the conventional example A.

TABLE 14

| | Charge/discharge efficiency (%) |
|---|---|
| Example A | 92 |
| Example B | 91 |
| Example C | 90 |
| Conventional Example A | 63 |

It is clear from the above-mentioned Tables 13 and 14 that the charge and discharge efficiency of the cells using the test negative electrode made of burned coke material is increased when using the electrolytes of the examples A to C according to this invention in comparison with the case of using the electrolyte of the conventional example A.

EXAMPLE 6

The negative electrode was produced in the same manner as the foregoing EXAMPLE 5 except for that artificial black lead was used instead of burned coke powder. The three polar beaker type cells were made in the same manner as described in the forgoing EXAMPLE 5 with the exception of use of artificial black lead as a working electrode.

Using these cells, each cell was charged and discharged in such a manner that it was charged with a current density of 0.1mA/cm$^2$, at temperature of 25°C to occlude lithium ions until the electric potential the test negative electrode became 0V to the reference electrode, and, after it was allowed to stand for 10 minutes, it was discharged with the same current density to release lithium ions until the electric potential of the test negative electrolyte became 1.5V to the reference electrode.

Table 15 below shows the efficiency of the cells using the examples A to C and the conventional example A.

TABLE 15

| | Charge/discharge efficiency (%) |
|---|---|
| Example A | 87 |
| Example B | 85 |
| Example C | 85 |
| Conventional Example A | - |

It is clear from Table 15 that in the cell using the conventional example A as the electrolyte, almost all of

charging electric quantity were spent for the reaction between the electrolyte and carbon material of the negative electrode, so that the electric capacity could not be taken out by discharging. Whereas, in the cells using the examples A to C as the electrolyte, charge and discharge becomes possible, and even in the case of artificial black lead which has a higher reactivity with the electrolytes, the use of fluorine substituted propylene carbonates is very effective in suppressing the reaction between the electrolytes and carbon materials.

EXAMPLE 7

Using these cells, each cell was charged and discharged in such a manner that it was charged with a current density of 1.0 mA/cm$^2$, at temperature of 25°C to occlude lithium ions until the electric potential the test negative electrode became 0V to the reference electrode, and, after it was allowed to stand for 10 minutes, it was discharged with the same current density to release lithium ions until the electric potential of the test negative electrolyte became 1.5V to the reference electrode.

The results are shown in Table 15 below.

TABLE 16

| | Lithium salt | | Kind of solvent for electrolyte | | Mixing ratio (by volume) |
|---|---|---|---|---|---|
| | Kind of lithium salt | Concentration mol/L | Primary solvent | Secondary solvent | |
| Example D | $LiPF_6$ | 1.0 | 5F4FPC | DMC | 50:50 |
| Example E | $LiPF_6$ | 1.0 | 5F4FPC | MEC | 50:50 |
| Example F | $LiPF_6$ | 1.0 | 5F4FPC | DEC | 50:50 |
| Example G | $LiPF_6$ | 1.0 | 5F4FPC | MPC | 50:50 |
| Example H | $LiPF_6$ | 1.0 | 5F4FPC | MBC | 50:50 |
| Example I | $LiPF_6$ | 1.0 | 5F4FPC | DME | 50:50 |
| Example J | $LiPF_6$ | 1.0 | 5F4FPC | THF | 50:50 |
| Example K | $LiPF_6$ | 1.0 | 5F4FPC | EBB | 50:50 |
| Example L | $LiPF_6$ | 1.0 | 5F4FPC | BBC | 50:50 |
| Conventional Example B | $LiPF_6$ | 1.0 | PC | DMC | 50:50 |
| Conventional Example C | $LiPF_6$ | 1.0 | PC | DEC | 50:50 |

In Table 16 above 5F4FPC stands for 2-oxo-5-fluoro-4-fluoro-4-methyl-1,3-dioxalane, PC stands for propylene carbonate, DMC stands for dimethyl carbonate, MEC stands for methyl ethyl carbonate, DEC stands for diethyl carbonate, MPC stands for methyl propyl carbonate, MBC stands for methyl butyl carbonate, DME stands for dimethoxyethane, THF stands for tetrahydrofuran, EBC stands for ethyl butyl carbonate, DBC stands for dibutyl carbonate. Table 17 below shows the charge and discharge efficiency of the cells using the examples D to L and the conventional examples B and C.

TABLE 17

| | Charge/discharge efficiency (%) |
|---|---|
| Example D | 87 |
| Example E | 84 |
| Example F | 85 |
| Example G | 83 |
| Example H | 83 |
| Example I | 76 |

TABLE 17 (continued)

| | Charge/discharge efficiency (%) |
|---|---|
| Example J | 73 |
| Example K | 76 |
| Example L | 78 |
| Conventional Example B | 69 |
| Conventional Example C | 67 |

It has been proved that the charge/discharge efficiency of the test negative electrode in the case of using the electrodes of the examples D to L according to this invention is well over that of the negative electrodes in the case of using the electrodes of the conventional examples B and C, so that even if any kind of fluorine substituted propylene carbonates is mixed with any of the various kinds of low viscous solvents, the effect of suppressing the reaction between the burned coke material and the electrolyte is maintained, and there can be obtained a large charge and discharge efficiency as compared with the case of using the conventional electrolytes.

As can be seen from the comparison between the group of the examples D to H and the group of the example I and L, the charge and discharge efficiency of the negative electrode shows such a high value as 80% or more when any solvent selected from the group of dimethyl carbonate, methyl ethyl carbonate, diethyl carbonate, methyl propyl carbonate and methyl butyl carbonate is used as the secondary solvent with a low viscosity, and there can be obtained an especially high charge and discharge efficiency in comparison with the case where the other, esters or chain carbonate with a large molecule weight are used as the low viscous solvents.

Further when the foregoing results are compared with those in the case of EXAMPLE 5, it can be seen therefrom that the high charge/discharge characteristic can be obtained even when the charge/discharge is conducted with such a current density as high as 10 times, and from this result it can be seen that the solvent mixture of fluorine substituted propylene carbonates and the foregoing low viscous solvents well deppresses controls the reaction between the burned carbon materials, and there can be obtained an organic electrolyte which is also excellent in a high rate charge/discharge characteristics of the electrolytes.

EXAMPLE 8

Using the three-polar beaker type cells same as in the foregoing EXAMPLE 6, the organic electrolytes of the examples D to L and the conventional examples B and C described in Table 16 below were poured therein.

Using these cells, each cell was charged and discharged in such a manner that it was charged with a current density of $0.1mA/cm^2$, at temperature of 25°C to occlude lithium ions until the electric potential the test negative electrode became 0V to the reference electrode, and, after it was allowed to stand for 10 minutes, it was discharged with the same current density to release lithium ions until the electric potential of the test negative electrolyte became 1.5V to the reference electrode.

Table 18 below shows the charge and discharge of the cells using the example D to L and the conventional example Band C.

TABLE 18

| | Charge/discharge efficiency (%) |
|---|---|
| Example D | 84 |
| Example E | 81 |
| Example F | 81 |
| Example G | 80 |
| Example H | 77 |
| Example I | 58 |
| Example J | 48 |
| Example K | 66 |
| Example L | 61 |

TABLE 18 (continued)

| | Charge/discharge efficiency (%) |
|---|---|
| Conventional Example B | - |
| Conventional Example C | - |

It is clear from Table 18 that in the cells using the conventional examples B and C as the electrolyte, almost all of charging electric quantity were spent for the reaction between the electrolyte and the carbon material of the negative electrode, and the electric capacity could not be taken out by discharging. Whereas, in the cells using the examples D to L as the electrolyte, charge and discharge becomes possible, and even in the case of using artificial black lead which has a higher reactivity with the electrolytes, the use of fluorine substituted propylene carbonates is very effective in suppressing the reaction between the electrolytes and carbon materials.

As can be seen from the comparison between the group of the examples D to H and the group of the examples I and L, the charge and discharge efficiency of the negative electrode shows a high value of 80% or more when any solvent selected from the group of dimethyl carbonate, methyl ethyl carbonate, diethyl carbonate, methyl propyl carbonate and methyl butyl carbonate is used as the low viscous with a low viscosity, and there can be obtained an especially high charge and discharge efficiency in comparison with the case where the other, esters or chain carbonate with a large molecule weight are used as the low viscous solvent.

Further when these results are compared with the case of EXAMPLE 7 using burned coke material as a negative active material, it can be seen therefrom that the high charge/discharge characteristic can be obtained even when the charge/discharge is carried out with such a current density as high as 10 times, and from this result it can be seen that the solvent mixture of fluorine substituted propylene carbonates and the foregoing low viscous solvents well suppresses controls the reaction between the burned coke carbon material and the electrolyte, so that there can be obtained an organic electrolyte which is also excellent in a high rate charge/discharge characteristics of the electrolytes.

EXAMPLE 9

Using the three-polar beaker type cells same as in the EXAMPLE 6, the organic electrolytes of the examples M to T as shown in Table 19 below were poured therein.

Using these cells, each cell was charged and discharged in such a manner that it was charged with a current density of 0.1mA/cm$^2$, at temperature of 25°C to occlude lithium ions until the electric potential the test negative electrode became 0V to the reference electrode, and, after it was allowed to stand for 10 minutes, it was discharged with the same current density to release lithium ions until the electric potential of the test negative electrolyte became 1.5 V to the reference electrode.

TABLE 19

| | Lithium salt | | Kind of solvent for electrolyte | | Mixing ratio (by volume) |
|---|---|---|---|---|---|
| | Kind of lithium salt | Concentration mol/L | Primary solvent | Secondary i solvent | |
| Example M | $LiPF_6$ | 1.0 | 5F4FPC | DEC | 10:90 |
| Example N | $LiPF_6$ | 1.0 | 5F4FPC | DEC | 20:80 |
| Example O | $LiPF_6$ | 1.0 | 5F4FPC | DEC | 30:70 |
| Example P | $LiPF_6$ | 1.0 | 5F4FPC | DEC | 40:60 |
| Example Q | $LiPF_6$ | 1.0 | 5F4FPC | DEC | 50:50 |
| Example R | $LiPF_6$ | 1.0 | 5F4FPC | DEC | 60:40 |
| Example S | $LiPF_6$ | 1.0 | 5F4FPC | DEC | 70:30 |
| Example T | $LiPF_6$ | 1.0 | 5F4FPC | DEC | 80:20 |

In Table 19 above, 5F4PC stands for 2-oxo-5-fluoro-4-fluoro-4-methyl-1,3-dioxolane and DEC stands for diethyl carbonate.

Table 20 below shows the discharge capacity and the charge/discharge efficiency of the cells using the examples M to T.

In Table 20 below, the charge/discharge capacity rate is obtained by using the following equation:

TABLE 20

| | Discharge capacity rate (%) | Charge/discharge efficiency (%) |
|---|---|---|
| Example M | 31 | 71 |
| Example N | 67 | 74 |
| Example O | 84 | 80 |
| Example P | 94 | 83 |
| Example Q | 100 | 85 |
| Example R | 91 | 88 |
| Example S | 59 | 93 |
| Example T | 16 | 92 |

$$\text{Discharge capacity rate(\%)} = \frac{\text{Discharge capacity of test electrode using for electrolyte of each example}}{\text{Discharge capacity of test electrode using electrolyte of example Q}} \times 100$$

(1)

2-oxo-5-fluoro-4-fluoro-4-methyl-1,3-dioxolane, one kind of the fluoro substituted propylene carbonates, used as the primary solvent, and diethyl carbonate used as the secondary solvent were mixed in the different mixing ratios with each other for evaluating charge and discharge characteristics thereof. As a result, there exhibited such a tendency that as the volume rate of 2-oxo-5-fluoro-4-fluoro-4-methyl-1,3-dioxolane was increased, the charge/discharge efficiency was increased. When the volume rate of 2-oxo-5-fluoro-4-fluoro-4-methyl-1,3-dioxolane accounted for 30% or more of the total volume of the whole solvents, there was obtained such a high charge/discharge efficiency as 80 % or more. In terms of the discharge capacity, as the volume rate of 2-oxo-5-fluoro-4-fluoro-4-methyl-1,3-dioxolane was increased, it also increases, it tended to increase in the beginning, and thereafter when the volume of 2-oxo-5-fluoro-4-fluoro-4-methyl-1,3-dioxolane reached around 50 % of the total volume of the whole solvents, the maximum was obtained, and thereafter it tended to be declined. From these results, it can be seen that if the volume of 2-oxo-5-fluoro-4-fluoro-4-methyl-1,3-dioxolane as the primary solvent is 30% or more of the total volume of the whole solvents, and the volume of the secondary solvent is 40% or more thereof, the reactivity between the negative electrode made of burned coke and the electrolyte can be especially lowered and the high rate charge/discharge characteristics can also be obtained.

EXAMPLE 10

Using the three-polar beaker type cells same as in the EXAMPLE 6, the organic electrolytes of the examples M to T described in Table 19 were poured therein.

Using these cells, each cell was charged and discharged in such a manner that it was charged with a current density of 1.0 mA/cm$^2$, at temperature of 25°C to occlude lithium ions until the electric potential the test negative electrode became 0V to the reference electrode, and, after it was allowed to stand for 10 minutes, it was discharged with the same current density to release lithium ions until the electric potential of the test negative electrolyte became 1.5V to the reference electrode.

Table 21 below shows the discharge capacities rate and the charge/discharge efficiency with the cells prepared according to the examples M to T.

Charge/discharge capacity rate shown in Table 21 above is obtained by using the foregoing equation (1).

TABLE 21

| | Discharge capacity rate (%) | Charge/discharge efficiency (%) |
|---|---|---|
| Example M | 22 | 48 |
| Example N | 52 | 69 |

TABLE 21 (continued)

| | Discharge capacity rate (%) | Charge/discharge efficiency (%) |
|---|---|---|
| Example O | 78 | 77 |
| Example P | 91 | 80 |
| Example Q | 100 | 81 |
| Example R | 87 | 84 |
| Example S | 44 | 86 |
| Example T | 8 | 88 |

2-oxo-5-fluoro-4-fluoro-4-methyl-1,3-dioxolane, one kind of the fluoro substituted propylene carbonates, used as the primary solvent, and diethyl carbonate used as the secondary solvent were mixed in the different mixing ratios with each other for evaluating charge and discharge characteristics thereof. As a result, there exhibited such a tendency that the volume rate of 2-oxo-5-fluoro-4-fluoro-4-methyl-1,3-dioxolane was increased, the charge/discharge efficiency increased. When the volume rate of 2-oxo-5-fluoro-4-fluoro-4-methyl-1,3-dioxolane accounted for 30% or more of the total volume of the whole solvents, there was obtained such a high charge/discharge efficiency that is well over 75%. In terms of the discharge capacity, as the rate percentage of 2-oxo-5-fluoro-4-fluoro-4-methyl-1,3-dioxolane was increased, it tended to increase in the beginning, and thereafter when the volume of 2-oxo-5-fluoro-4-fluoro-4-methyl-1,3-dioxolane reached around 50 % of the total volume of the whole solvents, the maximum was obtained, and thereafter it tended to be declined. From these results, it can be seen that if the volume of 2-oxo-3-fluoro-4-fluoro-4-methyl-1,3-dioxolane as the primary solvent is 30% or more and the volume of the secondary solvent is 40% or more, the reactivity between the negative electrode made of artificial black lead and the electrolyte can be especially lowered and the high rate charge/discharge characteristics can also be obtained.

EXAMPLE 11

Using the three-polar beaker type cells same as in the EXAMPLE 6, the organic electrolytes of the examples U and Z and the examples a and d as shown in Table 22 were poured therein.

Using these cells, each cell was charged and discharged in such a manner that it was charged with a current density of 1.0 $mA/cm^2$, at temperature of 25°C to occlude lithium ions until the electric potential the test negative electrode became 0V to the reference electrode, and, after it was allowed to stand for 10 minutes, it was discharged with the same current density to release lithium ions until the electric potential of the test negative electrolyte became 1.5 V to the reference electrode.

TABLE 22

| | Lithium salt | | Kind of solvent for electrolyte | | Mixing ratio (by volume) |
|---|---|---|---|---|---|
| | Kind of lithium salt | Concentration mol/L | Primary solvent | Secondary solvent | |
| Example U | $LiPF_6$ | 1.0 | 5F4FPC | EC+DEC | 45:10:45 |
| Example V | $LiPF_6$ | 1.0 | 5F4FPC | EC+DEC | 45:20:40 |
| Example W | $LiPF_6$ | 1.0 | 5F4FPC | EC+DEC | 40:10:50 |
| Example X | $LiPF_6$ | 1.0 | 5F4FPC | EC+DEC | 30:20:50 |
| Example Y | $LiPF_6$ | 1.0 | 5F4FPC | EC+DEC | 30:30:40 |
| Example Z | $LiPF_6$ | 1.0 | 5F4FPC | DEC+EBC | 45:45:10 |
| Example a | $LiPF_6$ | 1.0 | 5F4FPC | DEC+EBC | 40:40:20 |
| Example b | $LiPF_6$ | 1.0 | 5F4FPC | DEC+EBC | 40:50:10 |
| Example c | $LiPF_6$ | 1.0 | 5F4FPC | DEC+EBC | 30:50:20 |
| Example d | $LiPF_6$ | 1.0 | 5F4FPC | DEC+EBC | 30:40:30 |

In Table 22 above, 5F4FPC stands for 2-oxo-5-fluoro-4-fluoro-4-methyl-1,3-dioxolane and EC stands for ethylene carbonate, DEC stands for diethyl carbonate, EBB stands for ethyl butyl carbonate.

Table 23 below shows the charge/discharge efficiency of the cells using the examples U to Z and the examples a to d.

TABLE 23

| | Charge/discharge efficiency (%) |
|---|---|
| Example U | 85 |
| Example V | 84 |
| Example W | 85 |
| Example X | 83 |
| Example Y | 78 |
| Example Z | 85 |
| Example a | 83 |
| Example b | 83 |
| Example c | 80 |
| Example d | 75 |

As can be seen from the foregoing Tables 22 and 23, when the solvent mixture prepared by mixing 2-oxo-5-fluoro-4-fluoro-4-methyl-1,3-dioxolane as the primary solvent and diethyl carbonate selected from the above-enumerated five preferable solvents, that is, diethyl carbonate, dimethyl carbonate, methyl ethyl carbonate, , methyl propyl carbonate and methyl butyl carbonate which are, hereinafter referred to as "specified secondary solvent" used as the secondary solvent is added with the other low viscous solvents, which are, hereinafter, referred to as "additional secondary solvents", as long as the total volume of the primary solvent and the specified secondary solvent is 80% or more of the total volume of the whole solvents, there can be obtained such a higher charge/discharge efficiency of the electrode made of burned coke material that is as high as 80% or more without being influenced by the influence of the additional secondary solvent.

EXAMPLE 12

Using the three-polar beaker type cells same as in EXAMPLE 6, the organic electrolytes of the examples U to Z and the examples a to d as shown in Table 22 were poured therein.

Using these cells, each cell was charged and discharged in such a manner that it was charged with a current density of 1.0 $mA/cm^2$, at temperature of 25°C to occlude lithium ions until the electric potential the test negative electrode became 0V to the reference electrode, and, after it was allowed to stand for 10 minutes, it was discharged with the same current density to release lithium ions until the electric potential of the test negative electrolyte became 1.5 V to the reference electrode.

Table 24 below shows the charge and discharge efficiency of the cells using the examples U to Z and the examples a to d.

TABLE 24

| | Charge/discharge efficiency (%) |
|---|---|
| Example U | 81 |
| Example V | 78 |
| Example W | 77 |
| Example X | 77 |
| Example Y | 72 |
| Example Z | 79 |
| Example a | 76 |

TABLE 24 (continued)

| | Charge/discharge efficiency (%) |
|---|---|
| Example b | 77 |
| Example c | 75 |
| Example d | 69 |

It can be seen from Tables 22 and 24 that when the solvent mixture of 2-oxo-5-fluoro-4-fluoro-4-methyl-1,3-dioxolane as the primary solvent and diethyl carbonate as the specified secondary solvent are added with the additional secondary solvent, as long as the volume of the solvent mixture of the primary solvent and the specified secondary solvent is 80% or more of the total volume of the whole solvents, there can be obtained such a charge and discharge efficiency that is as high as 80% or more, without being influenced by the additional solvent, even when using artificial black lead which is high in the reactivity with solvents in the electrolyte.

EXAMPLE 13

A negative electrode and a positive electrode are put opposite one to another through a separator and the resultant cell assembly is placed in a cell container, and the electrolytes of the examples D and F and the conventional examples B and C as shown in Table 25 below, were poured in the respective cell containers. Thus, 30 coin type batteries were produced for every kind of these electrolytes.

TABLE 25

| | Lithium salt | | Kind of solvent for electrolyte | | | Burned coke materials Charge/ discharge efficiency (%) |
|---|---|---|---|---|---|---|
| | Kind of lithium salt | Concentration mol/L | Primary solvent | Secondary solvent | Mixing ratio (by volume) | |
| Example D | $LiPF_6$ | 1.0 | 5F4FPC | DMC | 50:50 | 87 |
| Example F | $LiPF_6$ | 1.0 | 5F4FPC | DEC | 50:50 | 85 |
| Conventional Example B | $LiPF_6$ | 1.0 | PC | DMC | 50:50 | 69 |
| Conventional Example C | $LiPF_6$ | 1.0 | PC | DEC | 50:50 | 67 |

The foregoing 30 coin type batteries were manufactured. More in detail, all of the foregoing coin type batteries were manufactured so that the ratio of capacity of the positive electrode and that of the negative electrode is 1 to 1, at the time of manufacturing thereof, and the other constructional components may have the same components, except for that each kind of the above-mentioned various electrolytes may be poured in every 30 coin type batteries.

For the negative electrode, it was made in the following manner. Namely, burned coke powder capable of electro-chemically occluding and releasing lithium ions, styrene- butadiene rubber type resin and ethyl acetate were stirred to be mixed by a homogenizer to obtain a slurry active material mixture.

This slurry active material mixture was coated on one side of an electric collector made of copper foil by using the slot die coater, and thereafter was dried in the oven to remove the solvent. The other side of the electric collector was also coated therewith and the solvent was removed in the same manner as above. Thus, there was obtained the electric collector coated on both sides thereof with the active material mixture. It was then subjected to a heat treatment so as to cure styrene butadiene rubber type resin, and is then rolled with a heated roller press so as to even the thickness of the active material mixture and was then heat treated to remove the moisture to obtain a negative electrode.

The positive electrode was made in the following manners. $LiCoO_2$ powder used as an active material of the positive electrode, graphite powder used as an electro-conductive agent, polyfluoro vinylidene resin used as a binder, and N-methyl pyrolidone used as a binder were stirred to be mixed by the homogenizer to obtain a slurry active material mixture for the positive electrode. This slurry mixture was coated on one side of an electric collector made of aluminum foil by using the slot die coater, and thereafter was dried at 100°C in an oven to remove the solvent. The other side of

the electric collector was coated therewith and thereafter the solvent was removed by the same manner as above. Thus the slurry active material mixture was coated on the both sides of the electric collector. It was then rolled with a roller press machine to make the thickness of the coated slurry active material mixture uniform. It was then subjected to a heat treatment in a vacuum oven to remove the moisture to obtain a positive electrode.

As the separator, there was used polyolefine based micro-porous film which is wider in size than the negative and positive electrodes and has a three dimensional sponge-like porous structure.

Each of the batteries thus manufactured was charged with the largest current value of 0.2 CmA, at 25°C until the battery voltage became 4.1V, and, after standing for 10 minutes, it was discharged with the same current value until the battery voltage became 2.75 V, and the first cycle of each battery was measured by a charge and discharge measuring apparatus, for comparison.

Each figure of the discharge capacity at the first cycle is shown in percentage for comparison when the figure of the example was set to be 100.

Table 26 below shows the respective discharge capacity rates at the first cycle stage for the batteries using the respective electrolytes. And, the each discharge capacity rate is an average value of every 30 batteries using each kind of electrolytes.

TABLE 26

| | Discharge capacity rate (%) |
|---|---|
| Example D | 126.1 |
| Example F | 123.2 |
| Conventional Example B | 100.0 |
| Conventional Example C | 97.1 |

As can be seen from the foregoing Table 26, the batteries using the electrolytes of the examples are superior to the ones using the conventional electrolytes in the discharge capacity at the first cycle. The reason why the discharge capacity at the first cycle is improved by the examples according to this invention is due to the fact that the reactivity between the burned coke material of the negative electrode materials and the electrolytes using the examples according to this invention are much lower those using the conventional electrodes of the conventional examples, resulting in the higher charge/discharge efficiency.

Accordingly, it is understood from the above comparison tests that with the kind of the lithium secondary battery using burned coke material as the negative carbon materials, there can be offered such a battery that has larger energy density and superior charge and discharge cycle characteristics as compared with the conventional batteries using the conventional electrolytes.

EXAMPLE 14

A negative electrode and a positive electrode are put opposite one to another through a separator and the resultant cell assembly is placed in a battery container, and the electrolytes of the examples D and F and thereof the conventional examples B to D as shown in Table 27 below, were poured in the respective battery containers. Thus, 30 coin type batteries were produced for every kind of these electrolytes.

TABLE 27

| | Lithium salt | | Kind of solvent for electrolyte | | | Artificial black lead charge/ discharge efficiency (%) |
|---|---|---|---|---|---|---|
| | Kind of lithium salt | Concentration mol/L | Primary solvent | Secondary solvent | Mixing ratio (by volume) | |
| Example D | $LiPF_6$ | 1.0 | 5-F-4-F-PC | DMC | 50:50 | 84 |
| Example F | $LiPF_6$ | 1.0 | 5-F-4-F-PC | DEC | 50:50 | 81 |
| Conventional Example B | $LiPF_6$ | 1.0 | PC | DMC | 50:50 | - |

TABLE 27 (continued)

| | Lithium salt | | Kind of solvent for electrolyte | | | Artificial black lead charge/ discharge efficiency (%) |
|---|---|---|---|---|---|---|
| | Kind of lithium salt | Concentration mol/L | Primary solvent | Secondary solvent | Mixing ratio (by volume) | |
| Conventional Example C | $LiPF_6$ | 1.0 | PC | DEC | 50:50 | - |
| Conventional Example D | $LiPF_6$ | 1.0 | EC | DEC | 50:50 | 62 |

More in detail, all of the foregoing coin type batteries were manufactured so that the ratio of capacity of the positive electrode and that of the negative electrode is 1 to 1, at the time of manufacturing thereof, and the other constructional components may have the same components, except for that each kind of the above-mentioned various electrolytes may be poured in every 30 coin type batteries.

The negative electrodes were produced in the manufacturing method as in the foregoing EXAMPLE 13 with the exception that artificial black lead powder used instead of burned coke power as the active material.

The positive electrodes were in the same manufacturing method in the foregoing EXAMPLE 13 and the separators were also the same as ones used in EXAMPLE 13.

Each of the batteries thus manufactured was charged with the largest current value of 0.2 CmA, at 25°C until the battery voltage became 4.1V, and, after standing for 10 minutes, it was discharged with the same current value until the battery voltage became 2.75V, and the first cycle of each battery was measured by a charge and discharge measuring apparatus, for comparison.

Table 28 below shows the discharge capacity rate at the 1st cycle of each of the batteries using the respective electrolytes.

TABLE 28

| | Discharge capacity rate (%) |
|---|---|
| Example D | 135.5 |
| Example F | 130.6 |
| Conventional Example B | - |
| Conventional Example C | - |
| Conventional Example D | 100.0 |

As shown in the above, in the batteries using the electrolytes of the conventional examples B and C wherein propylene carbonate is used as a solvent, almost all of the charged capacity of the positive electrode was spent for the reaction between the artificial black lead and the electrolyte, so that the capacity could not be taken out. Even when propylene carbonate which is a component of a high dielectric constant for an electrolyte was used, it could not be effectively used when the carbon material having higher degree of crystallization such as artificial black lead was used for the negative electrodes. In the prior art, ethylene carbonate was preferably used because its reactivity with such, carbon materials of higher degree of crystallization as artificial black lead is less than the reactivity of propylene carbonate therewith. It has, however, such problem that it is difficult in handling since its melting point is as high as 36.4°C, so that it is solid at room temperature. Whereas, the battery according to this invention using fluorine substituted propylene carbonates having a high dielectric constant for an electrolyte can be charged and discharged sufficiently, and there can be obtained such an improved battery that has the discharge and discharge characteristics that in both of the discharge capacity retention rate is superior to the battery using the conventional example C having the electrolyte using ethylene carbonate having a high dielectric constant as a solvent for an electrolyte. The reason for that is considered as follows: the battery of this kind using the electrolyte of the example has, similar to the case of use of using burned coke material as a negative electrode material, less reactivity of the artificial black lead negative material with the electrolyte and higher charge and discharge efficiency than the battery using the electrolyte of the conventional example. In addition, since fluorine substituted propylene carbonates are liquid at room temperature, the handling becomes much easier than ethylene carbonate.

Accordingly, it can be seen from the above-mentioned tests that the lithium secondary battery using carbon materials as an active material for a negative electrode and using the electrode according to this invention, even when artificial black lead is used as an active material, a larger energy density and a superior charge and discharge cycle characteristics can be obtained than the battery using the conventional electrode, and similar to the case where burned coke material is used as an active material.

As for fluorine substituted propylene carbonates, in the foregoing EXAMPLES 5 and 6, there has been discussed the use of 2-oxo-5-fluoro-4-fluoro-4-methyl-1,3-dioxolane, 2-oxo-5-fluoro-4-methyl-1,3-dioxolane and 2-oxo-4-fluoro-4-methyl-1,3-dioxolane. But, there are, for example, any other kind of fluorine substituted propylene carbonates can be used. 2-oxo-3-difluoro-methyl-1,3-dioxolane, 2-oxo-5-difluoro-4-fluoro-4-methyl-1,3-dioxolane, 2-oxo-4-trifluoromethyl-1,3-dioxolane , 2-oxo-4-trifluoromethyl-3-fluoro-1,3-dioxolane, 2-oxo-4-trifluoromethyl-4-fluoro-1,3-dioxolane and 2-oxo-4-trifluoromethyl-3-difluoro-1,3-dioxolane and perfluoro propylene carbonate, etc. can be used to obtain the above effect.

Similarly, in the forgoing EXAMPLES 6 and 7, as fluorine substituted propylene carbonates, there has been discussed the use of 2-oxo-5-fluoro-4-fluoro-4-methyl-1,3-dioxolane. However, any kind of fluorine substituted propylene carbonates can be used to have the above effect.

As for low viscous solvents, there has been discussed the use of the specified secondary solvents, dimethyl carbonate, methyl ethyl carbonates, diethyl carbonate, methyl propyl carbonate, methyl butyl carbonate and dibutyl carbonate. But, these were used for an example. And this invention is not limited to these solvents. As for other additional solvents, alkyl tetrahydro -furan, dialkyl tetrahydrofurans, alkoxy tetraydrofurans, dialkoxy tetrahydrofurans, 1,3-dioxolane, alkyl-1,3-dioxolanes, 1,4-dioxolane, 1,2-diethoxyethane, diethyl ether, diethylene glycol dialkyl ethers, triethylene glycol-dialkyl ethers, tetraethylene glycol-dialkyl ethers, ethylpropyl carbonate, dipropyl carbonate, butyl propyl carbonate, alkyl propionates, dialkyl malonates, alkyl acetates can be used to give the similar effects. Furthermore, while the use of a single use of the above additional solvents has been discussed above, but two kinds or more thereof can be used.

In EXAMPLES 9 and 10, there has been discussed the case of use of 2-oxo-3-fluoro-4-fluoro-4-methyl-1,3-dioxolane. However, any other kind of fluorine substituted propylene carbonates can be used. And, this invention is not limited to these. Two kinds or more of fluorine substituted propylene carbonates can be used to give the above effects.

Also, although diethyl carbonate was used as the specified secondary solvent, but, other specified secondary solvent such as dimethyl carbonate, methyl ethyl carbonate, methyl propyl carbonate, or methyl butyl carbonate can be used to give the same effect as above. Also, there has been discussed the case where a single kind of the specified secondary solvent was mixed with a single of fluorine substituted propylene carbonates, but two kinds or more of the specified secondary solvent can be mixed with two or more kinds of fluorine substituted propylene carbonates.

In EXAMPLES 11 and 12, there has been discussed the use of 2-oxo-5-fluoro-4-fluoro-4-methyl-1,3-dioxolane, but any kind of propylene carbonates can be used. And, this invention is not limited to the above kinds. At least one kind of fluorine substituted propylene carbonates can be used to give the same effect.

Also, there has been discussed the case of use diethyl carbonate as the specified secondary solvent, but it is found that any other specified secondary solvent such as dimethyl carbonate, methyl ethyl carbonate, methyl propyl carbonate or methyl butyl carbonate can be used to give the same effects. In the above examples, only a single of the specified secondary solvents was mixed with one kind of fluorine substituted propylene carbonates, but two kinds or more of the specified secondary solvents can also be used with any kind of fluorine substituted propylene carbonates.

Further, as the additional solvent, at least one kind of these as enumerated in the above can be mixed with any solvent mixture of least one kind of fluorine substituted propylene carbonates and at least one kind of the secondary solvents to give the similar effects.

In the EXAMPLES 13 and 14, there has been discussed the case of the use of 2-oxo-5-fluoro-4-fluoro-4-methyl-1,3-dioxolane, other kind of fluorine substituted propylene carbonates can be used, and this invention is not limited to the above kind.

Furthermore, there has been discussed the case of use of dimethyl carbonate or diethyl carbonates as the specified secondary solvent, but any other kind of the specified secondary solvent such as methyl ethyl carbonate, methyl propyl carbonate, methyl butyl carbonate can be used to give the similar effects. Also, as the specified secondary solvents, only one solvent was mixed with fluorine substituted propylene carbonates in the examples, but two kinds or more of the specified secondary solvents can also be mixed with any kind of fluorine substituted propylene carbonates.

Furthermore, there has been discussed the case where no additional secondary solvent was added to the mixture of the primary solvent and the specified secondary solvent, but at least one kind of the additional secondary solvents can be mixed therewith to have the similar effects.

Although in the above EXAMPLES, $LiCoO_2$ was used as an active material for a positive electrode, there can be used any other kind of such active materials capable of electro-chemically occluding and releasing lithium ions. For instance, such lithium containing complex oxides as $LiNiO_2$, $LiMnO_2$, $LiMn_2O_4$, such chalcogens as $TiO_2$, $MnO_2$, $MoO_3$, $V_2O_5$, $TiS_2$, $MoS_2$, etc. can be used as a positive active material to have the similar effects.

Throughout the EXAMPLES 5 to 14, although a single use of one kind of fluorine substituted propylene carbonates was used, but the mixture of a plural kinds of substituted propylene carbonates can be used to have the above effects.

Although in the above EXAMPLES, $LiPF_6$ alone was used as a solute, but such other inorganic salts as $LiClO_4$, $LiBF_4$, $LiAsF_6$, LiCl, LiBr or such organic salts as $LiB(C_6H_5)_4$, $LiC(SO_2CF_3)_3$, $LiOSO_2CF_3$ can be used to have similar effects as above. Also the mixture of plural kinds of the above material salts excluding $LiPF_6$ or the mixture of the above slats including $LiPF_6$ can be used to have the similar effects.

Although in the above EXAMPLES burned coke material and artificial black lead material as an active carbon material for a negative electrode were used, for example, but any other kind of carbon materials selected from the group of natural black lead, burned organic products and any kind of graphitized carbon materials, etc. can be used alone or in a mixture thereof, to have the similar effects.

Particularly, accordingly as the degree of crystallization of the carbon materials for a negative electrode is higher, the effectiveness for an electrolyte of this invention becomes higher.

Unlike ethylene carbonate, fluorine substituted propylene carbonates are liquid at room temperature so that it is easier in handling and more useful in application to the industries.

EMBODIMENT 6

A further another embodiment of this invention for providing a lithium secondary battery which is remarkably improved in especially in the charge and discharge efficiency of the negative electrode at the initial stage of the charge and discharge cycles in respect to this kind of the lithium secondary battery using carbon material as a negative active materials, will be explained as follows:

More particularly, among fluorine substituted propylene carbonates, when 2-oxo-4-trifluoromethyl-1,3-dioxolane is used, the above mentioned effects can be brought about. In this case, especially high charge/discharge characteristics can be obtained when at least one kind of the specified secondary solvents as enumerated in the foregoing EMBODIMENT 5 is used as the secondary solvent. Also in this case, by defining the mixing ratio of the primary solvent to the secondary solvent, there can be obtained such an battery performance that is especially low in the reactivity between the negative the electrode material and the electrolyte and is excellent high rate charge/discharge characteristics.

EXAMPLE 15

In the same manner as in the foregoing EXAMPLE 14, the negative electrode made of burned coke powder used as an active material was produced. It was used as the test electrode. By using it together with the counter electrode and the reference electrode made of lithium metal, three-polar beaker type cell was produced. The organic electrolytes comprising as a solute and the lithium salt and solvents for electrolytes as shown in Table 29 were poured in these cells thus produced as mentioned above to make the cells of the example A, the conventional example A and the comparative examples A to C, respectively.

TABLE 29

| | Lithium salt | | Kind of solvent for electrolyte |
|---|---|---|---|
| | Kind of lithium salt | Concentration mol/L | |
| Example A | $LiPF_6$ | 1.0 | 4TFMEC |
| Conventional Example A | $LiPF_6$ | 1.0 | PC |
| Comparative Example A | $LiPF_6$ | 1.0 | 5F4FPC |
| Comparative Example B | $LiPF_6$ | 1.0 | 5FPC |
| Comparative Example C | $LiPF_6$ | 1.0 | 4FPC |

In Table 29 above, TFMEC stands for 2-oxo-4-trifluoromethyl-1,3-dioxolane , PC stands for propylene carbonate, 5F4FPC stands for 2-oxo-5-fluoro-4-fluoro 4-methyl-1,3-dioxolane, , 5FPC stands for 2-oxo-5-fluoro-4-methyl-1,3-dioxolane, 4FPC stands for 2-oxo-4-fluoro-4-methyl-1,3 dioxolane.

Using these cells, each cell was charged and discharged in such a manner that it was charged with a current density of $0.1mA/cm^2$, at a temperature of 25°C to occlude lithium ions until the electric potential of the test negative electrode became 0V to the reference electrode, and, after it was allowed to stand for 10 minutes, it was discharged

with the same current density to release lithium ions until the electric potential of the test negative electrode became 1.5V to the reference electrode. Table 15 below shows the charge and discharge efficiency of the cells using the examples A, the conventional example A and the comparative examples A to C.

Table 30 below shows the charge/discharge efficiency of the cells of the example A and the conventional example A and the comparative examples A to C.

TABLE 30

| | Charge/discharge efficiency (%) |
|---|---|
| Example A | 94 |
| Conventional Example A | 63 |
| Comparative Example A | 92 |
| Comparative Example B | 91 |
| Comparative Example C | 90 |

It has been proved that the charge/discharge efficiency when using the example A according to this invention is well over that when using the conventional example A. It can be seen from the above results, that the case of use of this electrode can lower the reactivity between the electrolyte and the burned coke material and can decrease the capacity loss at the first cycle, as compared with the case of use of the conventional electrolyte.

It is found from the comparison between the example and the comparative examples that 2-oxo-4-trifluoromethyl-1,3-dioxolane has more excellent charge/discharge characteristics, which is much better than using other types of fluorine substituted propylene carbonates. This is considered to be due to the higher electro-chemical stability of 4-trifluoromethyl-ethylene carbonate.

EXAMPLE 16

The negative electrode was produced in the same manner as the foregoing EXAMPLE 15 except for that artificial black lead material was used instead of burned coke powder. The three polar beaker type cells were made in the same manner as described in the forgoing EXAMPLE 15 with the exception of use of artificial black lead as a working electrode.

Using these cells, after the organic electrolytes of the example A, the conventional examples A and the comparative examples A to C as shown in the foregoing Table 28, were poured therein. Using these cells, each cell was charged and discharged in such a manner that it was charged with a current density of 0.1mA/cm$^2$, at a temperature of 25°C to acclude lithium ions until the electric potential of the test negative electrode became 0V to the reference electrode, and, after it was allowed to stand for 10 minutes, it was discharged with the same current density to release lithium ions until the electric potential of the test negative electrode became 1.5V to the reference electrode.

Table 30 below shows the charge and discharge efficiency of the cells of the example A, the conventional example A and the comparative examples A to C.

TABLE 31

| | Charge/discharge efficiency (%) |
|---|---|
| Example A | 90 |
| Conventional Example A | - |
| Comparative Example A | 87 |
| Comparative Example B | 85 |
| Comparative Example C | 85 |

It is clear from Table 31 that in the cell using the conventional example A as the electrolyte, almost all of charging electric quantity were spent for the reaction between the electrolyte and the carbon material of the negative electrode, so that the electric capacity could not be taken out at the time of discharging. Whereas, in the cells using the example A as the electrolyte, the charge and discharge performance becomes possible, and even in the case of artificial black lead material which has a higher reactivity with the electrolyte, the use of 4-trifluoromethyl -ethylene carbonate serves to be very effective in suppressing the reaction between the electrolyte and the carbon material.

From comparison between the example and the comparative examples, it can be seen that the example using 2-oxo-4-trifluoromethyl-1,3-dioxolane exhibits more excellent charge/discharge characteristics, which is much better than other kinds of fluorine substituted propylene carbonates. This is considered to be due to the higher electro-chemical stability of 2-oxo-4-trifluoromethyl- 1,3-dioxolane.

EXAMPLE 17

Using the three-polar beaker type cells same as used in the foregoing EXAMPLE 15, the organic electrolytes of the examples B to J and the conventional examples B and C as shown in Table 32 below were poured therein.

Using these cells, after the organic electrolytes of the example A, the conventional examples A and the comparative examples A to C as shown in the foregoing Table 28, are poured therein. Using these cells, each cell was charged and discharged in such a manner that it was charged with a current density of $0.1mA/cm^2$, at a temperature of 25°C to acclude lithium ions until the electric potential of the test negative electrode became 0V to the reference electrode, and, after it was allowed to stand for 10 minutes, it was discharged with the same current density to release lithium ions until the electric potential of the test negative electrode became 1.5V to the reference electrode.

TABLE 32

| | Lithium salt | | Kind of solvent for electrolyte | |
|---|---|---|---|---|
| | Kind of lithium salt | Concentration mol/L | Solvent mixture | Mixing ratio (by volume) |
| Example B | $LiPF_6$ | 1.0 | 4TFMEC+DMC | 50:50 |
| Example C | $LiPF_6$ | 1.0 | 4TFMEC+MEC | 50:50 |
| Example D | $LiPF_6$ | 1.0 | 4TFMEC+DEC | 50:50 |
| Example E | $LiPF_6$ | 1.0 | 4TFMEC+MPC | 50:50 |
| Example F | $LiPF_6$ | 1.0 | 4TFMEC+MBC | 50:50 |
| Example G | $LiPF_6$ | 1.0 | 4TFMEC+DME | 50:50 |
| Example H | $LiPF_6$ | 1.0 | 4TFMEC+THF | 50:50 |
| Example I | $LiPF_6$ | 1.0 | 4TFMEC+EBC | 50:50 |
| Example J | $LiPF_6$ | 1.0 | 4TFMEC+DBC | 50:50 |
| Conventional Example B | $LiPF_6$ | 1.0 | PC+DMC | 50:50 |
| Conventional Example C | $LiPF_6$ | 1.0 | PC+DEC | 50:50 |

In Table 32, 4TFMEC stands for 2-oxo-4-trifluoromethyl-1,3-dioxolane , PC stands for propylene carbonate, DMC stands for dimethyl carbonate, MEC stands for methyl ethyl carbonate, DEC stands for diethyl carbonate, MPC stands for methyl propyl carbonate, MBC stands for methyl butyl carbonate, DME stands for dimethoxy ethane, THF stands for tetrahydroxyfuran, EBC stands for ethyl butyl carbonate, DBC stands for dibutyl carbonate

Table 33 below shows the charge/discharge efficiency of the cells using the examples B to J and the conventional examples B and C.

TABLE 33

| | Charge/discharge efficiency (%) |
|---|---|
| Example B | 91 |
| Example C | 90 |
| Example D | 87 |
| Example E | 87 |
| Example F | 85 |
| Example G | 78 |

TABLE 33 (continued)

| | Charge/discharge efficiency (%) |
|---|---|
| Example H | 74 |
| Example I | 81 |
| Example J | 79 |
| Conventional Example B | 69 |
| Conventional Example C | 67 |

It has been proved that the charge/discharge efficiency when using the examples B to J according to this invention is well over that when using the conventional examples B and C. It has been found also that, even when 2-oxo-4-trimethyl-1,3-dioxolane is used to be mixed with various kinds of low viscous solvents, the effect of suppressing the reaction between the burned coke material for the electrode and the electrolyte can be maintained and more larger charger/discharge efficiency than the case of using the conventional electrolytes can be obtained as compared with the case of using the conventional electrolytes.

As can be seen from the comparison between the group of the examples B to F and the group of the example G to J that the charge and discharge efficiency of the negative electrode becomes such a high value as 85% or more when any solvent selected from the group of dimethyl carbonate, methyl ethyl carbonate, diethyl carbonate, methyl propyl carbonate and methyl butyl carbonate is used as a low viscous solvent, and there can be obtained an especially high charge and discharge efficiency in comparison with the case where the other, esters or chain carbonates having a large molecule weight are used as a low viscous solvent.

Further when EXAMPLE 17 is compared with the case of the foregoing EXAMPLE 15, it can be seen therefrom that even when the cells according to this invention is charged with the current density as ten times as the case of the EXAMPLE 1, the solvent mixture of 2-oxo-4-trifluoromethyl-1,3-dioxolane and the low viscosity solvent can offer such an organic electrolyte that is excellent in high charge/discharge efficiency and high rate charge /discharge characteristics of the burned coke material as a negative electrode.

EXAMPLE 18

Using the three-polar beaker type cells same as in the foregoing EXAMPLE 16, the organic electrolytes of the examples B to J and the conventional example B and C as shown in Table 32 below were poured therein.

Each cell was charged and discharged in such a manner that it was charged with a current density of 1.0 $mA/cm^2$ at a temperature of 25°C to occlude lithium ions until the electric potential of the test negative electrode became 0 V to the reference electrode, and, after it was allowed to stand for 10 minutes, it was discharged with the same currrent density to release lithium ions until the electric potential of the test negative electrode became 1.5 V to the reference electrode.

Table 34 below shows the charge/discharge efficiency of the cells using the examples B to J and the conventional examples B and C.

TABLE 34

| | Charge/discharge efficiency (%) |
|---|---|
| Example B | 86 |
| Example C | 84 |
| Example D | 83 |
| Example E | 81 |
| Example F | 78 |
| Example G | 64 |
| Example H | 52 |
| Example I | 71 |
| Example J | 69 |

TABLE 34 (continued)

| | Charge/discharge efficiency (%) |
|---|---|
| Conventional example B | - |
| Conventional example C | - |

It is clear from Table 34 that in the cells using the conventional examples B and C as the electrolyte, almost all of charging electric quantity were spent for the reaction between the electrolyte and the active carbon material of the negative electrode, so that the electric capacity could not be taken out at the time of discharging. Whereas, in the cells using the examples B to J as the electrolyte, the charge and discharge performance becomes possible, and even in the case of use of artificial black lead which has a higher reactivity with the electrolyte, the use of 2-oxo-4-trifluoromethyl-1,3-dioxolane is very effective in suppressing the reaction between the electrolyte and the carbon material even 2-oxo-4-trifluoromethyl-1,3-dioxolane is used to be mixed with various kinds of low viscous solvents, as similar to the case of using burned coke material for the negative electrode.
As can be seen from the comparison between the group of the examples B to F and the group of the examples G to J that the charge and discharge efficiency of the negative electrode exhibits a high value of 80% or more when any secondary solvent selected from the group of dimethyl carbonate, methyl ethyl carbonate, diethyl carbonate, methyl propyl carbonate and methyl butyl carbonate is used as a low viscous solvent and there can be obtained an especially high charge and discharge efficiency in comparison with the case where the other ethers or chain carbonate with a large molecule weight are used as a low viscous solvent.
Further, when this EXAMPLE 18 is compared with the case of the foregoing EXAMPLE 16, it can be seen therefrom that the high charge/discharge characteristics can be obtained even when the charge/discharge operation is conducted with a current density as high as 10 times that in the case of the EXAMPLE 16, similarly to the case of the EXAMPLE 17 using the burned coke material as a negative active material, and therefore there can be obtained by mixing 2-oxo-4-trimethyl-1,3-dioxolane and any kind of low viscous solvents, an organic electrolyte bringing about the negative electrode made of artificial black lead material having a high charge/discharge efficiency and a high rate charge/discharge characteristics.

EXAMPLE 19

Using the three-polar beaker type cells same as in the foregoing EXAMPLE 15, the organic electrolytes of the examples K to R as shown in Table 35 below were poured therein.
Each cell was charged and discharged in such a manner that it was charged with a current density of 1.0 mA/ $cm^2$ at a temperature of 25 °C to occlude lithium ions until the electric potential of the test negative electrode became 0 V to the reference electrode, and, after it was allowed to stand for 10 minutes, it was discharged with the same currrent density to release lithium ions until the electric potential of the test negative electrode became 1.5 V to the reference electrode.

TABLE 35

| | Lithium salt | | Kind of solvent for electrolyte | | Mixing ratio (by volume) |
|---|---|---|---|---|---|
| | Kind of lithium salt | Concentration mol/L | Primary solvent | Secondary solvent | |
| Example K | $LiPF_6$ | 1.0 | 4TFMEC | DEC | 10:90 |
| Example L | $LiPF_6$ | 1.0 | 4TFMEC | DEC | 20:80 |
| Example M | $LiPF_6$ | 1.0 | 4TFMEC | DEC | 30:70 |
| Example N | $LiPF_6$ | 1.0 | 4TFMEC | DEC | 40:60 |
| Example O | $LiPF_6$ | 1.0 | 4TFMEC | DEC | 50:50 |
| Example P | $LiPF_6$ | 1.0 | 4TFMEC | DEC | 60:40 |
| Example Q | $LiPF_6$ | 1.0 | 4TFMEC | DEC | 70:30 |
| Example R | $LiPF_6$ | 1.0 | 4TFMEC | DEC | 80:20 |

In table 35 above, 4TFMEC stands for 2-oxo-4-trifluoromethyl-1,3-dioxolane and DEC stands for diethyl carbonate. Table 36 below shows the discharge capacity rate and the charge/discharge efficiency when using the examples K to R.

TABLE 36

| | Discharge capacity rate (%) | Charge/discharge efficiency (%) |
|---|---|---|
| Example K | 48 | 73 |
| Example L | 73 | 78 |
| Example M | 89 | 83 |
| Example N | 98 | 84 |
| Example O | 100 | 87 |
| Example P | 92 | 89 |
| Example Q | 60 | 93 |
| Example R | 19 | 94 |

In Table 36 above, the discharge capacity rate was obtained by using the following equation:

$$\text{Discharge capacity rate(\%)} = \frac{\text{Discharge capacity of test electrode using electode of each sample}}{\text{Discharge capacity of test electrode using electrode of the example O}} \text{X100} \qquad (2)$$

2-oxo-4-trifluoromethyl-1,3-dioxolane used as the primary solvent, and diethyl carbonate used as the secondary solvent were mixed in the different mixing ratios with each other for evaluating the charge and discharge characteristics thereof. As a result, there exhibited such a tendency that as the volume rate of 2-oxo-4-trifluoromethyl-1,3-dioxolane was increased, the charge/discharge efficiency was increased. When the volume rate of 2-oxo-5-fluoro-4-fluoro-4-methyl-1,3-dioxolane accounted for 30% or more of the total volume of the whole solvents, there was obtained such a high charge/discharge efficiency that is well over 80%. As to the discharge capacity, as the volume rate of 2-oxo-5-fluoro-4-fluoro-4-methyl-1,3-dioxolane was increased, it was increased and, it tended to increase in the beginning, and thereafter when the volume of 2-oxo-4-trifluoromethyl-1,3-dioxolane reached around 50% of the total volume of the whole solvents, it reached the maximum, and thereafter it tended to be declined. From these facts, it can be seen that if the volume of 2-oxo-4-trifluoromethyl- 1,3-dioxolane as the primary solvent is 30% or more and the volume of the secondary solvent is 40% or more of the total volume of the whole solvents, the reactivity between the negative electrode made of burned coke material and the electrolyte can be especially lowered so that the high high-rate charge/discharge characteristics and excellent charge/discharge efficiency can also be obtained.

EXAMPLE 20

Using the three-polar beaker type cells same as in the foregoing EXAMPLE 16, the organic electrolytes of the examples K to R as shown in Table 35 above were poured therein.

Each cell was charged and discharged in such a manner that it was charged with a current density of 1.0 mA/$cm^2$ at a temperature of 25 °C to occlude lithium ions until the electric potential of the test negative electrode became 0 V to the reference electrode, and, after it was allowed to stand for 10 minutes, it was discharged with the same currrent density to release lithium ions until the electric potential of the test negative electrode became 1.5 V to the reference electrode.

Table 37 below shows the discharge capacity rate and the charge and discharge efficiency of the cells using the examples K to R. The discharge capacity rate is obtained by using the equation (2) shown in the above.

TABLE 37

| | Discharge capacity rate (%) | Charge/discharge efficiency rate (%) |
|---|---|---|
| Example K | 36 | 52 |
| Example L | 55 | 73 |
| Example M | 86 | 80 |

TABLE 37 (continued)

| | Discharge capacity rate (%) | Charge/discharge efficiency rate (%) |
|---|---|---|
| Example N | 96 | 81 |
| Example O | 100 | 83 |
| Example P | 87 | 85 |
| Example Q | 52 | 89 |
| Example R | 16 | 89 |

2-oxo-4-trifuoromethyl-1,3-dioxolane used as the primary solvent, and diethyl carbonate used as the secondary solvent were mixed in the different mixing ratios with each other for evaluating charge and discharge characteristics thereof. As a result, there exhibited such a tendency that as the volume of 2-oxo-4-trifluoromethyl -1,3-dioxolane was increased, the charge/discharge efficiency was increased. When the volume of 2-oxo-4-trifluoromethyl-1,3-dioxolane accounted for 30% or more of the total volume of the whole solvents, there was obtained such a high charge /discharge efficiency that is 80% or more. As to the discharge capacity, as the volume rate of 2-oxo-4-trifluoromethyl-1,3-dioxolane was increased, it was also increased, and it tended to increase in the beginning, and thereafter when the volume of 2-oxo-5-fluoro-4-fluoro-4-methyl-1,3-dioxolane reached around 50% of the total volume of the whole solvents, it reached the maximum, and thereafter it tended to be declined. From these results, it can be seen that if the volume of 2-oxo-4-trifluoromethyl-1,3-dioxolane as the primary solvent is 30% or more and the volume of the secondary solvent is 40% or more of the total volume of the whole solvents, the reactivity between the negative electrode made of burned coke material and the electrolyte can be especially lowered, so that the high rat charge/discharge characteristics and excellent charge/discharge characteristics can also be obtained.

EXAMPLE 21

Using the three-polar beaker type cells same as in the foregoing EXAMPLE 6, the organic electrolytes of the examples S to Z and the examples a and b as shown in Table 38 below were poured therein. Using these cells, after the organic electrolytes of the example A, the conventional examples A and the comparative examples A to C as shown in the foregoing Table 28, are poured therein.

Each cell was charged and discharged in such a manner that it was charged with a current density of 1.0 mA/cm$^2$ at a temperature of 25 °C to occlude lithium ions until the electric potential of the test negative electrode became 0 V to the reference electrode, and; after it was allowed to stand for 10 minutes, it was discharged with the same current density to release lithium ions until the electric potential of the test negative electrode became 1.5 V to the reference electrode.

TABLE 38

| | Lithium salt | | Kind of solvent for electrolyte | |
|---|---|---|---|---|
| | Kind of lithium salt | Concentration mol/L | Solvent for electrolyte | Mixing ratio (by volume) |
| Example S | $LiPF_6$ | 1.0 | 4TFMEC+EC+DEC | 45:10:45 |
| Example T | $LiPF_6$ | 1.0 | 4TFMEC+EC+DEC | 40:20:40 |
| Example U | $LiPF_6$ | 1.0 | 4TFMEC+EC+DEC | 40:10:50 |
| Example V | $LiPF_6$ | 1.0 | 4TFMEC+EC+DEC | 30:20:50 |
| Example W | $LiPF_6$ | 1.0 | 4TFMEC+EC+DEC | 30:30:40 |
| Example X | $LiPF_6$ | 1.0 | 4TFMEC+DEC+EBC | 45:45:10 |
| Example Y | $LiPF_6$ | 1.0 | 4TFMEC+DEC+EBC | 40:40:20 |
| Example Z | $LiPF_6$ | 1.0 | 4TFMEC+DEC+EBC | 40:50:10 |
| Example a | $LiPF_6$ | 1.0 | 4TFMEC+DEC+EBC | 30:50:20 |
| Example b | $LiPF_6$ | 1.0 | 4TFMEC+DEC+EBC | 30:40:30 |

In Table 38, 4TFMEC stands for 2-oxo-4-trifluoromethyl-1,3-dioxolane , EC stands for ethylene carbonate and

DEC stands for diethyl carbonate and EBC stands for ethyl butyl carbonate. Table 39 below shows the charge and discharge efficiency for the cells of the examples S to Z and the examples a and b.

TABLE 39

| | Charge/discharge efficiency (%) |
|---|---|
| Example S | 85 |
| Example T | 85 |
| Example U | 87 |
| Example V | 85 |
| Example W | 79 |
| Example X | 86 |
| Example Y | 84 |
| Example Z | 85 |
| Example a | 82 |
| Example b | 76 |

As can be seen from the foregoing Tables 38 and 39, when the solvent mixture prepared by mixing 2-oxo-4-trifluoromethyl-1,3-dioxolane as the primary solvent and diethyl carbonate selected from the group of the above-mentioned five specified secondary solvents, that is, dimethyl carbonate, methyl ethyl carbonate, diethyl carbonate, methyl propyl carbonate and methyl butyl carbonate as the secondary solvent is added with the other low viscous solvents, that is, the additional secondary solvents, as long as the total volume of the primary solvent and the specified secondary solvent accounts for 80% or more of the total volume of the whole solvents, there can be obtained such a high charge/discharge efficiency of the test electrode made of artificial black lead which is higher in the reaction with the electrolyte, that is as high as 80% or more, without being influenced by the presence of the additional secondary solvent added.

EXAMPLE 22

Using the three-polar beaker type cells same as in forgoing EXAMPLE 16, the organic electrolytes of the examples S to Z and the examples a to d as shown in Table 38 below were poured therein. Using these cells, after the organic electrolytes of the example A, the conventional examples A and the comparative examples A to C as shown in the foregoing Table 28, are poured therein.

Each cell was charged and discharged in such a manner that it was charged with a current density of 1.0 mA/cm$^2$ at a temperature of 25°C to occlude lithium ions until the electric potential of the test negative electrode became 0 V to the reference electrode, and, after it was allowed to stand for 10 minutes, it was discharged with the same current density to release lithium ions until the electric potential of the test negative electrode became 1.5 V to the reference electrode.

Table 40 below shows the charge/discharge efficiency of the cells using the examples S to Z and the examples a to d.

TABLE 40

| | Charge/discharge efficiency (%) |
|---|---|
| Example S | 82 |
| Example T | 79 |
| Example U | 81 |
| Example V | 80 |
| Example W | 74 |
| Example X | 81 |
| Example Y | 78 |
| Example Z | 80 |

TABLE 40 (continued)

| | Charge/discharge efficiency (%) |
|---|---|
| Example a | 76 |
| Example b | 72 |

From the above, it can be seen that when the solvent mixture of 2-oxo-4-trifluoromethyl -1,3-dioxolane as the primary solvent and diethyl carbonate as specified secondary solvent is added with the additional secondary solvent, as long as the volume of the solvent mixture of the primary solvent and the specified secondary solvent is 80% or more of the total volume of the whole solvents, there can be obtained such a charge/discharge efficiency that is as high as 75% or more, without being influenced by the presence of the additional solvent added, even when artificial black lead artificial black lead which is high in the reactivity with solvents for an electrolyte is used.

EXAMPLE 23

A negative electrode and a positive electrode are put opposite one to another through a separator and the resultant cell assembly is placed in a battery container and the electrolytes of the examples B and D and the conventional examples B and C as shown in Table 41 below, were poured in the respective battery containers.

TABLE 41

| | Lithium salt | | Kind of solvent for electrolyte | | Burned coke material Charge/ discharge efficiency (%) |
|---|---|---|---|---|---|
| | Kind of lithium salt | Concentration mol/L | Solvent mixture | Mixing ratio (by volume) | |
| Example B | $LiPF_6$ | 1.0 | 4TFMEC+DMC | 50:50 | 91 |
| Example D | $LiPF_6$ | 1.0 | 4TFMEC+DEC | 50:50 | 87 |
| Conventional example B | $LiPF_6$ | 1.0 | PC+DMC | 50:50 | 69 |
| Conventional example C | $LiPF_6$ | 1.0 | PC+DEC | 50:50 | 67 |

More in detail, all of the foregoing coin type batteries were manufactured so that the ratio of capacity of the positive electrode and that of the negative electrode is 1 to 1, at the time of manufacturing thereof, and the other constructional components may have the same components, except for that each kind of the above-mentioned various electrolytes may be poured in every 30 coin type batteries.

TABLE 42

| | Discharge capacity rate (%) |
|---|---|
| Example B | 131.1 |
| Example D | 125.7 |
| Conventional Example B | 100.0 |
| Conventional Example C | 97.1 |

As can be seen from the foregoing Table 42, the batteries using the electrolytes of the examples according to this invention are superior to the ones using the conventional electrolytes in the discharge capacity efficiency. The reason why the discharge capacity at the first cycle is improved with the examples according to this invention is due to the fact that the reactivity between the burned coke material of the negative electrode and the electrolytes using the examples according to this invention are much lower than those using the conventional electrodes of the conventional examples, resulting in the higher charge/discharge efficiency, and larger energy density.

EXAMPLE 24

A negative electrode and a positive electrode are put opposite one to another through a separator and the resultant cell assembly is placed in a battery container, and the electrolyte of the examples B and D and the conventional examples B to D as shown in Table 43 below, were poured in the respective cell containers.

TABLE 43

| | Lithium salt | | Kind of solvent for electrolyte | | Artificial black lead Charge/ discharge efficiency (%) |
|---|---|---|---|---|---|
| | Kind of lithium salt | Concentration mol/L | Solvent mixture | Mixing ratio (by volume) | |
| Example B | $LiPF_6$ | 1.0 | 4TFMEC+DMC | 50:50 | 86 |
| Example D | $LiPF_6$ | 1.0 | 4TFMEC+DEC | 50:50 | 83 |
| Conventional Example B | $LiPF_6$ | 1.0 | PC+DMC | 50:50 | ---- |
| Conventional Example C | $LiPF_6$ | 1.0 | PC+DEC | 50:50 | --- |
| Conventional Example D | $LiPF_6$ | 1.0 | EC+DEC | 50:50 | 62 |

More in detail, all of the foregoing coin type batteries were manufactured so that the ratio of capacity of the positive electrode and that of the negative electrode is 1 to 1, at the time of manufacturing thereof, and the other constructional components may have the same components, except for that each kind of the above-mentioned various electrolytes may be poured in every 30 coin type batteries.

Table 44 shows the discharge capacity rate at the first cycle using each electrolyte.

TABLE 44

| | Discharge capacity rate (%) |
|---|---|
| Example B | 138.2 |
| Example D | 132.7 |
| Conventional Example B | - |
| Conventional Example C | - |
| Conventional Example D | 100.0 |

As shown in the above, in the batteries using the electrolytes of the conventional examples B and C wherein propylene carbonate is used as a solvent, almost all of the charged capacity of the positive electrode were spent for the reaction between the artificial black lead and the electrolyte, so that the capacity could not be effectively taken out, even when propylene carbonate having a high dielectric constant for an electrolyte as used. Thus, propylene carbonate can not be used when the carbon materials having higher degree of crystallization such as artificial black lead or the like are used for the negative electrode. In the prior art, ethylene carbonate had to be used because its reactivity with such carbon materials of higher degree of crystallization as artificial black lead is less than propylene carbonate. But, it has such problem that it is difficult in handling since its melting point is as high as 36.4°C and is solid at room temperature. Whereas, the batteries B and D according to this invention using 2-oxo-4-trifluoromethyl-1,3-dioxolane having a high dielectric constant for an electrolyte can be charged and discharged sufficiently, and there can be obtained such an improved charge and discharge character that the discharge capacity at the first or one cycle is superior to the battery the conventional examples B and C using the electrolyte including ethylene carbonate having a high dielectric constant, as a component for an electrolyte.

The reason for that is considered due to the fact that the battery of this kind using the electrolyte of the example of this invention, similar to the case of use burned coke material as an active material, has less reactivity of the artificial black lead with the electrolyte and higher charge/discharge efficiency than the battery using the electrolyte of the

conventional example. In addition, since 2-oxo-4-trifluoromethyl-1,3-dioxolane is liquid at room temperature, the handling thereof becomes much easier than that of ethylene carbonate.

Accordingly, it can be seen from the above-mentioned results that the lithium secondary battery using carbon materials for active materials for a negative electrode and using the electrode according to this invention, even when artificial black lead is used as an active material, has a larger energy density and a superior charge and discharge cycle characteristics than the battery using the conventional electrode, similar to the case where burned coke material is used as an active material. In addition, this invention is more effective as the degree of crystallization of carbon material is higher.

As for low viscous solvents, dimethyl carbonate, methyl ethyl carbonate, diethyl carbonate, methyl propyl carbonate, methyl butyl carbonate, dimethoxyethane, tetrahydrofuran, ethyl butyl carbonate and dibutyl carbonate were used for example in the foregoing EXAMPLES 17 and 18. But, this invention is not limited to these solvents. Also when the low viscous solvents as remunerated in the foregoing EXAMPLES 6 and 7 are used, similar effects are obtained. Furthermore, a solvent mixture of 2-oxo-4-trifluoromethyl-1,3-dioxolane and a single of low viscous solvents was used just for example, but, two kinds or more of the low viscous solvents can be used for mixing to obtain good results.

In the foregoing EXAMPLES 19 and 20, diethyl carbonate was used for the specified secondary solvent for example, the other specified secondary solvent such as dimethyl carbonate, methyl ethyl carbonate, methyl propyl carbonate, methyl propyl solvent can also be mixed with 2-oxo-4-trifluoromethyl-1,3-dioxolane.

In the foregoing EXAMPLES 21 and 22, diethyl carbonate was used as the specified secondary solvent for example, but, the other specified secondary solvent such as dimethyl carbonate, methyl ethyl carbonate, methyl propyl carbonate or methyl butyl carbonate can be used to obtain the similar effects. Also, as specified secondary solvents, only one solvent was mixed with 2-oxo-4-trifluoromethyl-1,3-dioxolane for example, two or more of such solvents can also be mixed with 2-oxo-4-trifluoromethyl-1,3-dioxolane.

In addition, diethyl carbonate or ethyl butyl carbonate was used as the additional secondary solvent for example, but, at least one kind of low viscous solvents as listed above can be mixed as the additional secondary solvent.

In the foregoing EXAMPLES 23 and 24, dimethyl carbonate or diethyl carbonate was used as the specified secondary solvent, but, methyl ethyl carbonate, methyl propyl carbonate or methyl butyl carbonate can be used as the specified secondary solvent.

As the specified secondary solvent, only a single solvent was mixed with the primary solvent, but, two or more of the specified secondary solvents can be mixed with the primary solvent.

In addition, any other secondary solvent than the above-mentioned specified secondary solvents was not mixed, but, at least one kind of the other secondary solvents can be mixed as an additional solvent.

In the foregoing EXAMPLES, $LiCoO_2$ was used as an active material for a positive electrode, but, among other materials capable of electro-chemically occluding and releasing lithium ions as enumerated above can be used and similar effects are obtained.

Throughout the foregoing EXAMPLES 15-24, $LiPF_6$ alone was used as a solute. But, other inorganic salts such as $LiClO_4$, $LiBF_4$, $LiAsF_6$, LiCl, LiBr and organic salts such as $LiB(C_6H_5)_4$, $LiC(SO_2CF_3)_3$, $LiOSO_2CF_3$ can be used and similar effects are obtained. Also the mixture of two kinds or more of the above salts mainly including $LiPF_6$ can be used.

As for carbon materials for a negative electrode, in the foregoing EXAMPLES, burned coke material and artificial black lead material were used, but natural black lead, burned ones of organic materials or graphitized ones thereof, etc. can be used. Also the mixture of two kinds or more of the carbon materials can be used and similar effects can be obtained.

As can be seen from the above EMBODIMENT of this invention, when the lithium secondary battery comprises 2-oxo-4-trifluoromethyl-1,3-dioxolane as a solvent for an organic electrolyte and carbon material capable of electrochemically occluding and releasing lithium ions as an active material for a negative electrode active material, it exhibits better battery performance than the conventional ones or other kind of fluorine substituted propylene carbonates. More in detail, 2-oxo-4-trifluoromethyl-1,3-dioxolane sufficiently suppresses the reaction between negative carbon material and the electrolyte and can improve the charge/discharge efficiency at the initial stage thereof, and as a result, it can provide the lithium battery with larger energy density. Also, if at least one kind of carbonates selected from the group of dimethyl carbonate, methyl ethyl carbonate, diethyl carbonate, methyl propyl carbonate and methyl butyl carbonate is mixed, it can provide the lithium secondary battery with excellent highratecharge/discharge characteristics in addition to other characteristics as mentioned above. In the mixture of 2-oxo-4-trifluoromethyl-1,3-dioxolane and at least one kind of the specified secondary solvents, the lithium secondary battery having, at a very high level, above-mentioned characteristics can be provided by defining the mixing ratio thereof. Also the handling of 2-oxo-4-trifluoromethyl-1,3-dioxolane is easier than that of ethylene carbonate due to its liquid phase at ambient temperature. Therefore, it is very beneficial in the industrial use thereof.

EMBODIMENT 7

A further another preferred EMBODIMENT of this invention will be described below for providing a high energy density of a lithium secondary battery capable of preventing the deterioration of the characteristics at a large or deep depth of charging for a positive electrode comprising at least one kind of lithium containing complex oxides having a crystal structure of $\alpha$-$NaCrO_2$.

As for the solvent for an organic electrolyte, at least one kind of fluorine substituted propylene carbonates, can provide the lithium secondary battery with the excellent battery characteristics as mentioned above.

In this case, when this solvent is used as the primary solvent and at least one kind of the above listed low viscous solvents is used as the secondary solvent for mixing them with each other, the viscosity of the resultant is lower and there can be obtained an excellent high rate charge/discharge characteristics of the battery.

Particularly when at least one kind selected from the group of dimethyl carbonate, methyl ethyl carbonate, diethyl carbonate, methyl propyl carbonate and methyl butyl carbonate and at least one kind of fluorine substituted propylene carbonates are mixed with each other, there can be obtained an excellent organic electrolyte which provides an improved high rate charge/discharge characteristics, and also prevents the deterioration of the positive active material comprising any kind of lithium-containing complex oxides having a structure of $\alpha$-$NaCrO_2$.

As for the other high dielectric secondary solvents, there are, for example, propylene carbonate, ethylene carbonate, butylene carbonate, $\gamma$-butylolactone, vinylene carbonate, 2-methyl-$\gamma$-butylolactone, acetyl-$\gamma$-butylolactone, $\gamma$-valerolactone, etc. Especially carbonic esters are electro-chemically stable, and with the side chains thereof being shorter, especially electro-chemical stability are more stable, and with the unsaturated bonds in the molecules thereof being less included, the electro-chemical stability is higher. From such a point of view, above all, ethylene carbonate and propylene carbonate are preferable, and either one or both thereof can be used as the secondary solvent.

A good charge/discharge characteristics of a lithium secondary battery can be obtained in such conditions that when the volume of the primary solvent which comprises at least one kind of fluorine substituted propylene carbonates is 30% or more of the total volume of the whole solvents for an organic electrolyte, that the secondary solvent which comprises at least one kind selected from the group of dimethyl carbonate, methyl ethyl carbonate, diethyl carbonate, methyl propyl carbonate, diethyl carbonate, methyl propyl carbonate and methyl butyl carbonate is 40% or more of the total volume thereof and that the total volume of the primary and secondary solvents is 80% or more thereof.

As for the solute for an organic electrolyte, any kind of the above listed inorganic and organic lithium salts can be used. However, it is preferable to use fluorine containing lithium salts in terms of safety. Particularly, $LiPF_6$ is preferable because of its high conductivity. Therefore, $LiPF_6$ alone or the mixture thereof wherein the $LiPF_6$ contains in majority is preferable.

As for an active material for a positive electrode, there is no limitation as long as it is such lithium containing complex oxides having a structure of $\alpha$-$NaCrO_2$ as $LiCoO_2$, $LiNiO_2$, $LiMnO_2$ etc.

In the lithium secondary battery with the positive electrode made of at least one of the lithium containing complex oxides having a structure of $\alpha$-$NaCrO_2$, the inventors have found, as a result of repeated tests for various solvents for an electrolyte, that when the batteries of this kind using the conventional electrolytes are charged repeatedly at a large or deep depth of charging, the structural destruction of the active materials for the positive electrodes takes place and a rapid deterioration of the characteristics thereof and the decrease in the capacity thereof takes place with the progress of the recharge cycles, whereas when fluorine substituted propylene carbonates are used as a solvent for an electrolyte for this kind of battery, the capacity decrease with the progress of repetition of recharge cycles even at such a large depth of charging as mentioned above is very small. The reason for this fact is not clear though, it is assumed that it is due to the interaction of the electrolyte and the positive active material.

However, fluorine substituted propylene carbonates bringing about this improved characteristics have the problem of viscosity. It is belonged to the group of the high viscosity solvents for the lithium secondary battery. Therefore, by mixing thereof with a low viscous solvent, the mobility of lithium ions in the electrolyte is increased to solve the problem. By doing so, when the mobility of lithium ions in electrolyte is increased, the conductivity is increased, and the polarization at the time of charge and discharge operation is decreased. As a result, it has a large effect to prevent the deterioration of the positive active material and provide an excellent lithium secondary battery of this kind which has an excellent high-rate charge/discharge characteristics.

The inventors further studied various combinations of fluorine substituted propylene carbonates as the primary solvent with solvents and various kind of low viscous solvents as the secondary solvent. As a result, it has been found out that when at least one kind selected from such five specified secondary solvent as listed above is used as the secondary solvent, there can be obtained the resultant solvent mixture bringing about, at a high level, both of the suppressing effect on the deterioration of the characteristics of the positive active material and the effect of improving a high rate charge/discharge characteristics thereof at the large or deep depth of charging, so that the lithium secondary battery having the solvent mixture of this primary solvent and the specified secondary solvent is superior in the charge/discharge characteristics to the lithium secondary battery having the solvent mixture of this primary solvent and the

other low viscous solvents as the secondary solvent.

The reason is considered to be due to the fact that the specified secondary solvents are higher stable to the radicals generated in the battery and more difficult to be decomposed than the other low viscous secondary solvents. In addition, it has been found that when the specified secondary solvents are used singly or when a plural kinds thereof are used, the similar effects of lowering the viscosity of the primary solvent can be brought about.

There is no limitation of the mixing ratio of the above primary solvent and the specified secondary solvent. Any ratio gives excellent suppressing effect to decrease the deterioration, at the large depth of charging, of the positive active material comprising the lithium containing complex oxides having the $\alpha$-$NaCrO_2$ structure as compared with the case of using the conventional electrolyte.

The above study has proved that the mixture of the primary solvent and the secondary solvent brings about the effect of decrease in viscosity. The inventors further studied the improvement in the charge/discharge characteristics of the lithium secondary battery. As a result, it has been found that a good lithium secondary battery can be obtained if the mixing ratio is as follows: The volume rate of the primary solvent which comprises at least one kind of fluorine substituted propylene carbonates is 30% or more of the total volume of the whole solvents for an electrolyte and the volume rate of the secondary solvent which comprises at least one kind selected from the group of dimethyl carbonate, methyl ethyl carbonate, diethyl carbonate, methyl propyl carbonate, diethyl carbonate, methyl propyl carbonate and methyl butyl carbonate is 40% or more of the total volume thereof and the total volume rate of the solvent mixture of the primary and secondary solvents is 80% or more of the total volume thereof, such a large effect is brought about that the positive active material having the $\alpha$-$NaCrO_2$a structure can be protected from the deterioration of the characteristics thereof at the large or deep charge depth, and, as a result, there can be obtained such an excellent lithium secondary battery that has higher energy density and more excellent high rate charge/discharge characteristics than the lithium secondary battery using the conventional type electrolyte.

The reason why the volume rate of the primary solvent has to be 30% or more thereof is because the suppressing of the reaction between the positive carbon material of this kind and the organic electrolyte solvent at the large depth of charge can largely be effected by that volume.

The reason why the volume rate of the above mentioned secondary solvent has to be 40% or more thereof is because there can be obtained especially high conductivity and high rate charge and discharge characteristics by that volume rate.

The reason why the total volume rate of the primary and secondary solvents has to be 80% or more thereof is because if the other solvent(s) is/are less than 20% thereof , it does not influence on the electrolyte adversely.

EXAMPLES that illustrate the detailed EMBODIMENT of this invention will be described as follows:

EXAMPLE 25

A test positive electrode using $LiCoO_2$ powder used as an active material was produced in such of a manner as in the foregoing EXAMPLE 1. Using a counter electrode and a reference electrode which were made of metallic lithium, three polar beaker type cells were prepared by combining the above test electrodes therewith. The electrolytes corresponding to the examples A to C and the conventional example A as shown in Table 45 below were poured in the respective cells.

TABLE 45

| | Lithium salt | | Kind of solvent for electrolyte |
|---|---|---|---|
| | Kind of lithium salt | Concentration mol/L | |
| Example A | $LiPF_6$ | 1.0 | 5F4FPC |
| Example B | $LiPF_6$ | 1.0 | 5FPC |
| Example C | $LiPF_6$ | 1.0 | 4FPC |
| Conventional Example A | $LiPF_6$ | 1.0 | PC |

In Table 45, 5F4FPC stands for 2-oxo-5-fluoro-4-fluoro-4-methyl-1,3-dioxolane , 5FPC stands for 2-oxo-5-fluoro-4-methyl-1,3-dioxolane, 4FPC stands for 2-oxo-4-fluoro-4-methyl-1,3-dioxolane, PC stands for propylene carbonate.

Each of these cells was charged with a current density of 0.1 mA/cm$^2$ at a temperature of 25 °C until the electric potential of the test electrode became 4.5 V to the reference electrode, and after it was allowed to stand for 10 minutes, it was discharged with the same current density until the electric potential thereof became 2.75 V to the reference electrode.

Table 46 below shows the discharge capacity retention rate at the 50th cycle for the cells using the examples A to C and the conventional example A.

TABLE 46

| | Discharge capacity retention rate at the 50th cycle (%) |
|---|---|
| Example A | 84 |
| Example B | 78 |
| Example C | 78 |
| Conventional Example A | 29 |

As can bee seen from the Tables 45 and 46, as to the discharge capacity retention rate at the 50th cycle, the cells using the examples A to C are much higher than the cell using conventional example A.

If can be seen therefrom that use of the electrolyte according to this invention brings about the effect to suppress the deterioration of the characteristics of the test positive electrode comprising a lithium containing complex oxide having the $\alpha$-$NaCrO_2$ structure at the large or deep depth of charging, and the deterioration of the characteristics is much less even by charging at the large depth of charging than the use of the conventional electrolyte.

EXAMPLE 26

Using the three-polar beaker type cells same as ones used in the foregoing EXAMPLE 25, the organic electrolytes of the examples D to L and the conventional examples B and C as shown in Table 47 below were poured therein.

Each of the cells was charged with a current density of 1.0 $mA/cm^2$ at a temperature of 25°C until the electric potential of the test negative electrode became 4.5 V to the reference electrode, and after it was allowed to stand for 10 minutes, it was discharged with the same current density until the electric potential thereof became 2.75 V to the reference electrode.

TABLE 47

| | Lithium salt | | Kind of solvent for electrolyte | | Mixing ratio (by volume) |
|---|---|---|---|---|---|
| | Kind of lithium salt | Concentration mol/L | Primary solvent | Secondary solvent | |
| Example D | $LiPF_6$ | 1.0 | 5F4FPC | DMC | 50:50 |
| Example E | $LiPF_6$ | 1.0 | 5F4FPC | MEC | 50:50 |
| Example F | $LiPF_6$ | 1.0 | 5F4FPC | DEC | 50:50 |
| Example G | $LiPF_6$ | 1.0 | 5F4FPC | MPC | 50:50 |
| Example H | $LiPF_6$ | 1.0 | 5F4FPC | MBC | 50:50 |
| Example I | $LiPF_6$ | 1.0 | 5F4FPC | DME | 50:50 |
| Example J | $LiPF_6$ | 1.0 | 5F4FPC | THF | 50:50 |
| Example K | $LiPF_6$ | 1.0 | 5F4FPC | EBC | 50:50 |
| Example L | $LiPF_6$ | 1.0 | 5F4FPC | DBC | 50:50 |
| Conventional Example B | $LiPF_6$ | 1.0 | PC | DMC | 50:50 |
| Conventional Example C | $LiPF_6$ | 1.0 | PC | DEC | 50:50 |

In Table 47, 5F4FPC stands for 2-oxo-5-fluoro-4-fluoro-4-methyl-1,3-dioxolane, PC stands for propylene carbonate, DMC sands for dimethyl carbonate. MEC stands for methyl ethyl carbonate, DEC stands for diethyl carbonate, MPC stands for methyl propyl carbonate, MBC stands for methyl butyl carbonate, DME stands for dimethoxy ethane, THF stands for tetrahydrofuran, EBC stands for ethyl butyl carbonate, DBC stands for dibutyl carbonate.

Table 48 below shows the discharge capacity retention rate at the 50th cycle for the cells using the examples

D to L and the cells using the conventional examples B and C.

TABLE 48

| | Discharge capacity retention rate at the 50th cycle (%) |
|---|---|
| Example D | 82 |
| Example E | 79 |
| Example F | 76 |
| Example G | 77 |
| Example H | 74 |
| Example I | 65 |
| Example J | 62 |
| Example K | 69 |
| Example L | 63 |
| Conventional Example B | 38 |
| Conventional Example C | 33 |

As can be seen from Table 48, the discharge capacity retention rates at the 50th cycle obtained with the electrolytes of the examples D to L are much higher than those with the electrolytes of the conventional examples B and C.

It can be seen therefrom that use of the electrolyte according to this invention brings about the effect to suppress the deterioration of the characteristics of the active material for the positive electrode comprising a lithium containing complex oxide having the $\alpha$-$NaCrO_2$ structure at the large or deep depth of charging, and the deterioration of the characteristics is much less even by charging at the large depth of charging than the case of using the conventional electrolytes.

Also it can be seen from the above comparison between the group of the examples D to H and the group of the examples I to L that the discharge capacity retention rate at 50th cycle for the test electrode exceeds 70% when using the specified secondary solvent selected from the group of dimethyl carbonate, methyl ethyl carbonate, diethyl carbonate, methyl propyl carbonate and methyl butyl carbonate as compared with using the other low viscous solvents comprising other esters or others having larger molecular weights, and these specified solvents are largely effective to protect the negative active material from deterioration at the large depth of charging.

Further, from comparison of this EXAMPLE with the foregoing EXAMPLE 25, it can be seen that there can be obtained an excellent high battery characteristics even when charging and discharging with such a high current density that is 10 times that in the case of foregoing Example 25, by mixing fluorine substituted propylene carbonates with low viscous solvents.

EXAMPLE 27

Using the three-polar beaker type cells same as used in the foregoing EXAMPLE 25, the organic electrolytes of the examples M to T as shown in Table 49 below were poured therein.

Each of the cells was charged with a current density of 1.0 mA/cm$^2$ at a temperature of 25°C until the electric potential of the test electrode became 4.5 V to the reference electrode, and after standing for 10 minutes, it was discharged with the same current density until the electric potential thereof became 2.75 V to the reference electrode.

TABLE 49

| | Lithium salt | | Kind of solvent for electrolyte | | Mixing ratio (by volume) |
|---|---|---|---|---|---|
| | Kind of lithium salt | Concentration mol/L | Primary solvent | Secondary solvent | |
| Example M | $LiPF_6$ | 1.0 | 5F4FPC | DEC | 10:90 |
| Example N | $LiPF_6$ | 1.0 | 5F4FPC | DEC | 20:80 |

TABLE 49 (continued)

| | Lithium salt | | Kind of solvent for electrolyte | | Mixing ratio (by volume) |
|---|---|---|---|---|---|
| | Kind of lithium salt | Concentration mol/L | Primary solvent | Secondary solvent | |
| Example O | $LiPF_6$ | 1.0 | 5F4FPC | DEC | 30:70 |
| Example P | $LiPF_6$ | 1.0 | 5F4FPC | DEC | 40:60 |
| Example Q | $LiPF_6$ | 1.0 | 5F4FPC | DEC | 50:50 |
| Example R | $LiPF_6$ | 1.0 | 5F4FPC | DEC | 60:40 |
| Example S | $LiPF_6$ | 1.0 | 5F4FPC | DEC | 70:30 |
| Example T | $LiPF_6$ | 1.0 | 5F4FPC | DEC | 80:20 |

In Table 49 above, 5F4FPC stands for 2-oxo-5-fluoro-4-fluoro-4-methyl-1,3-dioxolane and DEC stands for diethyl carbonate.

Table 50 below shows the discharge capacity retention rate at the 10th cycle and that the 50th cycle for the cells using the examples M to T.

TABLE 50

| | Discharge capacity rate at the 10th cycle (%) | Discharge capacity retention rate at the 50th cycle |
|---|---|---|
| Example M | 31 | 41 |
| Example N | 49 | 54 |
| Example O | 83 | 72 |
| Example P | 95 | 75 |
| Example Q | 100 | 76 |
| Example R | 75 | 75 |
| Example S | 33 | 78 |
| Example T | 10 | 81 |

The figures of the discharge capacity rates as shown in Table 50 above are obtained by the following equation (3).

$$\text{Discharge capacity rate at the 10th cycle (\%)} = \frac{\text{Discharge capacity of test electrode using electrolyte of each example at the 10th cycle}}{\text{Discharge capacity of the electrolyte using electrolyte of example Q at the 10th cycle}} \text{ X } 100 \qquad (3)$$

The charge/discharge characteristics is evaluated in the case of varying the mixing ratio of 2-oxo-5-fluoro-4-fluoro-4-methyl-1,3-dioxolane as the primary solvent and diethyl carbonate as the secondary solvent, and as a result it has been found that with the increase of the volume rate of 2-oxo-5-fluoro-4-fluoro-4-methyl-1,3-dioxolane, the discharge capacity retention rate at the 50th cycle tends to be increased and when 2-oxo-5-fluoro-4-fluoro-4-methyl-1,3-dioxolane is 30% of the total volume of the whole solvents, there can be obtained such a high discharge capacity retention rate that exceeds 70%, and, in addition, with the increase of the volume rate of 2-oxo-5-fluoro-4-fluoro-4-methyl-1,3-dioxolane, the discharge capacity retention rate at the 10th cycle tends to be increased in the beginning, and thereafter it becomes the maximum when the volume rate of 2-oxo-fluoro-4-fluoro-4-methyl-1,3-dioxolane is about 50% of the total volume thereof, and thereafter it tends to be decreased and when the volume rate of 2-oxo-5-fluoro-4-fluoro-4-methyl-1,3 dioxolane is in the range of 30% to 60% of total volume of the whole solvents for the electrolyte, there can be obtained such a high discharge capacity retention rate at the 10th cycle that is 75% or more. From this results, it can be understood that when volume of any kind of fluorine substituted propylene carbonates accounts for 30% or more of the total volume of the whole solvents and the volume of the secondary solvent accounts for 40% or more of the total volume thereof, there can be obtained especially large effect to suppress the deterioration, at the large depth

of charging, of the characteristics of the active material for the test electrode comprising a lithium containing complex oxide having the α-$NaCrO_2$ structure, so that especially excellent battery characteristics of high-rate charge/discharge efficiency can be obtained.

EXAMPLE 28

Using the three-polar beaker type cells same as used in EXAMPLE 25, the organic electrolytes of the examples U and Z and the examples a to d, as shown in Table 51 below were poured therein.

Each of the cells was charged with a current density of 1.0 mA/cm$^2$ at a temperature of 25°C until the electric potential of the test electrode became 4.5 V to the reference electrode, and after standing for 10 minutes, it was discharged with the same current density until the electric potential thereof became 2.75 V to the reference electrode.

TABLE 51

| | Lithium salt | | Kind of solvent for electrolyte | | Mixing ratio (by volume) |
|---|---|---|---|---|---|
| | Kind of lithium salt | Concentration mol/L | Primary solvent | Secondary solvent | |
| Example U | $LiPF_6$ | 1.0 | 5F4FPC | EC+DEC | 45:10:45 |
| Example V | $LiPF_6$ | 1.0 | 5F4FPC | EC+DEC | 40:20:40 |
| Example W | $LiPF_6$ | 1.0 | 5F4FPC | EC+DEC | 40:10:50 |
| Example X | $LiPF_6$ | 1.0 | 5F4FPC | EC+DEC | 30:20:50 |
| Example Y | $LiPF_6$ | 1.0 | 5F4FPC | EC+DEC | 30:30:40 |
| Example Z | $LiPF_6$ | 1.0 | 5F4FPC | DEC+EBC | 45:45:10 |
| Example a | $LiPF_6$ | 1.0 | 5F4FPC | DEC+EBC | 40:40:20 |
| Example b | $LiPF_6$ | 1.0 | 5F4FPC | DEC+EBC | 40:50:10 |
| Example c | $LiPF_6$ | 1.0 | 5F4FPC | DEC+EBC | 30:50:20 |
| Example d | $LiPF_6$ | 1.0 | 5F4FPC | DEC+EBC | 30:40:30 |

In Table 51 above, 5F4FPC stands for 2-oxo-5-fluoro-4-fluoro-4-methyl-1,3-dioxolane, EC stands for ethylene carbonate, DEC stands for diethylene carbonate, EBC stands for ethyl butyl carbonate.

Table 52 below shows the discharge capacity retention rate at the 50th cycle for the cells using the examples U to Z and the cells using the examples a and d.

TABLE 52

| | Discharge capacity retention rate at the 50th cycle (%) |
|---|---|
| Example U | 72 |
| Example V | 72 |
| Example W | 75 |
| Example X | 70 |
| Example Y | 68 |
| Example Z | 73 |
| Example a | 70 |
| Example b | 72 |
| Example c | 70 |
| Example d | 63 |

As can be seen from the above results, when the mixture of 2-oxo-5-fluoro-4-fluoro-4-methyl-1,3-dioxolane

used as the primary solvent and diethyl carbonate used as the secondary solvent are added with the additional secondary solvent, good results can be obtained only if the total volume of the primary solvent and the specified secondary solvent is 80% or more of the total volume of the whole solvents, such a high discharge capacity retention rate at the 50th cycle that is 70% or more can be obtained, without being influenced by the presence of the additional secondary solvent added.

EXAMPLE 29

A negative electrode and a positive electrode are put opposite one to another through a separator and the resultant cell assembly is placed in a battery container, and the electrolytes of the examples D and F and the conventional examples B and C as shown in Table 53 below, were poured in the respective battery containers. Thus, respective coin type batteries were manufactured.

TABLE 53

| | Lithium salt | | Kind of solvent for electrolyte | | |
|---|---|---|---|---|---|
| | Kind of lithium salt | Concentration mol/L | Primary solvent | Secondary solvent | Mixing ratio (by volume) |
| Example D | $LiPF_6$ | 1.0 | 5F4FPC | DMC | 50:50 |
| Example F | $LiPF_6$ | 1.0 | 5F4FPC | DEC | 50:50 |
| Conventional Example B | $LiPF_6$ | 1.0 | PC | DMC | 50:50 |
| Conventional Example C | $LiPF_6$ | 1.0 | PC | DEC | 50:50 |

More in detail, all of the foregoing coin type batteries were manufactured so that the ratio of capacity of the positive electrode and that of the negative electrode is 1 to 1, at the time of manufacturing thereof, and the other constructional components may have the same components, except for that each kind of the above-mentioned various electrolytes may be poured in every 30 coin type batteries.
As to the positive electrode, negative electrode and the separator, there were used the same ones as those used in the foregoing EXAMPLE 13.
Each of the cells was charged with a current value of 0.20 CmA at a temperature of 25°C until the battery voltage became 4.5 V, and after standing for 10 minutes, it was discharged with the same current value until the battery voltage became 2.75 V, and the discharge capacity retention rate at the 300 cycle for each battery was measured for comparison by using the charge and discharge measuring apparatus.
Table 54 below shows the discharge capacity rate at the 300th cycle for the battery using each electrolyte. The each value is given in terms of an average of the 30 cells for each electrode.

TABLE 54

| | Discharge capacity at the 300th cycle (%) |
|---|---|
| Example D | 262 |
| Example F | 245 |
| Conventional Example B | 100 |
| Conventional Example C | 72 |

Thus, it can be seen therefrom that the discharge capacity retention rate at the 300th cycle of the batteries using the electrolytes of the examples are much larger than that of the batteries using the electrolytes of the conventional examples. The reason why the discharge capacity rate at the 300th cycle is improved by the electrolytes according to this invention is owing to the fact that the electrolytes according to this invention bring about the effect to suppress the deterioration of the characteristics of the positive active material comprising the lithium containing complex oxides having $\alpha$-$NaCrO_2$ structure at the large depth of charging as compared with the use of the conventional electrolytes. Accordingly, it can be understood that, with the lithium secondary battery using the positive active material of this kind, the charge/discharge cycle characteristics is sufficiently superior even the charge/discharge cycles at the large or deep depth of charging to the case of use of the conventional batteries of the conventional electrolytes, so that larger discharge capacity can be taken out at each cycle, and consequently the lithium secondary battery has the larger energy density than the conventional batteries using the conventional electrolytes.

In the foregoing EXAMPLE 25, 2-oxo-5-fluoro-4-fluoro-4-methyl-1,3-dioxolane, 2-oxo-5-fluoro-4-methyl-1,3-dioxolane and 2-oxo-4-fluoro-4-methyl-1,3-dioxolane were used for example, but other kinds of fluorine substituted propylene carbonates can be used, and the above-mentioned effects can be obtained.

Also, in the foregoing EXAMPLE 26, 2-oxo-5-fluoro-4-fluoro-4-methyl-1,3-dioxolane was used just for example, but other kinds of fluorine substituted propylene carbonates can be obtained.

As for the low viscous solvents, dimethyl carbonate, methyl ethyl carbonate, diethyl carbonate, methyl propyl carbonate, methyl butyl carbonate, dimethoxy ethane, tetrahydrofran, ethyl butyl carbonate, dibutyl carbonate were used for example, but this invention is not limited to these solvents. Any other kind of low viscous solvents as listed in the foregoing can be used and similar effects can be obtained. Furthermore, a single one kind of the low viscous solvent was mixed with fluorine substituted propylene carbonates for example, but, plural kinds of the low viscous solvents can be used, and the similar effects can be obtained.

In the foregoing EXAMPLE 27, 3-fluoro-4-fluoro-propylene carbonate was used for example, any other kinds of fluorine substituted propylene carbonate can be used and the above-mentioned effect can be obtained.

Also, diethyl carbonate was used as the secondary solvent, but, any other kind selected from dimethyl carbonate, methyl ethyl carbonate, methyl propyl carbonate and methyl butyl carbonate can be selectively used and similar effects can be obtained.

Further, only a single solvent was mixed with fluorine substituted propylene carbonates just for example, but, plural kinds of the secondary solvents with a low viscosity can be mixed therewith.

Further, in the foregoing EXAMPLE 28, 3-fluoro-4-fluoro-propylene carbonate was used just for example, but any other kind of fluorine substituted propylene carbonates can be used, and the above effects can be obtained.

Further, diethyl carbonate was used for the specified secondary solvent just for example, but, any other kind of the specified secondary solvent such as dimethyl carbonate, methyl ethyl carbonate, methyl propyl carbonate or methyl butyl carbonate can be used to obtain similar effects. In this case, only a single solvent was used for example, but, plural kinds of the secondary solvents can also be used.

Furthermore, ethylene carbonate or ethyl butyl carbonate was used as the other additional, but any other low viscous solvents as enumerated in the foregoing EXAMPLES can be used as the additional solvent for mixing with the specified secondary solvent. In the EXAMPLE 29, 2-oxo-5-fluoro-4-fluoro-4-methyl-1,3-dioxolane was used for example, but, any other kind of fluorine substituted propylene carbonates can be used, and the above effect can be obtained.

Furthermore, dimethyl carbonate or diethyl carbonate was used as the specified secondary solvent just for example, but, any other specified secondary solvent as listed above can be used to obtain similar results.

In the above case, only a single solvent was mixed with fluorine substituted propylene carbonates for example, but, at least one kind of the above enumerated specified secondary solvents can be mixed with at least one kind of fluorine substituted propylene carbonates.

In addition, ethylene carbonate or ethyl butyl carbonate was used as the additional secondary solvent for example, but at least one kind of other low viscous solvents as enumerated above can be mixed with the solvent mixture of the primary solvent and the specified solvent.

Furthermore, as for the active materials for a negative electrode, burned coke material was used as the active material therefor, but at least one kind selected from the group of such carbon material artificial black lead, natural black lead, burned products of organic materials, grapahitized ones of these materials, metallic lithium, lithium alloys, etc. can be used selectively, and the similar effects can be obtained.

Throughout the EXAMPLES 25 to 27, one kind of fluorine substituted propylene carbonates was used for example, but, it is of course that plural kinds thereof can be used as the primary solvent.

As to the active materials for a positive electrode, there was used only $LiCoO_2$ for example, but it is of course that at least one kind of the lithium containing complex oxides having the $\alpha$ -$NaCrO_2$ structure such as $LiNiO_2$, $LiMnO_2$, etc. can be used, and similar effects can be obtained.

Furthermore, $LiPF_6$ alone was used as a solute for example, but other inorganic salts such as $LiClO_4$, $LiBF_4$, $LiAsF_6$, LiCl, LiBr or organic salts such as $LiB(C_6H5)_4$, $LiC(SO_2CF_3)_3$, $LiOSO_2CF_3$ can selectively used and similar effects can be obtained. In this case the mixture of plural kinds of the above-listed lithium can be used, and also the mixture of the above salts with or without $LiPF_6$ can be used.

Thus, according to the above embodiment of this invention, when an organic electrolyte comprising lithium salt as a solute and at least one kind of fluorine substituted propylene carbonates as a solvent is used as an electrolyte for a lithium secondary battery using as an active material for a positive electrolyte a lithium containing complex oxides having a $\alpha$-$NaCrO_2$ structure, it is more effective in suppressing the deterioration of the characteristics of the positive active material at the deep or large depth of charging than the conventional electrolytes, and there can be provided a lithium secondary battery having a larger energy density.

In addition, when a solvent mixture of at least one kind of fluorine substituted propylene carbonates as the

primary solvent and at least one kind selected from the group of dimethyl carbonate, methyl ethyl carbonate, diethyl carbonate, methyl propyl carbonate and methyl butyl carbonate as a specified secondary solvent used for decreasing the viscosity of the primary solvent is used as the electrolyte, there can be provided a lithium secondary battery which has the effect to improve especially the high rate charge/discharge characteristics, in addition to the above-mentioned suppressing effect.

In the case of using the solvent mixture of the primary solvent and the specified secondary solvent , if the mixture ratio thereof is so defined as mentioned above, there can be provided a lithium secondary battery which has the above-mentioned two effects at a high level, and thus this invention is high in utility value in the industrial application.

EMBODIMENT 8

Next, a preferred embodiment of this invention will be described below for providing a lithium secondary battery having the positive electrolyte comprising at least one kind of lithium containing complex oxides having the $\alpha$-$NaCrO_2$ structure which is excellent especially in suppressing the deterioration of the characteristics of the positive active material and is improved in the energy density.

Namely, more in detail, in the lithium secondary battery comprising a negative electrode made of at least one kind of carbon materials capable of electro-chemically occluding and releasing ions such as metallic lithium, lithium alloys, etc., a positive electrode made of at least one kind of lithium containing complex oxides having the $\alpha$-$NaCrO_2$ structure and an electrolyte comprising a solute and a solvent, according to this invention, it is characterized in that the solvent for the electrolyte comprising at least 2-oxo-4-trifluoromethyl-1,3-dioxolane as a primary solvent and a viscous solvent.

As mentioned in the foregoing EMBODIMENT 7, when any kind of fluorine substituted propylene carbonates is used as a solvent, there is brought about such effects that the deterioration of the characteristics of the active material for the positive electrolyte of this kind at the large depth of charging and the discharge capacity is increased. However, it has been found out that above all, since 2-oxo-4-trifluoromethyl-1,3-dioxolane has fluorine substituted methyl group; that part becomes an electron attractive property, so that it is considered that the effect of suppression of the deterioration of the characteristics thereof at the time of charge and discharge cycles is superior and also the battery performance become especially superior to the solvent using propylene carbonate of which three hydrogen atoms of the methyl group are not substituted with three fluorine atoms at all. As in the case of the EMBODIMENT 7, it is preferable that it is mixed with any kind of solvents with a low viscosity as a secondary solvent to make a solvent mixture which is lowered in the viscosity and brings about the improvement of the high rate discharge characteristics.

Especially, when at least one kind selected from the group of dimethyl carbonate, methyl ethyl carbonate, diethyl carbonate, methyl propyl carbonate, methyl propyl carbonate and methyl butyl carbonate is used as the secondary solvent, there can be obtained the solvent mixture which brings about less deterioration of the positive active material at the large depth of charging high-rate discharge characteristics.

In this case, when the solvent mixture thereof is used, a good charge/discharge characteristics can be obtained when the mixing ratio thereof meets such conditions that the volume rate of the primary solvent comprising at least 2-oxo-4-trifluoromethyl-1,3-dioxolane is 30% or more of the total volume of the whole solvents for an organic electrolyte, that the volume rate of the secondary solvent comprising at least one kind selected from the group of dimethyl carbonate, methyl ethyl carbonate, diethyl carbonate, methyl propyl carbonate, diethyl carbonate, methyl propyl carbonate and methyl butyl carbonate is 40% or more of the total volume thereof , and that secondary solvent is 80% or more of the total volume thereof.

For the other low viscous solvents, any kind thereof may be mixed with 2-oxo-4-trifluoromethyl-1,3-dioxolane. There are such solvents having a high dielectric constant solvent such as propylene carbonate, ethylene carbonate, butylene carbonate, $\gamma$ -butylolactone, vinylene carbonate, 2-methyl-$\gamma$-butylo lactone, acetyl-$\gamma$-butylolactone, $\gamma$-valerolactone, etc. Among them, it is preferable to use ethylene carbonate or propylene carbonate alone or in the mixture thereof since they are electro-chemically stable. Now, the detailed examples of this invention will be described below.

EXAMPLE 30

A test positive electrode using $LiCoO_2$ powder used as an active material was produced in such of a manner as in the foregoing EXAMPLE 25. Using a counter electrode and a reference electrode which are made of metallic lithium, three polar beaker type cells were prepared by combining the above test electrodes therewith. The electrolytes corresponding to the examples A to C and the conventional example A and the comparative examples A to C as shown in Table 55 below were poured in the respective cells.

TABLE 55

| | Lithium salt | | Kind of solvent for electrolyte |
|---|---|---|---|
| | Kind of lithium salt | Concentration mol/L | |
| Example A | $LiPF_6$ | 1.0 | 4TFMEC |
| Conventional Example A | $LiPF_6$ | 1.0 | PC |
| Comparative Example A | $LiPF_6$ | 1.0 | 5F4FPC |
| Comparative Example B | $LiPF_6$ | 1.0 | 5FPC |
| Comparative Example C | $LiPF_6$ | 1.0 | 4FPC |

In Table 55 above, 4TFMEC stands for 2-oxo-4-trifluoromethyl-1,3-dioxolane , PC stands for propylene carbonate, 5F4FPC stands for 2-oxo-5-fluro-4-fluoro-4-methyl-1,3-dioxolane, 5FPC stands for 2-oxo-5-fluoro-4-methyl-1,3-dioxolane, 4FPC stands for 4-fluoro-4-methyl- 1,3-dioxolane

Each of these cells was charged with a current density of 0.1 $mA/cm^2$ at a temperature of 25°C until the electric potential of the test electrode became 1.5 V to the reference electrode, and after standing for 10 minutes, it was discharged with the same density until the electric potential thereof became 0 V to the reference electrode.
Table 56 below shows the discharge capacity retention rate at the 50th cycle for the cells using the example A and the conventional example A and the comparative examples A to C.

TABLE 56

| | Discharge capacity retention rate at the 50th cycle (%) |
|---|---|
| Example A | 86 |
| Conventional Example A | 27 |
| Comparative Example A | 83 |
| Comparative Example B | 78 |
| Comparative Example C | 76 |

As can be seen from the Tables 55 and 56, as to the discharge capacity retention rate at the 50th cycle, the cell using the example A is much higher than the cells using the conventional example A.

It can be seen therefrom that use of the electrolyte according to this invention brings about the effect to suppress the deterioration of the characteristics of the test positive electrode comprising a lithium containing complex oxide having the $\alpha$-$NaCrO_2$ structure at the large or deep depth of charging, and the deterioration of the characteristics is much less even by charging at the large depth of charging than the use of the conventional electrolyte.

Also, from the comparison between the example and the comparative examples, it can be seen that this invention electrolyte brings about superior charge/discharge characteristics to the comparative examples. This superiority is considered to be owing to the fact that 2-oxo-4-trifluoromethyl-1,3-dioxolane is more electro-chemically stable than the other kinds of fluorine substituted propylene carbonates.

EXAMPLE 31

Using the same three polar beaker type cells as ones used in the foregoing EXAMPLE 25, the organic electrolytes of the examples B to J and the conventional examples B and C as shown in Table 57 below were poured in these cells.
Each of these cells thus produced was charged with a current density of 1.0$mA/cm^2$ at a temperature of 25°C until the electric potential of the test electro es became 4.5 V to the reference electrode and after standing for 10 minutes, it was discharge with the same current density until the electric potential thereof became 2.75 V to the reference electrode.

TABLE 57

| | Lithium salt | | Kind of solvent for electrolyte | |
|---|---|---|---|---|
| | Kind of lithium salt | Concentration mol/L | Solvent mixture | Mixing ratio (by volume) |
| Example B | $LiPF_6$ | 1.0 | 4TFMEC+DMC | 50:50 |
| Example C | $LiPF_6$ | 1.0 | 4TFMEC+MEC | 50:50 |
| Example D | $LiPF_6$ | 1.0 | 4TFMEC+DEC | 50:50 |
| Example E | $LiPF_6$ | 1.0 | 4TFMEC+MPC | 50:50 |
| Example F | $LiPF_6$ | 1.0 | 4TFMEC+MBC | 50:50 |
| Example G | $LiPF_6$ | 1.0 | 4TFMEC+DMC | 50:50 |
| Example H | $LiPF_6$ | 1.0 | 4TFMEC+THF | 50:50 |
| Example I | $LiPF_6$ | 1.0 | 4TFMEC+EBC | 50:50 |
| Example J | $LiPF_6$ | 1.0 | 4TFMEC+DBC | 50:50 |
| Conventional Example B | $LiPF_6$ | 1.0 | PC +DMC | 50:50 |
| Conventional Example C | $LiPF_6$ | 1.0 | PC +DEC | 50:50 |

In Table 57 above, 4TFMEC stands for 2-oxo-4-trifluoromethyl-1,3-dioxolane , PC stands for propylene carbonate, DMC stands for dimethyl carbonate, MBC stands for methyl butyl carbonate, MEC stands for methyl ethyl carbonate, DEC stands for diethyl carbonate, MPC stands for methyl ethyl carbonate, DME stands for dimethoxy ethane THF stands for tetrahydrofuran, EBC stands for ethyl butyl carbonate, DBC stands for dibutyl carbonate.

Table 58 below shows the discharge capacity retention rate at the 50th cycle for the examples B to J and the conventional examples B and C.

TABLE 58

| | Discharge capacity retention rate at the 50th cycle (%) |
|---|---|
| Example B | 85 |
| Example C | 84 |
| Example D | 79 |
| Example E | 79 |
| Example F | 75 |
| Example G | 67 |
| Example H | 63 |
| Example I | 70 |
| Example J | 66 |
| Conventional Example B | 38 |
| Conventional Example C | 30 |

As can be seen from the Table 58 , the discharge capacity retention rates at the 50th cycle obtained with the electrolytes of the examples B to J are much higher than those with the electrolytes of the conventional examples B and C.

It can be seen from the above results that even when 2-oxo-4-trifluoromethyl-1,3-dioxolane is used to be mixed with various kinds of low viscous solvents, there can be brought about the effect of suppressing the deterioration of the characteristics of the active material for the test electrode comprisng lithium containg complex oxide having the $\alpha$-$NaCrO_2$ structure when the large depth of charging was carried out, as compared with the use of the conventional type electrolyte, so that the deterioration of the characteristics thereof becomes smaller even when the charging was

carried out as far as the deep depth of charging as compared with use of the conventional electrolytes.

Also it can be seen from the comparison between the group of the examples D to F and the group of the examples G to L that the discharge capacity retention rate at the 50th cycle for the test electrode exceeds 75% when using the specified secondary solvent selected from the group of dimethyl carbonate, methyl ethyl carbonate, diethyl carbonate, methyl propyl carbonate and methyl butyl carbonate as compared with using the other low viscous solvents comprising other esters or others having longer molecular weights, and these specified solvents are largely effective to protect the negative active material from deterioration at the large depth of charging.

Further, from comparison of this EXAMPLE with the forgoing EXAMPLE 30, it can be seen that there can be obtained an excellent high battery characteristics even when charging and discharging with such a high current density that is 10 times that in the case of the foregoing EXAMPLE 30, by mixing 2-oxo-4-trifluoromethyl-1,3-dioxolane with low viscous solvents.

EXAMPLE 32

Using the three-polar beaker type cells same as ones used in the foregoing EXAMPLE 30, the organic electrolytes of the examples K to R shown in Table 59 below were poured therein.

Each of the cells was charged with a current density of 1.0mA/cm$^2$ at a temperature of 25°C until the electric potential of the test electrode became 4.5 V to the reference electrode, and after standing for 10 minutes, it was discharged with the same current density until the electric potential became 2.75 V to the reference electrode.

TABLE 59

| | Lithium salt | | Kind of solvent for electrolyte | |
|---|---|---|---|---|
| | Kind of lithium salt | Concentration mol/L | Kind of solvent mixture | Mixing ratio (by volume) |
| Example K | $LiPF_6$ | 1.0 | 4TFMEC+DEC | 10:90 |
| Example L | $LiPF_6$ | 1.0 | 4TFMEC+DEC | 20:80 |
| Example M | $LiPF_6$ | 1.0 | 4TFMEC+DEC | 30:70 |
| Example N | $LiPF_6$ | 1.0 | 4TFMEC+DEC | 40:60 |
| Example O | $LiPF_6$ | 1.0 | 4TFMEC+DEC | 50:50 |
| Example P | $LiPF_6$ | 1.0 | 4TFMEC+DEC | 60:40 |
| Example Q | $LiPF_6$ | 1.0 | 4TFMEC+DEC | 70:30 |
| Example R | $LiPF_6$ | 1.0 | 4TFMEC+DEC | 80:20 |

In Table 59, 4TFMEC stands for 2-oxo-4-trifluoromethyl-1,3-dioxolane and DEC stands for diethyl carbonate.

Table 60 below shows the discharge capacity rates at the 10th. at which the charging and discharging reaction is stabilized and at the 50th cycle, respectively for the cells using the examples K to R.

TABLE 60

| | Discharge capacity rate at the 10th cycle (%) | Discharge capacity retention rate at the 50th cycle (%) |
|---|---|---|
| Example K | 33 | 43 |
| Example L | 54 | 59 |
| Example M | 86 | 75 |
| Example N | 98 | 79 |
| Example O | 100 | 79 |
| Example P | 80 | 80 |
| Example Q | 41 | 82 |
| Example R | 14 | 83 |

In Table 60, the respective discharge capacity retention rates are obtained by the following equation (4)

Discharge capacity rate at the 10th cycle (%) =

$$\frac{\text{Discharge capacity of test electrode using electrolyte of each example at the 10th cycle}}{\text{Discharge capacity of test electrode using electrolyte of example O at the 10th}} \text{cycle X 100} \qquad (4)$$

When the charge/discharge characteristics is evaluated in the case of varying the mixing ratio of 2-oxo-4-trifluoromethyl-1,3-dioxolane as the primary solvent and diethyl carbonate as the secondary solvent, it can be seen that with the increase of the volume rate of 2-oxo-4-trifluoromethyl-1,3-dioxolane, the discharge capacity retention rate at the 50th cycle tends to be increased and when 2-oxo-4-trifluoromethyl-1,3-dioxolane is 30% or more of the total volume of the whole solvents, there can be obtained such a high discharge capacity retention rate that largely exceeds 80%, and in addition, with the increase of the volume rate of 2-oxo-4-trifluoromethyl-1,3-dioxolane, the discharge capacity at the 10th cycle tends to be increased in the beginning, and thereafter it becomes the maximum when the volume rate of 2-oxo-4-trifluoromethyl-1,3-dioxolane is about 50%, and thereafter it tends to be decreased, and when the volume rate of 2-oxo-4-trifluoromethyl-1,3-dioxolane is in the range of 30% to 60% of total volume of the whole solvents for the electrolyte, there can be obtained such a high discharge capacity rate that is 80 % or more. From this results, it can be understood that when volume rate of 2-oxo-4-trifluoromethyl-1,3-dioxolane is 30% or more of the total volume of the whole solvents and the volume rate of the secondary solvent is 40% or more of the total volume thereof, there can be obtained especially large effect to suppress the deterioration of the characteristics of the active materials for the test electrode comprising lithium containing complex oxides having the $\alpha$-$NaCrO_2$ structure at the large depth of charging, and especially excellent battery characteristics and the high rate charge/discharge efficiency can be obtained.

EXAMPLE 33

Using the three-polar beaker type cells same as ones used in the foregoing EXAMPLE 30, the organic electrolytes of the examples S to Z and the examples a and b as shown in Table 61 below were poured therein.
Each of the cells was charged with a current density of 1.0 $mA/cm^2$ at a temperature of 25°C until the electric potential of the test electrode became 4.5 V to the reference electrode, and after standing for 10 minutes, it was discharged with the same current density until the electric potential thereof became 2.75 V to the reference electrode.

TABLE 61

| | Lithium salt | | Kind of solvent for electrolyte | |
|---|---|---|---|---|
| | Kind of lithium salt | Concentration mol/L | Kind of solvent mixture | Mixing ratio (by volume) |
| Example S | $LiPF_6$ | 1.0 | 4TFMEC+EC+DEC | 45:10:45 |
| Example T | $LiPF_6$ | 1.0 | 4TFMEC+EC+DEC | 40:20:40 |
| Example U | $LiPF_6$ | 1.0 | 4TFMEC+EC+DEC | 40:10:50 |
| Example V | $LiPF_6$ | 1.0 | 4TFMEC+EC+DEC | 30:20:50 |
| Example W | $LiPF_6$ | 1.0 | 4TFMEC+EC+DEC | 30:30:40 |
| Example X | $LiPF_6$ | 1.0 | 4TFMEC+DEC+EBC | 45:45:10 |
| Example Y | $LiPF_6$ | 1.0 | 4TFMEC+DEC+EBC | 40:40:20 |
| Example Z | $LiPF_6$ | 1.0 | 4TFMEC+DEC+EBC | 40:50:10 |
| Example a | $LiPF_6$ | 1.0 | 4TFMEC+DEC+EBC | 30:50:20 |
| Example b | $LiPF_6$ | 1.0 | 4TFMEC+DEC+EBC | 30:40:30 |

In Table 61 above, 4TFMEC stands for 2-oxo-4-trifluoromethyl-1,3-dioxolane , EC stands for ethylene carbonate and DEC stands for diethyl carbonate and EBC stands for ethyl butyl carbonate.
Table 62 below shows the discharge capacity retention rate at the 50th cycle for the examples S to Z and the examples a and b.

TABLE 62

| | Discharge capacity retention rate at the 50th cycle (%) |
|---|---|
| Example S | 75 |

TABLE 62 (continued)

| | Discharge capacity retention rate at the 50th cycle (%) |
|---|---|
| Example T | 73 |
| Example U | 77 |
| Example V | 72 |
| Example W | 69 |
| Example X | 74 |
| Example Y | 71 |
| Example Z | 74 |
| Example a | 72 |
| Example b | 64 |

As can be seen from the above Tables 61 and 62, when the solvent mixture of 2-oxo-4-trifluoromethyl-1,3-dioxolane used as the primary solvent and diethyl carbonate used as the secondary solvent is added with the low viscous additional secondary solvents, only if the total volume of the primary solvent and specified secondary solvent is 80% or more of the total volume of the whole solvents for an organic electrolyte, there can be obtained such a high value of the discharge capacity retention rate at the 50th cycle for the test electrode that largely exceeds 70 % without being influenced by the presence of the additional solvents added.

EXAMPLE 34

A negative electrode and a positive electrode are put opposite one to another through a separator and the resultant cell assembly is placed in a battery container, and the electrolytes of the examples B and D and the conventional examples B and C as shown in Table 63 below, were poured in the respective battery containers. Thus, 30 coin type batteries were produced for every kind of these electrolytes.

TABLE 63

| | Lithium salt | | Kind of solvent for electrolyte | |
|---|---|---|---|---|
| | Kind of lithium salt | Concentration mol/L | Kind of solvent mixture | Mixing ratio (by volume) |
| Example B | $LiPF_6$ | 1.0 | 4TFMC+DMC | 50:50 |
| Example D | $LiPF_6$ | 1.0 | 4TFMC+DMC | 50:50 |
| Conventional Example B | $LiPF_6$ | 1.0 | PC +DMC | 50:50 |
| Conventional Example C | $LiPF_6$ | 1.0 | PC +DEC | 50:50 |

The positive electrode, the negative electrode and the separator were used the same as those in the foregoing EXAMPLES 13.

Each of the batteries thus produced was charged with a current value of 0.2 CmA at a temperature of 25°C until the battery voltage became 4.5 V, and after standing for 10 minutes, it was discharged with the same current value until the battery voltage became 2.75 V, and each battery was measured by using the charge and discharge measuring apparatus for comparison of the discharge capacity rate at the 400 cycle.

Table 64 below shows the discharge capacity retention rates at 400th cycle for the batteries using the above-mentioned electrolytes. Each value obtained is the average of 30 batteries for each electrolyte.

TABLE 64

| | Discharge capacity rate at the 400th cycle (%) |
|---|---|
| Example B | 293 |

TABLE 64 (continued)

| | Discharge capacity rate at the 400th cycle (%) |
|---|---|
| Example D | 272 |
| Conventional Example B | 100 |
| Conventional Example C | 66 |

In Table 64 above, the discharge capacity rate is obtained by the following equation (5):

$$\text{Discharge capacity rate at the 400th cycle (\%)} = \frac{\text{Discharge capacity of test electrode using electrolyte of each example at the 400th cycle}}{\text{Discharge capacity of test electrode using electrolyte of example B at the 400th cycle}} \times 100 \quad (5)$$

Thus, it can be seen therefrom that the discharge capacity rate at the 400th cycle for the batteries using the electrolytes of the examples according to this invention are much larger than that of the batteries using the electrolytes of the conventional examples. The reason why the discharge capacity rate at the 400th cycle is improved as such is due to the fact that the electrolytes according to this invention bring about the effect of suppressing the deterioration of the characteristics of the positive active material comprising the lithium containing complex oxide having $\alpha$-$NaCrO_2$ structure at the large depth of charging as compared with the conventional electrolytes. Accordingly, it can be understood that, with the lithium secondary battery using the positive active material of this kind, the charge/discharge cycle characteristics is sufficiently superior even the charge/discharge cycles at the large or deep depth of charging as compared with the conventional batteries using the conventional electrolytes, so that larger discharge capacity can be taken out at each cycle, and consequently the lithium secondary battery has the larger energy density larger than that of the conventional batteries using the conventional electrolytes.

In the foregoing EXAMPLE 31, as for low viscous solvents, dimethyl carbonate, methyl ethyl carbonates, diethyl carbonate, methyl propyl carbonate, methyl butyl carbonate and dibutyl carbonate were used for example, but, this invention is not limited to these solvents, and any other kind of low viscous solvents as enumerated in the above can be used. Furthermore, a single of the low viscous solvent was mixed with 2-oxo-4-trifluoromethyl-1,3-dioxolane for example, but, two kinds or more of the low viscous solvents can be used for mixing.

In the foregoing EXAMPLE 32, diethyl carbonate was used for the specified secondary solvent for example, but the other specified secondary solvent such as dimethyl carbonate, methyl ethyl carbonate, methyl propyl carbonate, methyl propyl carbonate and methyl butyl carbonate can be used and similar effects can be obtained.

In this case, a single solvent was mixed with 2-oxo-4-trifluoromethyl -1,3-dioxolane for example, but two kind or more of the specified secondary solvents can also be mixed with 2-oxo-4 -trifluoromethyl-1,3-dioxolane to obtain the similar results.

In the foregoing EXAMPLE 33, diethyl carbonate was used as the specified secondary solvent for example, but, any other specified secondary solvent such as dimethyl carbonate, methyl ethyl carbonate, methyl propyl carbonate, methyl propyl carbonate and methyl butyl carbonate can be used to obtain similar results.

Furthermore, a single solvent was mixed with 2-oxo-4-trifluoromethyl -1,3-dioxolane for example, but, two kinds or more of the specified secondary solvent can also be mixed with 2-oxo-4-trifluoromethyl-1,3-dioxolane.

In addition, ethylene carbonate or ethyl butyl carbonate was used as the additional secondary solvent for example, but, one or more than two other low viscous solvent as listed above can be mixed with the mixture of the primary solvent and the specified secondary solvent.

In the forgoing EXAMPLE 34, dimethyl carbonate or diethyl carbonate were used as the specified secondary solvent for example, but, the other secondary solvent such as methyl ethyl carbonate, methyl propyl carbonate and methyl butyl carbonate can be used to obtain similar results.

Furthermore, the specified secondary solvent was singly mixed with 2-oxo-4-trifluoromethyl-1,3-dioxolane for example, but, two kinds or more of the specified secondary solvents can be mixed with 2-oxo-4-trifluoromethyl-1,3-dioxolane.

Furthermore, the solvent mixture of the primary solvent and the specified secondary solvent was used for example, but, at least one kind of the additional solvents with low viscosity as enumerated above can be added to the mixture.

Throughout the foregoing EXAMPLE 30 to 34, $LiCoO_2$ was used as an active material for a positive electrode, but, any other kind of lithium containing complex oxides having the $\alpha$-$NaCrO_2$ structure such as $LiNiO_2$, $LiMnO_2$, etc. can be used and similar effects can be obtained.

Furthermore $LiPF_6$ alone was used as a solute, but other inorganic lithium salts such as $LiClO_4$, $LiBF_4$, $LiAsF_6$, LiCl, LiBr, etc. or organic lithium salts such as $LiB(C_6H_5)_4$, $LiC(SO_2CF_3)_3$, $LiOSO_2CF_3$, etc. can be selectively used to obtain similar results. In this case, the mixture of two kinds or more of the above lithium salts or the mixture including or not including $LiPF_6$ can be used to obtain similar effects.

Thus, according to the above EMBODIMENT of this invention, when the organic electrolyte comprising lithium salt as a solute and 2-oxo-4-trifluoromethyl-1,3-dioxolane as a solvent is used as an electrolyte for a lithium secondary battery using as an active material for a positive electrolyte a lithium containing complex oxide having the $\alpha$-$NaCrO_2$ structure, it is more effective in suppressing the deterioration of the characteristics of the positive active material at the deep or large depth:of charging, and there can be provided a lithium secondary battery having a larger energy density, as compared with the conventional electrolytes and also with other kinds of fluorine substituted propylene carbonates.

In addition, when a solvent mixture of 2-oxo-4-trifluoromethyl-1,3-dioxolane as the primary solvent and at least one kind selected from the group of dimethyl carbonate, methyl ethyl carbonate, diethyl carbonate, methyl propyl carbonate and methyl butyl carbonate as a specified secondary solvent for decreasing the viscosity of the primary solvent is used as the electrolyte, there can be provided a lithium secondary battery which has the effect of improving especially the high rate charge/discharge characteristics, in addition to the above-mentioned excellent suppressing effect.

In the case of using the solvent mixture of the primary solvent and the specified secondary solvent , if the mixture ratio thereof is so defined as mentioned above, there can be provided a lithium secondary battery which has the above-mentioned two effects, at a high level, and thus this invention is high in utility value in its industrial application.

## Claims

1. A lithium secondary battery comprising a negative electrode made of at least one kind of active materials selected from a group of metallic lithium, lithium alloys and a carbon material capable of electro-chemically occluding and releasing lithium ions, a positive electrode made of at least one kind of materials capable of electro-chemically occluding and releasing lithium ions and an organic electrolyte, wherein the organic electrolyte prepared by dissolving a solute consisting of at least one kind of lithium salts in a solvent contains at least one kind of fluorine substituted propylene carbonates as a primary solvent and at least one kind of low viscous solvents capable of lowering the viscosity of fluorine substituted propylene carbonates, as a secondary solvent, wherein the volume of the primary solvent is 35-55% of the total volume of the whole solvents and the secondary solvent is 45-65 % of the total volume thereof.

2. A lithium secondary battery comprising a negative electrode made of at least one kind of active materials selected from a group of metallic lithium alloys and a carbon material capable of electro-chemically occluding and releasing lithium ions, a positive electrode made of at least one kind of materials capable of electro-chemically occluding and releasing lithium ions and an organic electrolyte, wherein the organic electrolyte prepared by dissolving a solute consisting of at least one kind of lithium salts in a solvent mixture of a primary solvent comprising at least one kind of cyclic esters and a secondary solvent comprising at least one kind of chain esters, and the primary solvent contains at least one kind of fluorine substituted propylene carbonates and the secondary solvent contains at least dimethyl carbonate, wherein the volume of the primary solvent is 35-55% of the total volume of the whole solvents for the organic electrolyte and the secondary solvent is 45 to 65% of the total volume thereof and the volume of at least one kind of the fluorine substituted propylene carbonates is 35 to 55 % of the total volume thereof and the volume of dimethyl carbonate as the secondary solvent is 40 to 100% of the total volume of the secondary solvents.

3. A lithium secondary battery according to claim 2 wherein the secondary solvent contains at least a solvent mixture of dimethyl carbonate and at least one kind selected from a group of diethyl carbonate and methyl ethyl carbonate, and wherein the volume of the dimethyl carbonate is 40-80% of the total volume of the secondary solvents and the volume of at least one kind selected from the group of diethyl carbonate and methyl ethyl carbonate is 20 to 60% of the total volume of the secondary solvents.

4. A lithium secondary battery according to claim 1, wherein the organic electrolyte comprises at least one kind of fluorine substituted propylene carbonates used as the primary solvent and at least one kind selected from a group of dimethyl carbonate, methyl ethyl carbonate, diethyl carbonate, methyl propyl carbonate and methyl butyl carbonate used as the secondary solvent.

5. A lithium secondary battery according to any one of claims 3 and 4, wherein the volume of the primary solvent is

30% or more of the total volume of the whole solvents for the organic electrolyte, the volume of the secondary solvent is 40% or more of the total volume of the whole solvents, and the total volume of the solvent mixture of the primary and secondary solvents is 80% or more of the total volume of the whole solvents.

**6.** A lithium secondary battery according to claim 1 comprising a negative electrode using as an active material at least one kind of the materials selected from a group of metallic lithium, lithium alloys and a carbon material capable of occluding and releasing lithium ions, a positive electrode using as an active material at least one kind of lithium containing complex oxides having an $\alpha$-$NaCrO_2$ structure, and an organic electrolyte, wherein the organic electrolyte comprises a solvent mixture of at least one kind of low viscous solvents capable of lowering the viscosity of fluorine substituted propylene carbonates and used as a secondary solvent.

**7.** A lithium secondary battery according to claim 6, wherein the solvent mixture contains a solvent mixture of at least one kind of fluorine substituted propylene carbonates as the primary solvent and at least one kind selected from a group of dimethyl carbonate, methyl ethyl carbonate, diethyl carbonate, methyl propyl carbonate and methyl butyl carbonate used as a specified secondary solvent.

**8.** A lithium secondary battery according to any one of claims 6 and 7, wherein the volume of the primary solvent is 30% or more of the total volume of the whole solvents for the organic electrolyte, and the secondary solvent is 40% or more of the total volume of the whole solvents and the volume of the solvent mixture of the primary and secondary solvents is 80% or more of the total volume of the whole solvents.

**9.** A secondary lithium battery according to any of the claims 1 to 8, wherein one kind of fluorine substituted propylene carbonates is 2-oxo-4-trifluoromethyl-1,3-dioxolane.

**Patentansprüche**

**1.** Lithiumsekundärbatterie, umfassend eine negative Elektrode, bestehend aus mindestens einem aktiven Material, ausgewählt aus der Gruppe aus metallischem Lithium, Lithiumlegierungen und einem Kohlenstoffmaterial, welches Lithium-Ionen elektrochemisch einschließen und freisetzen kann, eine positive Elektrode, bestehend aus mindestens einem Material, das Lithium-Ionen elektrochemisch einschließen und freisetzen kann, und einem organischen Elektrolyten, wobei der organische Elektrolyt, der durch Lösen einer Beimengung, bestehend aus mindestens einem Lithiumsalz, in einem Lösungsmittel hergestellt wird, mindestens ein Fluor-substituiertes Propylencarbonat als primäres Lösungsmittel und mindestens ein niederviskoses Lösungsmittel, welches fähig ist, die Viskosität von Fluor-substituierten Propylencarbonaten zu verringern, als zweites Lösungsmittel enthält, wobei das Volumen des primären Lösungsmittels 35-55 % des Gesamtvolumens aller Lösungsmittel und das sekundäre Lösungsmittel 45-65 % des Gesamtvolumens davon ausmacht.

**2.** Lithiumsekundärbatterie, umfassend eine negative Elektrode, bestehend aus mindestens einem aktiven Material, ausgewählt aus der Gruppe aus Lithiumlegierungen und einem Kohlenstoffmaterial, welches Lithium-Ionen elektrochemisch einschließen und freisetzen kann, eine positive Elektrode, bestehend aus mindestens einem Material, das Lithium-Ionen elektrochemisch einschließen und freisetzen kann, und einen organischen Elektrolyten, wobei der organische Elektrolyt, der durch Lösen einer Beimengung, bestehend aus mindestens einem Lithiumsalz, in einem Lösungsmittelgemisch aus einem primären Lösungsmittel, umfassend mindestens einen cyclischen Ester, und einem sekundären Lösungsmittel, umfassend mindestens einen kettenförmigen Ester, hergestellt wird, und das primäre Lösungsmittel mindestens ein Fluor-substituiertes Propylencarbonat und das sekundäre Lösungsmittel mindestens Dimethylcarbonat enthält, wobei das Volumen des primären Lösungsmittels 35 bis 55 % des Gesamtvolumens aller Lösungsmittel für den organischen Elektrolyten und das sekundäre Lösungsmittel 45 bis 65 % des Gesamtvolumens davon und das Volumen mindestens eines Fluor-substituierten Propylencarbonats 35 bis 55 % des Gesamtvolumens davon und das Volumen des Dimethylcarbonats als sekundäres Lösungsmittel 40 bis 100 % des Gesamtvolumens der sekundären Lösungsmittel ausmacht.

**3.** Lithiumsekundärbatterie nach Anspruch 2, wobei das sekundäre Lösungsmittel mindestens ein Lösungsmittelgemisch aus Dimethylcarbonat und mindestens eines aus der Gruppe aus Diethylcarbonat und Methylethylcarbonat ausgewählten Vertreters enthält und das Volumen des Dimethylcarbonats 40-80 % des Gesamtvolumens des sekundären Lösungsmittels und das Volumen mindestens eines aus der Gruppe aus Diethylcarbonat und Methylethylcarbonat ausgewählten Vertreters 20 bis 60 % des Gesamtvolumens des sekundären Lösungsmittels ausmacht.

4. Lithiumsekundärbatterie nach Anspruch 1, wobei der organische Elektrolyt mindestens ein Fluor-substituiertes Propylencarbonat als primäres Lösungsmittel und mindestens einen aus der Gruppe aus Dimethylcarbonat, Methylethylcarbonat, Diethylcarbonat, Methylpropylcarbonat und Methylbutylcarbonat ausgewählten Vertreter als sekundäres Lösungsmittel enthält.

5. Lithiumsekundärbatterie nach einem der Ansprüche 3 und 4, wobei das Volumen des primären Lösungsmittels 30 % oder mehr des Gesamtvolumens aller Lösungsmittel für den organischen Elektrolyten, das Volumen des sekundären Lösungsmittels 40 % oder mehr des Gesamtvolumens aller Lösungsmittel und das Gesamtvolumen des Lösungsmittelgemischs aus primären und sekundären Lösungsmitteln 80 % oder mehr des Gesamtvolumens aller Lösungsmittel ausmacht.

6. Lithiumsekundärbatterie nach Anspruch 1, umfassend eine negative Elektrode, die als aktives Material mindestens ein Material, ausgewählt aus der Gruppe aus metallischem Lithium, Lithiumlegierungen und einem Kohlenstoffmaterial, welches Lithium-Ionen elektrochemisch einschließen und freisetzen kann, besitzt, eine positive Elektrode, die als aktives Material mindestens einen Lithium-haltigen Oxidkomplex mit einer (-NaCrO2-Struktur besitzt, und einen organischen Elektrolyten, wobei der organische Elektrolyt ein Lösungsmittelgemisch aus mindestens einem niederviskosen Lösungsmittel, welches fähig ist, die Viskosität von Fluor-substituierten Propylencarbonaten zu verringern, als sekundäres Lösungsmittel besitzt.

7. Lithiumsekundärbatterie nach Anspruch 6, wobei das Lösungsmittelgemisch ein Lösungsmittelgemisch aus mindestens einem Fluor-substituiertem Propylencarbonat als primäres Lösungsmittel und mindestens-einen Vertreter, ausgewählt aus der Gruppe aus Dimethylcarbonat, Methylethylcarbonat, Diethylcarbonat, Methylpropylcarbonat und Methylbutylcarbonat als spezifisches sekundäres Lösungsmittel enthält.

8. Lithiumsekundärbatterie nach einem der Ansprüche 6 und 7, wobei das Volumen des primären Lösungsmittels 30 % oder mehr des Gesamtvolumens aller Lösungsmittel für den organischen Elektrolyten, das sekundäre Lösungsmittel 40 % oder mehr des Gesamtvolumens aller Lösungsmittel und das Volumen des Lösungsmittelgemischs aus primären und sekundären Lösungsmitteln 80 % oder mehr des Gesamtvolumens aller Lösungsmittel ausmacht.

9. Lithiumsekundärbatterie nach einem der Ansprüche 1 bis 8, wobei das Fluorsubstituierte Propylencarbonat 2-Oxo-4-trifluormethyl-1,3-dioxolan ist.

## Revendications

1. Pile secondaire au lithium, comportant :

- une électrode négative, faite en au moins une matière active choisie dans l'ensemble formé par le lithium métallique, les alliages de lithium et un matériau carboné capable de retenir et de relâcher des ions de lithium par voie électrochimique,
- une électrode positive, faite en au moins un matériau capable de retenir et de relâcher des ions de lithium par voie électrochimique,
- et un électrolyte organique, lequel est préparé par dissolution, dans un solvant, d'un soluté constitué d'au moins un sel de lithium, et contient, comme solvant primaire, au moins un dérivé fluorosubstitué du carbonate de propylène, et comme solvant secondaire, au moins un solvant peu visqueux, capable de faire baisser la viscosité du dérivé fluorosubstitué du carbonate de propylène, le solvant primaire et le solvant secondaire constituant respectivement de 35 à 55 % et de 45 à 65 % du volume total de solvants.

2. Pile secondaire au lithium, comportant :

- une électrode négative, faite en au moins une matière active choisie dans l'ensemble formé par les alliages de lithium et un matériau carboné capable de retenir et de relâcher des ions de lithium par voie électrochimique,
- une électrode positive, faite en au moins un matériau capable de retenir et de relâcher des ions de lithium par voie électrochimique,
- et un électrolyte organique, lequel est préparé par dissolution d'un soluté, constitué d'au moins un sel de lithium, dans un mélange d'un solvant primaire comprenant au moins un ester cyclique et d'un solvant secondaire comprenant au moins un ester non-cyclique, ledit solvant primaire contenant au moins un dérivé fluorosubstitué du carbonate de propylène et ledit solvant secondaire contenant au moins du carbonate de diméthyle, le solvant primaire et le solvant secondaire constituant respectivement de 35 à 55 % et de 45 à 65 % du volume total de l'ensemble des solvants formant l'électrolyte organique, le ou les dérivés fluorosubstitués du carbonate de propylène constituant de 35 à 55 % du volume total de l'ensemble des solvants, et le carbonate de diméthyle constituant de 40 à 100 % du volume total du solvant secondaire.

**3.** Pile secondaire au lithium, conforme à la revendication 2, dans laquelle le solvant secondaire comprend au moins un mélange de carbonate de diméthyle et d'au moins l'un du carbonate de diéthyle et du carbonate de méthyle et d'éthyle, le carbonate de diméthyle constituant de 40 à 80 % du volume total du solvant secondaire, et le carbonate de diéthyle et/ou le carbonate de méthyle et d'éthyle constituant de 20 à 60 % du volume total du solvant secondaire.

**4.** Pile secondaire au lithium, conforme à la revendication 1, dans laquelle l'électrolyte organique contient, en tant que solvant primaire, au moins un dérivé fluorosubstitué du carbonate de propylène, et en tant que solvant secondaire, au moins un solvant choisi dans l'ensemble formé par les carbonate de diméthyle, carbonate de méthyle et d'éthyle, carbonate de diéthyle, carbonate de méthyle et de propyle, et carbonate de méthyle et de butyle.

**5.** Pile secondaire au lithium, conforme à l'une des revendications 3 et 4, dans laquelle le solvant primaire constitue 30 % ou plus du volume total de l'ensemble des solvants formant l'électrolyte organique, le solvant secondaire constitue 40 % ou plus du volume total de l'ensemble des solvants, et le mélange des solvants primaire et secondaire constitue 80 % ou plus du volume total de l'ensemble des solvants.

**6.** Pile secondaire au lithium, conforme à la revendication 1, comportant :

- une électrode négative, dont la matière active est constituée d'au moins une matière choisie dans l'ensemble formé par le lithium métallique, les alliages de lithium et un matériau carboné capable de retenir et de relâcher des ions de lithium,
- une électrode positive, dont la matière active est constituée d'au moins un oxyde complexe contenant du lithium et présentant une structure de type $\alpha$-$NaCrO_2$,
- et un électrolyte organique, lequel comprend un mélange de solvants contenant, comme solvant secondaire, au moins un solvant peu visqueux, capable de faire baisser la viscosité des dérivés fluorosubstitués du carbonate de propylène.

**7.** Pile secondaire au lithium, conforme à la revendication 6, dans laquelle le mélange de solvants contient, en tant que solvant primaire, au moins un dérivé fluorosubstitué du carbonate de propylène, et en tant que solvant secondaire, au moins un solvant choisi dans l'ensemble formé par les carbonate de diméthyle, carbonate de méthyle et d'éthyle, carbonate de diéthyle, carbonate de méthyle et de propyle, et carbonate de méthyle et de butyle.

**8.** Pile secondaire au lithium, conforme à l'une des revendications 6 et 7, dans laquelle le solvant primaire constitue 30 % ou plus du volume total de l'ensemble des solvants formant l'électrolyte organique, le solvant secondaire constitue 40 % ou plus du volume total de l'ensemble des solvants, et le mélange des solvants primaire et secondaire constitue 80 % ou plus du volume total de l'ensemble des solvants.

**9.** Pile secondaire au lithium, conforme à l'une des revendications 1 à 8, dans laquelle l'un des dérivés fluorosubstitués du carbonate de propylène est du 2-oxo-4-trifluorométhyl-1,3-dioxolane.

FIG.1

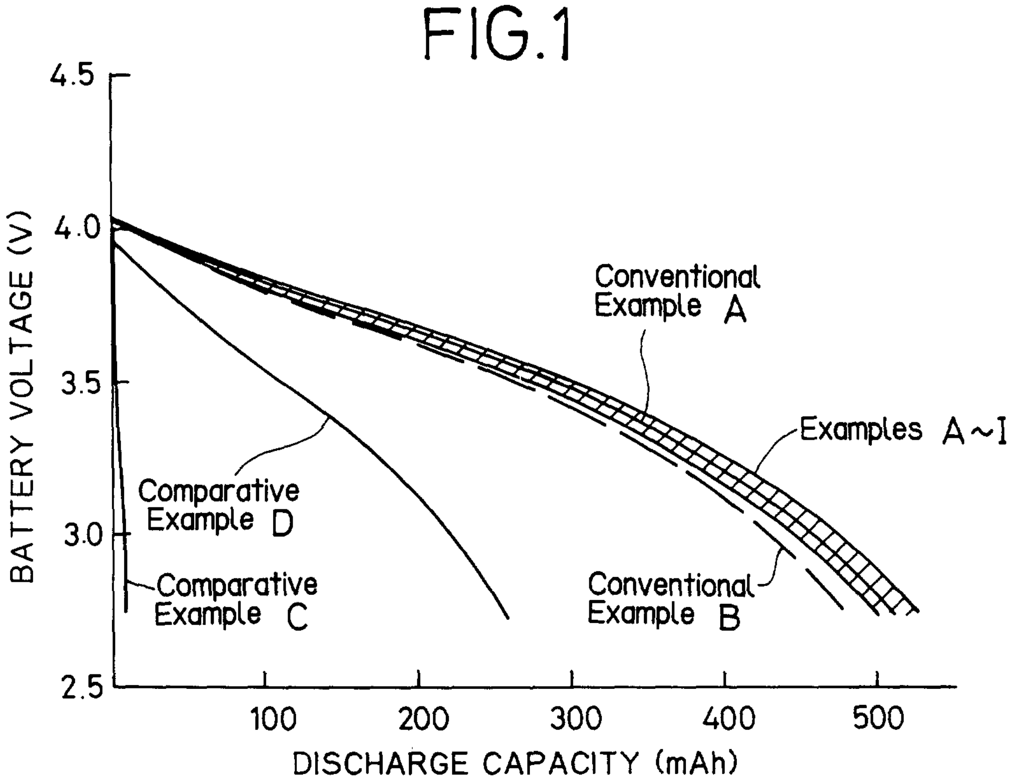
4.5
4.0
3.5
3.0
2.5
BATTERY VOLTAGE (V)
Conventional Example A
Examples A~I
Comparative Example D
Comparative Example C
Conventional Example B
100
200
300
400
500
DISCHARGE CAPACITY (mAh)

FIG. 2

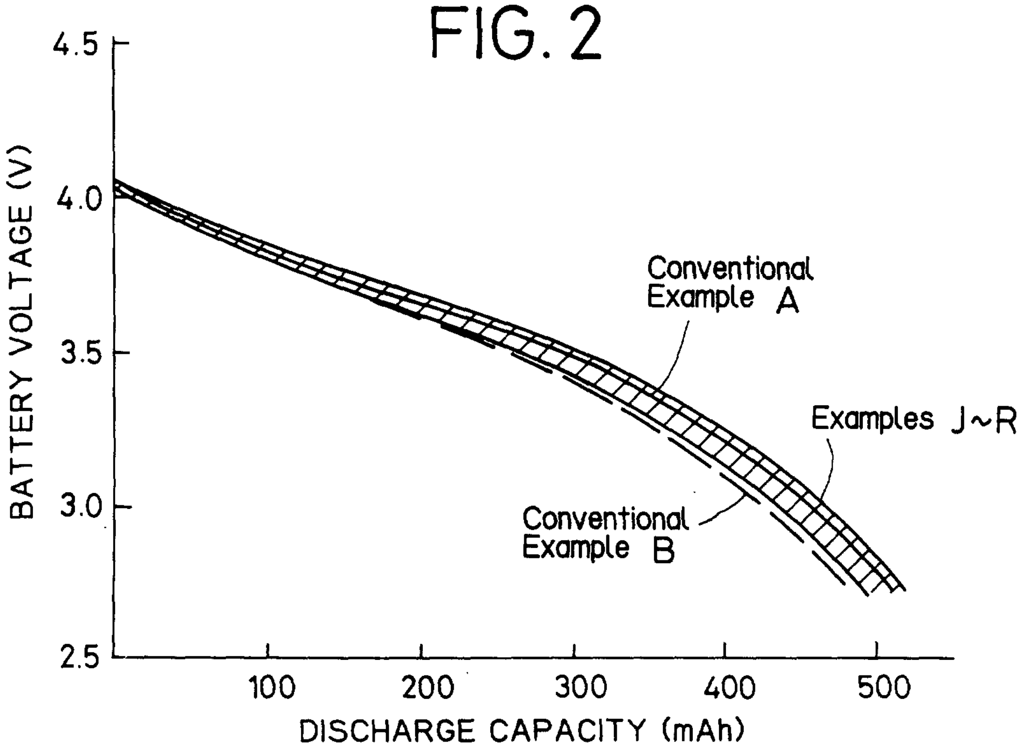
4.5
4.0
3.5
3.0
2.5
BATTERY VOLTAGE (V)
Conventional Example A
Examples J~R
Conventional Example B
100
200
300
400
500
DISCHARGE CAPACITY (mAh)

FIG.3

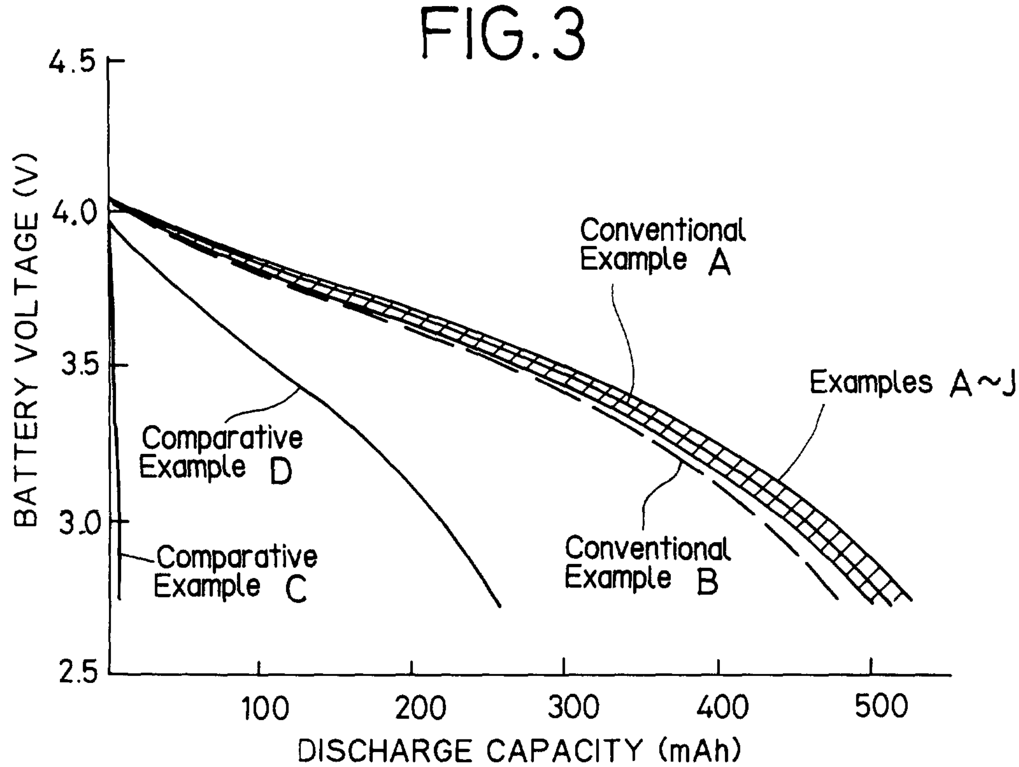
4.5
4.0
3.5
3.0
2.5
BATTERY VOLTAGE (V)
Conventional
Example A
Examples A~J
Comparative
Example D
Comparative
Example C
Conventional
Example B
100
200
300
400
500
DISCHARGE CAPACITY (mAh)

FIG.4

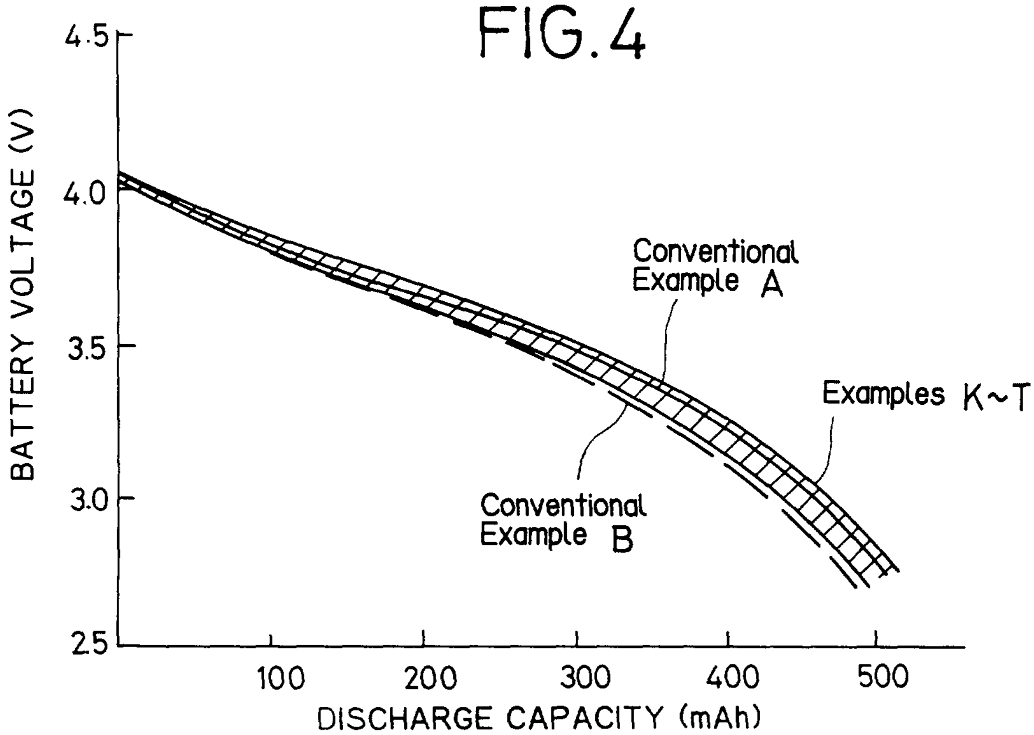
4.5
4.0
3.5
3.0
2.5
BATTERY VOLTAGE (V)
Conventional
Example A
Examples K~T
Conventional
Example B
100
200
300
400
500
DISCHARGE CAPACITY (mAh)

FIG.5

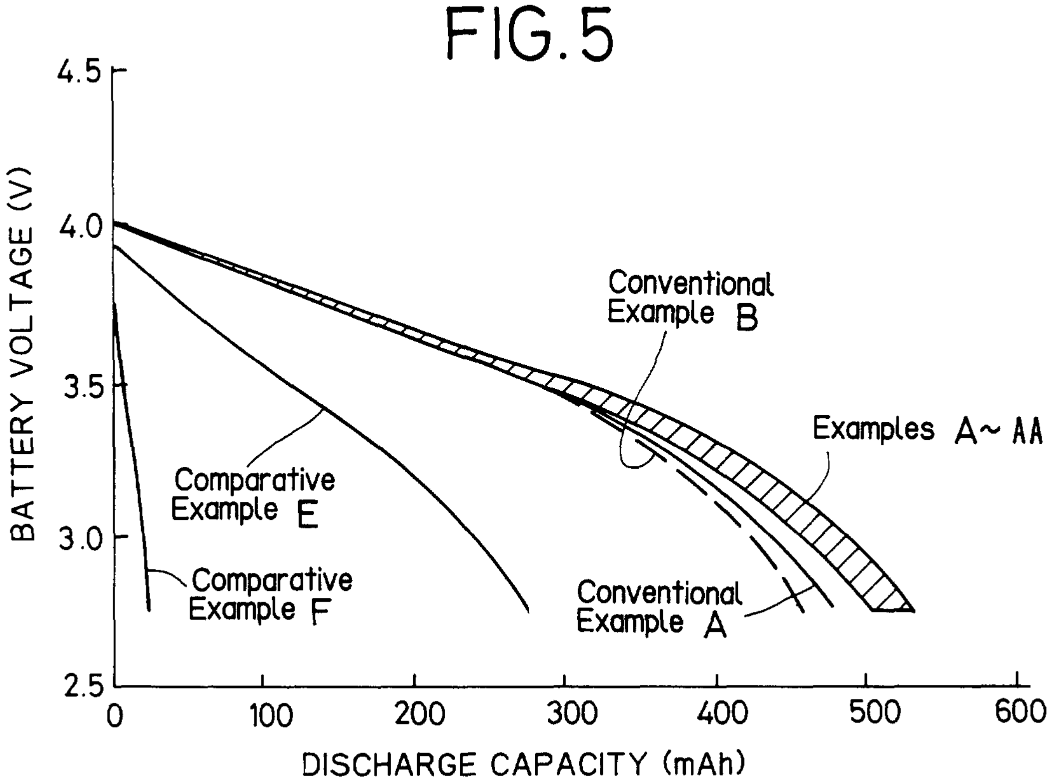
4.5
4.0
3.5
3.0
2.5
BATTERY VOLTAGE (V)
0
100
200
300
400
500
600
DISCHARGE CAPACITY (mAh)
Conventional Example B
Examples A~AA
Comparative Example E
Comparative Example F
Conventional Example A

FIG.6

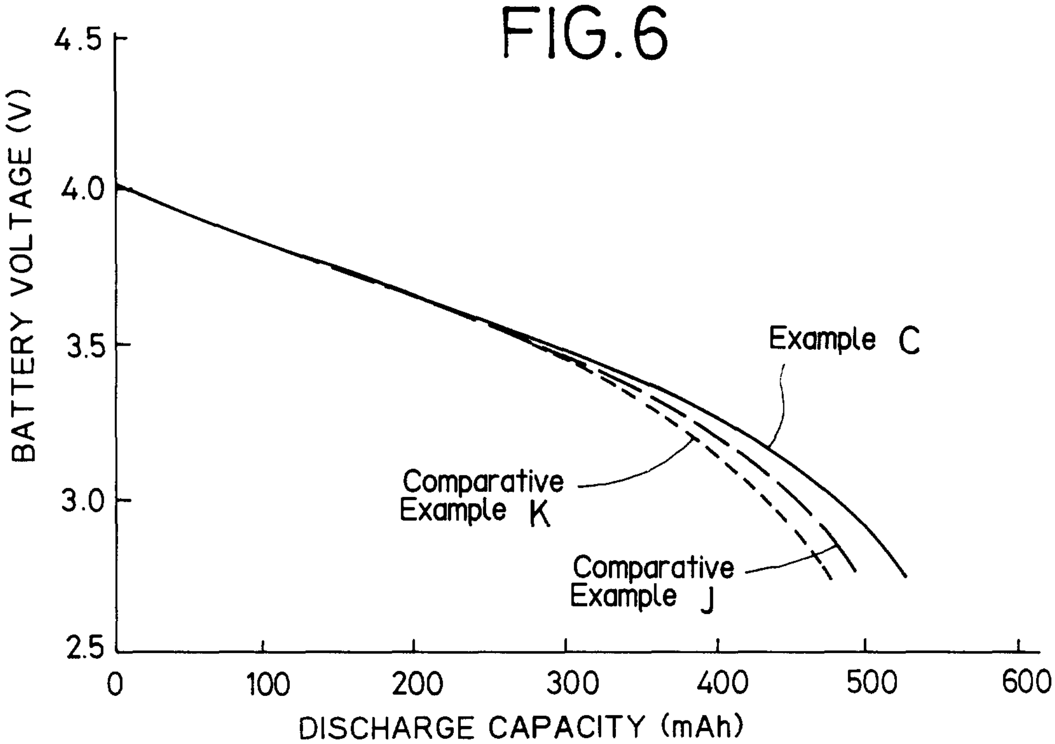
4.5
4.0
3.5
3.0
2.5
BATTERY VOLTAGE (V)
0
100
200
300
400
500
600
DISCHARGE CAPACITY (mAh)
Example C
Comparative Example K
Comparative Example J

FIG.7

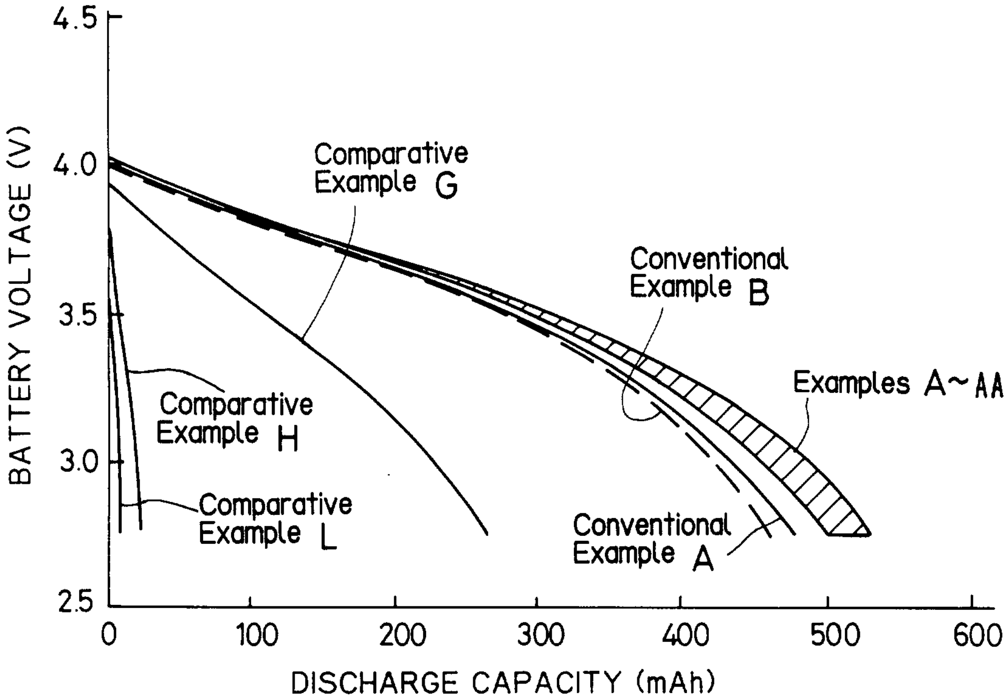
4.5
4.0
3.5
3.0
2.5
BATTERY VOLTAGE (V)
0
100
200
300
400
500
600
DISCHARGE CAPACITY (mAh)
Comparative Example G
Conventional Example B
Examples A~AA
Comparative Example H
Comparative Example L
Conventional Example A

FIG.8

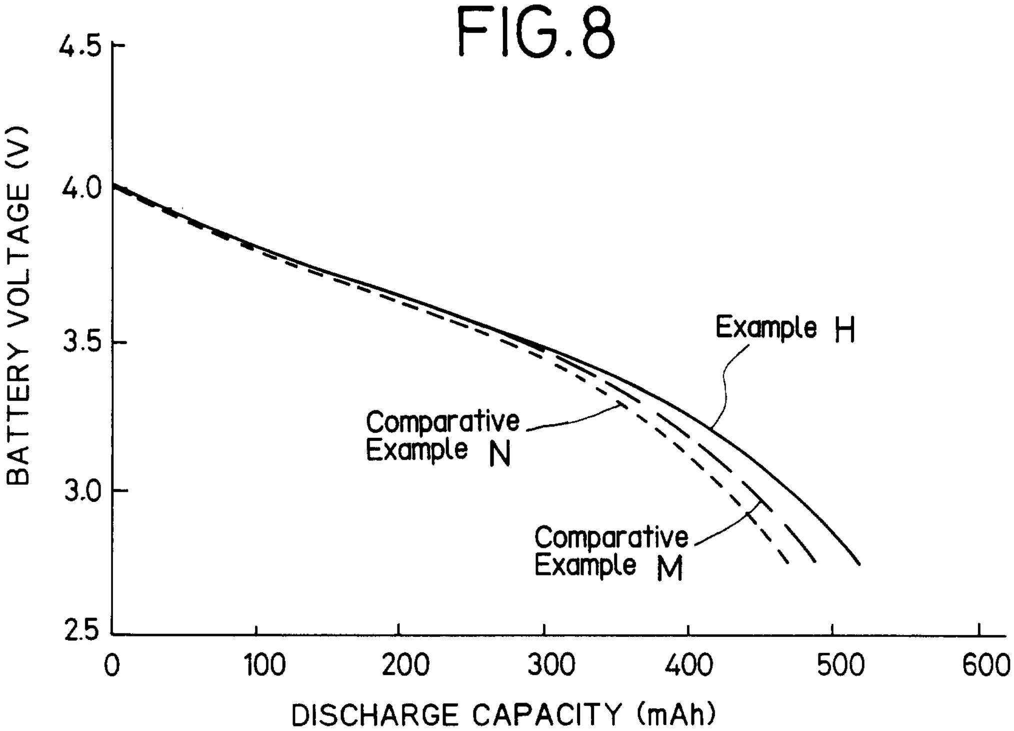
4.5
4.0
3.5
3.0
2.5
BATTERY VOLTAGE (V)
0
100
200
300
400
500
600
DISCHARGE CAPACITY (mAh)
Example H
Comparative Example N
Comparative Example M